(19) Europäisches Patentamt / European Patent Office / Office européen des brevets

(11) **EP 2 335 032 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **09783143.2**

(22) Anmeldetag: **18.09.2009**

(51) Int Cl.:
*G01F 1/84* (2006.01)   *G01F 1/74* (2006.01)

(86) Internationale Anmeldenummer:
**PCT/EP2009/062084**

(87) Internationale Veröffentlichungsnummer:
**WO 2010/040626 (15.04.2010 Gazette 2010/15)**

(54) **IN-LINE-MESSGERÄT**

IN-LINE MEASURING DEVICE

APPAREIL DE MESURE EN LIGNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.10.2008 DE 102008050113**

(43) Veröffentlichungstag der Anmeldung:
**22.06.2011 Patentblatt 2011/25**

(73) Patentinhaber: **Endress+Hauser Flowtec AG
4153 Reinach (CH)**

(72) Erfinder:
 • **KUTTLER, Daniel
  79539 Lörrach (DE)**
 • **RIEDER, Alfred
  84032 Landshut (DE)**
 • **HUBER, Christof
  CH-3012 Bern (CH)**
 • **ZHU, Hao
  D-85354 Freising (DE)**

(74) Vertreter: **Andres, Angelika Maria et al
Endress+Hauser (Deutschland) AG+Co. KG
PatServe
Colmarer Strasse 6
79576 Weil am Rhein (DE)**

(56) Entgegenhaltungen:
**EP-A1- 1 724 558    US-A- 4 622 858
US-A- 5 027 662    US-B1- 6 327 914**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein, insb. als Coriolis-Massedurchfluß-/ Dichtemeßgerät ausgebildetes, In-Line-Meßgerät mit einem Meßaufnehmer vom Vibrationstyp für ein in einer Rohrleitung strömendes, insb. zwei- oder mehrphasiges, Medium.

In der industriellen Meß- und Automatisierungstechnik werden im Zusammenhang mit der Steuerung von automatisierten Abfüllprozessen fließfähiger Medien, wie etwa Pulver, Granulate, Flüssigkeiten oder Pasten, als Linienabfüller oder als Rotationsfüller ausgebildete Abfüllmaschinen eingesetzt, wie sie beispielsweise in der CA-A 20 23 652, der DE-A 10 2006 031969, der EP-A 893 396, der EP-A 405 402, der US-B 71 14 535, der US-B 64 74 368, der US-A 60 26 867, der US-A 59 75 159, der US-A 58 65 225, der US-A 55 95 221, der US-A 45 88 001, US-A 45 32 968, US-A 45 22 238, US-A 40 53 003, US-A 38 26293, der US-A 35 19 108, der US-A 2006/0146689, der US-A 2003/0037514, der WO-A 08/034710, der WO07/048742, oder der WO-A 04/049641 vorgestellt sind. Bei derartigen Abfüllmaschinen werden die mit einer Charge des jeweiligen Mediums, wie etwa einem pastösen oder teigigen Lebensmittel, einem Lösungsmittel, einem Lack oder einer Farbe, einem Reinigungsmittel, einem Getränk, einem Arzneimittel oder dergleichen, zu füllenden Behälter, beispielsweise Flaschen, Ampullen, Becher, Gläser, Dosen oder dergleichen, nach einander über ein entsprechendes Zuführungssystem zur jeweiligen Abfüllmaschine befördert. Der eigentliche Abfüllvorgang erfolgt während eines Zeitraums in dem sich der jeweilige Behälter innerhalb einer auf der Abfüllmaschine installierten Abfüllstelle unterhalb einer das Medium abgebenden Füllspitze befindet. Nach der Befüllung mit einer möglichst hochpräzise abdosierten Charge des Mediums verlassen die Behälter die Abfüllmaschine und werden automatisch weiterbefördert. Typische Durchsatzraten von solchen Abfüllmaschinen können durchaus in der Größenordnung von 20000 Behältern pro Stunde liegen.

Zum präzisen Ermitteln des tatsächlich jeweils abdosierten Volumens an Medium werden in Abfüllmaschinen oftmals In-Line-Meßgeräte eingesetzt, die die während des entsprechenden Abfüllvorganges abzudosierende Charge mittels direkt gemessener und intern totalisierter Durchflußraten des Mediums, das dafür durch einen der physikalisch-elektrischen Wandlung der zu erfassenden Meßgröße dienenden Meßaufnehmer des Meßgeräts hindurchströmen gelassen ist, hochgenau ermitteln und inform eines, insb. entsprechend den Anforderungen des jeweiligen Abfüllprozesses formatierten, primären Meßwerts des Meßgeräts, insb. in Echtzeit, ausgeben, beispielsweise an eine übergeordnete speicherprogrammierbare Steuerung (SPS), um so eine entsprechend genaue, gleichsam auch schnelle und robuste Regelung des, zumeist im Batch-Betrieb gefahrenen, Abfüllprozesses zu ermöglichen. Der Meßaufnehmer ist dafür über ein- bzw. auslaßseitige, zumeist standardisierte Anschlußelemente, beispielsweise Schraubverschlüsse oder Flansche, an ein zu messendes Medium zu- bzw. ein gemessenes Medium abführendes Leitungssegment eines im Betrieb das Medium führenden Rohrleitungssystems der Abfüllanlage entsprechend angeschlossen. Falls erforderlich dienen neben den üblicherweise starr ausgebildeten Leitungssegmenten ferner zusätzliche Haltevorrichtungen der Fixierung des Meßgeräts innerhalb der Abfüllmaschine.

Der eigentliche Abfüllvorgang und damit einhergehend der eigentliche Meßzyklus, in dem zu messendes Medium durch den Meßaufnehmer hindurchströmt ist bei im Batch-Betrieb gefahrenen Abfüllprozessen von wenigen Sekunden bis hin zu weit weniger als eine Sekunde anzusetzen. Dem mit einer Abfülldauer einer Charge jeweils korrespondierenden Meßzyklus vorangehend und dementsprechend auch nachfolgend ist der Meßaufnehmer jeweils in eine Bereitschaftsphase versetzt, während der kein Medium durch den Meßaufnehmer strömt bzw. kein Medium abdosiert wird.

Wegen ihrer sehr hohen Meßgenauigkeit auch bei vergleichsweise stark schwankenden Durchflußraten, insb. auch in diskontinuierlich und/oder im Batch-Betrieb gefahrenen Abfüllprozessen, wie auch einer vergleichsweise guten Reproduzierbarkeit der unter solchen Bedingungen trotzdem sehr zeitnah gelieferten Meßwerte werden, wie beispielsweise auch im Durchfluß-Handbuch, 4. Auflage 2003, ISBN 3-9520220-3-9 im Abschnitt "Abfüll- und Dosieranwendungen", Seite 213 ff., der US-B 73 02 356, der US-A 59 75 747, der WO-A 00/057325 oder der WO-A 08/034710 ausgeführt, im besonderen als Coriolis-Massendurchfluß-Meßgeräte ausgebildete In-Line-Meßgeräte eingesetzt, die mittels eines Meßaufnehmers vom Vibrationstyp und einer daran angeschlossenen, zumeist in einem separaten Elektronik-Gehäuse untergebrachten, Meßgerät-Elektronik, im strömenden Medium Reaktionskräfte, beispielsweise Corioliskräfte, Beschleunigungskräfte, Reibungskräfte oder dergleichen, induzieren und von diesen abgeleitet wenigstens ein die wenigstens eine Meßgröße, beispielsweise einem Massedurchfluß, einer Dichte, einer Viskosität oder einem anderen Prozeßparameter, entsprechend repräsentierendes Meßsignal erzeugen. Aufbau und Wirkungsweise von Durchflußraten messenden In-Line-Meßgeräte der in Rede stehenden Art mit einem Meßaufnehmer vom Vibrationstyp sind dem Fachmann im übrigen hinlänglich bekannt. Beispiele für solche, insb. auch Coriolis-Massendurchfluß-Meßgeräte ausgebildete, In-Line-Meßgeräte mit einem Meßaufnehmer vom Vibrationstyp oder aber auch einzelner Komponenten davon, wie etwa dem Meßaufnehmer, wie auch zu deren besonderen Verwendung sind außer im bereits erwähnten Stand der Technik u.a. in der WO-A 99/40 394, der WO-A 99/39164, der WO-A 98/07009, der WO-A 95/16897, der WO-A 88/03261, der WO-A 08/059015, der WO-A 08/013545, der WO-A 08/011587, der WO-A 07/005024, der WO-A 06/127527, der WO-A 06/104690, der WO-A 06/062856, der WO-A 05/093381, der WO-A 05/031285, der WO-A 05/003690, der WO-A 03/095950, der WO-A 03/095949, der WO-A 02/37063, der WO-A 01/33174, der WO-A 01/02 816, der WO-A 00/57141, der WO-A 00/14 485, der US-B 73 92 709, der US-B 73 60 451, der US-B 73 43 253, der US-B 73 40 964, der US-B 72 99 699, der US-B 72 96 484, der US-B 72 13 470, der US-B 72 13 469, der US-B 71 81 982, der US-B 70 80 564, der US-B 70 77 014, der US-B 70 73 396, der US-B 70 40180, der US-B 70 40 181, der US-B 70 40 179, der US-B 70 17 424, der US-B 69 20 798, der US-B 69 10 366, der US-B 68 95 826, der US-B 68 83 387, der US-B 68 80 410, der US-B 68 60 158, der US-B 68 40 109, der US-B 68 10 719, der US-B 68 05 012, der US-B 67 58 102, der US-B 67 05 172, der US-B 66 91 583, der US-B 66 66 098, der US-B 66 51 513, der US-B 65 64 619, der US-B 65 57 422, der US-B 65 19 828, der US-B 65 16 674, der US-B 65 13 393, der US-B 65 05 519, der US-B 64 71 487, der US-B 63 97 685, der US-B 63 30 832, der US-B 63 18 156, der US-B 63 11 136, der US-B 62 23 605, der US-B 61 68 069, der US-A 73 37 676, der US-A 60 92 429, der US-A 60 73 495, der US-A 60 47 457, der US-A 60 41 665, der US-A 60 06 609, der US-A 59 79 246, der US-A 59 45 609, der US-A 59 26 096, der US-A 58 69 770, der US-A 58 61 561, der US-A 57 96 012, der US-A 57 96 011, der US-A 57 96 010, der US-A 57 31 527, der US-A 56 91 485, der US-A 56 48 616, der US-A 56 16 868, der US-A 56 10 342, der US-A 56 02 346, der US-A 56 02 345, der US-A 55 31 126, der US-A 54 76 013, der US-A 54 29 002, der US-A 53 98 554, der US-A 53 59 881, der US-A 53 01 557, der US-A 52 91 792, der US-A 52 87 754, der US-A 52 53 533, der US-A 52 18 873, der US-A 50 95 761, der US-A 50 69 074, der US-A 50 50 439, der US-A 50 44 207, der US-A 50 27 662, der US-A 50 09 109, der US-A 49 62 671, der US-A 49 57 005, der US-A 49 11 006, der US-A 48 95 031, der US-A 48 76 898, der US-A 48 52 410, der US-A 48 23 614, der US-A 48 01 897, der US-A 47 77 833, der US-A 47 38 144, der US-A 47 33 569, der US-A 46 60 421, der US-A 44 91 025, der US-A 41 87 721, der US-A 2008/0190195, der US-A 2008/0189079, der US-A 2008/0189067, der US-A 2008/0141789, der US-A 2008/0092667, der US-A 2008/0047361, der US-A 2008/0011101, der US-A 2007/0186685, der US-A 2007/0151371, der US-A 2007/0151370, der US-A 2007/0144234, der US-A 2007/0119265, der US-A 2007/0119264, der US-A 2006/0201260, der US-A 2005/0139015, der US-A 2003/0208325, der US-A 2003/0131668 oder der eigenen nicht vorveröffentlichten DE102007062397 ausführlich und detailliert beschrieben.

Jeder der darin gezeigten Meßaufnehmer umfaßt wenigstens ein im wesentlichen gerades oder wenigstens ein gekrümmtes Meßrohr zum Führen des, gegebenenfalls extrem zähen oder aber auch eher dünnflüssigen, Mediums. Im Betrieb des In-Line-Meßgeräts wird das wenigstens eine Meßrohr zwecks Generierung von durch das hindurchströmende Medium, insb. dessen momentanen Massendurchfluß, mit beeinflußten Schwingungsformen im Betrieb vibrieren gelassen. Als angeregte Schwingungsform - dem sogenannten Nutzmode - wird bei Meßaufnehmern mit gekrümmtem, z.B. U-, V- oder Ω-artig geformtem, Meßrohr üblicherweise jene Eigenschwingungsform gewählt, bei denen das Meßrohr Biegeschwingungen um eine gedachte Biegeschwingungsachse des Meßaufnehmers ausführt, die im wesentliche parallel zu einer ein Einlaßende des Meßrohrs mit einem Auslaßende des Meßrohrs imaginär verbindende gedachte Längsachse des Meßaufnehmers verläuft oder mit dieser koinzidiert, so daß es - nach Art eines an einem Ende eingespannten Auslegers bei einer niedrigsten natürlichen Resonanzfrequenz pendeln bezüglich einer gedachten Mittelebene des Meßrohrs im wesentlichen spiegelsymmetrische (im weiteren verkürzt "symmetrische") Biegeschwingungen ausführt. Bei Meßaufnehmern mit geradem Meßrohr hingegen wird zwecks Erzeugung von massendurchflußabhängigen Schwingungsformen oftmals ein solcher Nutzmode gewählt, bei dem das Meßrohr zumindest anteilig bezüglich seiner vorgenannten Mittelebene symmetrische Biegeschwingungen im wesentlichen in einer einzigen gedachten Schwingungsebene ausführt, etwa nach Art eines beidseitig eingespannten Biegebalkens bzw. einer eingespannten Saite. Die gedachte Mittelebene entspricht in beiden Fällen zumeist jeweils jener Symmetrieebene des jeweiligen Meßrohrs, ggf. auch des gesamten Meßaufnehmers, in welcher der durch die Mitte selbigen Meßrohrs verlaufende Querschnitt liegt, und welche Symmetrieebene somit koplanar zu diesem Querschnitt ist.

Infolge von solchen, beispielsweise pendel- oder saitenartigen, Biegeschwingungen werden im hindurchströmenden Medium bekanntlich vom Massendurchfluß bzw. der Massendurchflußrate abhängige Corioliskräfte induziert. Diese Corioliskräfte wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßaufnehmern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine im wesentlichen senkrecht zur Längsachse ausgerichtete gedachte Hochachse ausführt, Bei Meßaufnehmern mit geradem Meßrohr hingegen sind die Schwingungen im Coriolismode entsprechend als zu den Nutzmodeschwingungen komplanere Biegeschwingungen gleicher Schwingfrequenz ausgebildet. Für den erwähnten Fall, daß als Nutzmode bezüglich der vorgenannten Mittelebene des jeweiligen Meßrohrs im wesentlichen symmetrische Schwingungen dienen, sind die Schwingungen des Meßrohrs im Coriolismode bezüglich der Mittelebene des jeweiligen Meßrohrs im wesentlichen anti- bzw. punktsymmetrisch (im weiteren verkürzt "antisymmetrisch") ausgebildet. Gerade Meßrohre können, wie beispielsweise in der US-A 60 06 609 oder der US-B 70 17 424 gezeigt, zudem auch zu Torsionsschwingungen um eine gedachte Längsachse des Meßrohrs bzw. des Meßaufnehmers angeregt werden.

Zum Erregen von Schwingungen des wenigstens einen Meßrohrs weisen Meßaufnehmer vom Vibrationstyp des weiteren eine im Betrieb von einem von einer Treiberschaltung der jeweils zugehörigen Meßgerät-Elektronik generierten und entsprechend konditionierten elektrischen Erregersignal, z.B. inform eines geregelten Stroms, angesteuerte Erregeranordnung auf, die das Meßrohr mittels wenigstens eines im Betrieb von einem Strom durchflossenen, auf das Meßrohr praktisch direkt einwirkenden elektro-mechanischen, insb. elektro-dynamischen, Schwingungserregers zu Biegeschwingungen im Nutzmode anregt. Des weiteren umfassen derartige Meßaufnehmer eine Sensoranordnung mit, insb, elektro-dynamischen, Schwingungssensoren zum zumindest punktuellen Erfassen einlaßseitiger und auslaßseitiger Schwingungen des wenigstens einen Meßrohrs, insb. denen im Coriolismode, und zum Erzeugen von vom zu erfassenden Prozeßparameter, wie etwa dem Massedurchfluß oder der Dichte, beeinflußten, jeweils als ein Meßsignal des Meßaufnehmers dienenden elektrischen Sensor- oder auch Schwingungsmeßsignale.

Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf. Üblicherweise werden die Meßrohre derartiger, z.B. in Coriolis-Massedurchflußmessern eingesetzter und zumeist auch auf hohe Schwingungsgüten von weit über 100, insb. auf 5000 oder darüber, getrimmten, Meßaufnehmer im Betrieb auf einer momentanen natürlichen Resonanzfrequenz der für den Nutzmode gewählten Schwingungsform, insb. bei konstantgeregelter und/oder an das Medium angepaßter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513, der US-B 69 10 366 oder der US-B 70 80 564 gezeigt, mittels Meßaufnehmern vom Vibrationstyp, Viskosität des hindurchströmenden Mediums direkt zu messen, etwa basierend auf einer für die Erregung der Schwingungen erforderlichen Erregerleistung, die wiederum beispielsweise unter Verwendung des von der Treiberschaltung gelieferten Erreger- oder auch Treibersignals bzw., wie u.a. in der US-B 69 10 366 erwähnt, unter Verwendung von die Generierung des Treibersignals steuernden Betriebsparametern für die Treiberschaltung ermittelt werden kann, und/oder, im Falle wenigstens eines zumindest abschnittsweise geraden Meßrohrs, basierend auf Torsionsschwingungen desselben.

Bei Meßaufnehmern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die, zumeist als starre Rohrleitung ausgebildete, Prozeßleitung eingebunden. Bei Meßaufnehmern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßaufnehmer mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßaufnehmers ist zumeist allein mittels der zwei Verbindungsrohrstücke, über die das Meßrohr im Betrieb mit der Prozeßleitung kommuniziert, in einem schutzgebenden Meßaufnehmer-Gehäuse gehaltert, insb. in einer Schwingungen des Innenteil relativ zum Meßrohr ermöglichenden Weise. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßaufnehmer mit einem einzigen, im wesentlichen geraden Meßrohr sind letzteres und der Gegenschwinger, wie bei herkömmlichen Meßaufnehmern durchaus üblich, zueinander im wesentlichen koaxial ausgerichtet. Bei marktgängigen Meßaufnehmern der vorgenannten Art ist zumeist auch der Gegenschwinger im wesentlichen rohrförmig und als im wesentlichen gerader Hohlzylinder ausgebildet, der im Meßaufnehmer so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Die Erregeranordnung von Meßaufnehmern der in Rede stehenden Art weist üblicherweise wenigstens einen elektrodynamischen und/oder differentiell auf das wenigstens eine Meßrohr und den ggf. vorhandenen Gegenschwinger oder das ggf. vorhandene andere Meßrohr einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßaufnehmer vom Vibrationstyp sind mittels einer zumindest zeitweise von einem Strom durchflossenen - bei Meßaufnehmern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßaufnehmern die Erregeranordnung üblicherweise derart ausgebildet und im Meßaufnehmer plaziert, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßaufnehmern gezeigt, zumeist zumindest punktuell entlang einer gedachten mittigen Umfangslinie des Meßrohrs außen an diesem fixiert. Alternativ zu einer mittels eher zentral und direkt auf das Meßrohr wirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßaufnehmer-Gehäuse wirkenden Schwingungserreger gebildete Erregeranordnungen verwendet werden.

Bei den meisten markgängigen Meßaufnehmern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Magnetspule zusammenwirkenden stabförmigen Dauermagneten gebildet, der das Magnetfeld liefert. Jede der vorgenannten Spulen ist zudem mittels wenigstens eines Paars elektrischer Anschlußleitungen mit der erwähnten Meßgerät-Elektronik des In-Line-Meßgeräts verbunden, die zumeist auf möglichst kurzem Wege von den Spulen über den Gegenschwinger hin zum Wandlergehäuse geführt sind.

Die - oftmals auch als Meßumformer oder Transmitter bezeichnete - Meßgeräte-Elektronik von handelsüblichen In-Line-Meßgeräten der vorgenannten Art weisen zumeist einen digitale Meßwerte in Echtzeit liefernden, beispielsweise mittels eines digitalen Signalprozessors gebildeten, Mikrocomputer auf. Dieser umfaßt neben wenigstens einem entsprechenden Prozessor und diesem zugeordnete periphere Schaltungskomponenten, wie z.B. A/D-Wandler und D/A-Wandler, zumeist auch entsprechende flüchtige und nicht-flüchtige Datenspeichern zum Vorhalten auch von intern ermittelten und/oder von extern an das jeweilige In-Line-Meßgerät übermittelten, für den sicheren Ablauf des Abfüllprozesses - gegebenenfalls auch für eine nachhaltige Protokollierung desselben - erforderlichen digitalen Meß- oder Betriebsdaten, wie etwa für die Steuerung des Abfüllprozesses und/oder für die eigentliche Messung relevante chemische und/oder physikalische Eigenschaften des zu messenden Mediums. Neben dem Mikrocomputer und der die Ansteuerung des Meßaufnehmers ermöglichenden Treiberschaltung weist die Meßgerät-Elektronik ferner üblicherweise eine die Konditionierung der vom Meßaufnehmer gelieferten Meßsignale für den Mikrocomputer realisierende Eingangsschaltung auf, die unter Bildung einer Meß- und Auswerteschaltung der Meßgerät-Elektronik mit dem Mikrocomputer entsprechend zusammengeschaltet ist. Basierend auf den vom Meßaufnehmer gelieferten Meßsignalen und/oder auf von der Meßgerät-Elektronik gelieferten, den Meßaufnehmer steuernden Treibersignalen ermittelt der Mikrocomputer für die Steuerung des Abfüllprozesses benötigte primären Meßwerte, wie etwa eine momentane Massendurchflußrate des durch den Meßaufnehmer strömenden Mediums und/oder einen totalisierten Massendurchfluß, der einer Masse des Mediums entspricht, die während eines vorgegebenen, insb. mit einer vorgegebenen Abfüllmenge des Mediums korrespondierenden, Zeitraums, wie etwa einer sich von einem einem Startzeitpunkt eines einzelnen Abfüllvorganges entsprechenden Betriebszeitpunkt bis zu einem einem Endzeitpunkt desselben Abfüllvorganges entsprechenden Betriebszeitpunkt erstreckenden Abfülldauer insgesamt durch den Meßaufnehmer hindurchgeströmt ist, und stellt diese in Echtzeit bereit.

Da konventionelle In-Line-Meßgeräte der in Rede stehenden Art üblicherweise als eigenständige Meßgeräte ausgebildet sind, die in ein, beispielsweise eine oder mehrere Abfüllmaschinen kontrollierendes und/oder mittels speicherprogrammierbaren Steuerungen (SPS) gebildeten, übergeordnetes elektronisches Datenverarbeitungssystem einzubinden sind, insb. via 2-Draht- oder via 4-Draht-Leitung und/oder drahtlos via Funk, weist die jeweilige Meßgerät-Elektronik eines modernen In-Line-Meßgeräts der in Rede stehenden Art zumeist auch eine entsprechende, das Senden bzw. Empfangen von Meß- und/oder Betriebsdaten ermöglichende Kommunikationsschaltung auf, beispielsweise inform eines in der industriellen Meß- und Automatisierungstechnik etablierten Digitalausgangs, eines etablierten 4-20-mA-Stromsignalausgangs, einer zur NAMUR-Empfehlung NE43:1994 und/oder zum PROFIBUS-Standard IEC 61158 konformen Meßumformer-Schnittstelle oder einer anderen industrienorm gerechten Schnittstellen-Schaltung. Darüber hinaus ist in der Meßgerät-Elektronik auch eine die interne Versorgung des In-Line-Meßgeräts mit elektrischer Energie sicherstellende, beispielsweise die Energie vom elektronischen Datenverarbeitungssystem via 2-Draht- oder via 4-Draht-Leitung beziehende und/oder die Energie von einem internen Energiespeicher beziehende, Versorgungsschaltung vorgesehen. Ferner ist, es, wie beispielsweise in der DE-A 10 2006 013826 erwähnt, auch üblich, In-Line-Meßgeräte der in Rede stehenden Art an den Abfüllprozeß steuernde Aktoren, wie etwa Ventile und/oder Elektromotoren, direkt anzuschließen, um diese nahezu unverzögert mit Steuerkommandos anzusteuern, die aus dem ermittelten totalisierten Massendurchfluß sowie dafür entsprechenden vorgegebenen Sollwerten abgeleitet sind.

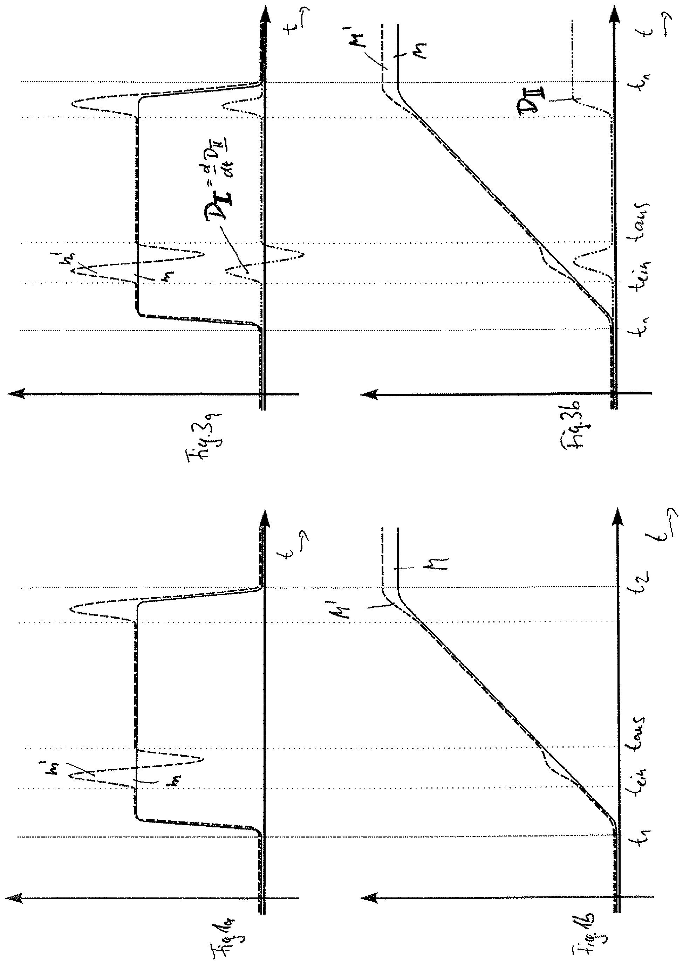

Bei der Verwendung von Durchfluß messenden In-Line-Meßgeräten mit einem Meßaufnehmer vom Vibrationstyp, insb. Coriolis-Massedurchfluß-Meßgeräten, in Abfüllprozessen hat es sich allerdings gezeigt, daß die Meßgenauigkeit, mit der die jeweiligen primären Meßwerte, insb. die Massendurchflußrate oder der üblicherweise davon abgeleitete totalisierte Massendurchfluß, jeweils ermittelt werden, bei innerhalb vorgegebener Spezifikationen liegenden Strömungsverhältnissen und selbst bei ausreichend bekannten oder auch weitgehend konstant gehaltenen Medieneigenschaften, wie etwa einer Dichte und einer Viskosität des Mediums, durchaus erheblichen Schwankungen unterliegen liegen können; dies im besonderen auch trotz entsprechender Berücksichtigung, beispielsweise durch gezieltes Unterdrücken und/oder entsprechendes Kompensieren, des - u.a. in den eingangs erwähnten US-B 72 96 484, US-B 71 81 982, US-B 70 40 181, US-B 70 40180, US-B 69 10 366, US-B 68 80 410, US-B 64 71 487, US-B 65 05 519, US-B 63 11 136, US-B 74 12 903, US-B 07360453, US-B 73 60 452, US-A 2008/0011101, US-A 20080190195, WO-A 06/127527, WO-A 06/104690, WO-A 05/093381, WO-A 05/003690 oder WO-A 08/011587 erörterten - Umstandes, daß das zu messende Medium prozeßbedingt zwei- oder mehrphasig ausgebildet sein kann, beispielsweise als mit Gas und/oder mit Feststoff beladene Flüssigkeit, und/oder trotz entsprechender Korrektur gegebenenfalls damit einhergehenden bekannten Effekten auf die jeweiligen Meßsignale, wie etwa den sogenannten "Bubble-Effekt" bzw. den sogenannten "Moving-Resonator-Effekt" etc.. Infolgedessen kann die Meßgenauigkeit - trotz weitgehender Kompensation bzw. Eliminierung bekannter Störeinflüsse - gelegentlich auch weit außerhalb eines für solche Abfüll- oder Dosieranwendungen tolerierbaren, vorgenannte Störeinflüsse mitberücksichtigenden Fehlerintervalls liegen. Im besonderen hat sich zunächst gezeigt, daß diese, durch Inhomogenitäten im Medium, wie etwa in einer Flüssigkeit mitgeführte Gasblasen und/oder Feststoffpartikel, hervorgerufenen Störungen nicht nur gleichfrequent zu den Schwingungen des Meßrohrs sind, sondern auch jedem der beiden Sensorsignale eine zusätzliche Phasenverschiebung aufgeprägten, und zwar in einer die Phasendifferenz zwischen den beiden Sensorsignalen und somit auch die Phasendifferenz zwischen jeweils einem der Sensor- oder auch Schwingungsmeßsignale und dem wenigstens einen Erregersignal verändernden Weise. Im Ergebnis dessen können die während verschiedenen Meßzyklen ermittelte Massendurchflußrate, $m'$, etwa den in der Fig. 1a gestrichelt skizzierten Verlauf und der über dieselben Meßzyklen, beispielsweise durch Aufintegrieren der nacheinander gemessen Massendurchflußraten, ermittelte totalisierte Massendurchfluß, $M'$, etwa den in der Fig. 1b ebenfalls gestrichelt skizzierten Verlauf annehmen. Im Vergleich dazu sind in den Fig. 1a, 1b jeweils auch der zeitliche Verlauf der tatsächlich eingestellten Massendurchflußrate, $m$, bzw. des tatsächlich geflossenen totalisierten Massendurchflusses, $M$, dargestellt.

Bei weiteren Versuchen ist zunächst der erkannte störende Einfluß vorgenannter Inhomogenitäten auf die Meßgenauigkeit der betroffenen In-Line-Meßgeräten mit Hilfe aus dem Stand der Technik vorbekannter Maßnahmen weitgehend eliminiert worden, beispielsweise durch Reduzierung von allfälligen Gaseinschlüssen im Medium und/oder durch Beaufschlagung des Mediums im Meßaufnehmer mit einem vergleichsweise hohen Druck. Obwohl dabei zudem auch, die in der eingangs erwähnten US-B 65 13 393 erörterten, beispielsweise durch ausgeprägte Krümmungen der Meßrohre und/oder durch Turbulenzen im strömenden Medium hervorgerufene, stationäre Asymmetrien im Strömungsprofil weitgehend ausgeschlossen werden konnten, mußte gelegentlich eine nach wie vor erhebliche Abweichung der so ermittelten primären Meßwerte von den tatsächlichen Meßgrößen beobachtet werden, dies im besonderen auch bei zäh- oder dickflüssigen, struktur-viskoser, tixotrophen oder pastöser Medien, wie etwa Sirup, Honig, Mayonnaise, Joghurt, Tomatenmark, Senf, flüssiges Waschmittel, Glycerin oder dergleichen.

Weiterführende Untersuchungen unter Laborbedingungen mit In-Line-Meßgeräten der in Rede stehenden Art haben zunächst ergeben, daß auch für den Fall, daß der Anteil der Inhomogenitäten im Medium im Vergleich zu dem für die Messung effektiven Gesamtvolumen des wenigstens einen Meßrohrs gleichbleibend sehr klein gehalten ist, trotz Anwendung der für solche Abfüllprozesse bzw. für mehrphasige Medien etablierten Korrekturmaßnahmen erhebliche Ungenauigkeiten bei den die primären Meßgrößen, wie etwa der Massendurchflußrate oder dem totalisierten Massendurchfluß, repräsentierenden primären Meßwerten auftreten können. Überraschenderweise hat es sich dabei sogar gezeigt, daß der Meßfehler bei niedriger Konzentration der Inhomogenitäten und/oder bei niedriger Strömungsgeschwindigkeit gelegentlich größer sein kann, als bei einer vergleichsweise höheren Konzentration bzw. bei höheren Strömungsgeschwindigkeiten. Des weiteren konnte festgestellt werden, daß der Meßfehler, entgegen der etablierten Betriebserfahrung, auch im Falle eines im wesentlichen senkrecht eingebauten Meßaufnehmer mit in Richtung der Gravitation verlaufender Längsachse gelegentlich größer sein kann, als bei horizontal eingebautem Meßaufnehmer. Ferner konnte in Experimenten mit stufenweise veränderter Strömungsgeschwindigkeit des Mediums und stufenweise variierter Dauer der Meßzyklen beobachtet werden, daß besonders auch bei dem von der Massendurchflußrate in herkömmlicherweise abgeleitete totalisierte Massendurchfluß in zunächst nicht reproduzierbarer Weise gelegentlich erhebliche Abweichungen von dem tatsächlich hindurchgeströmten Massenstrom auftreten können, dies im besonderen auch bei weitgehend konstant gehaltener Massendurchflußrate und weitgehend gleichmäßig niedriger Fremdstoffbeladung des Mediums - hier Luftblasen in Wasser (Fig. 1b).

Dementsprechend ist davon auszugehen, daß sogar nur vereinzelt auftretende Inhomogenitäten im Medium sich auch direkt in der für die Massendurchflußmessung essentielle Phasendifferenz so niederschlagen können, daß der Nullpunkt des In-Line-Meßgeräts im Betrieb sporadisch und in mit konventionellen Korrekturmaßnahmen nicht behebbarer Weise in erheblichem Maße variieren kann. Infolgedessen können herkömmliche In-Line-Meßgeräte der in Rede stehenden Art eine gelegentlich erheblich verringerte Meßgenauigkeit bzw. eine verringerte Reproduzierbarkeit der primären Meßwerte aufweisen, insb. auch bei dem für die Steuerung von Abfüllprozessen eminent wichtigen totalisierten Massendurchfluß, Im Ergebnis dessen sind bei herkömmlichen In-Line-Meßgeräten im Falle einer für diese ungünstigen Beladung des Mediums mit Fremdstoffen und/oder im Falle einer ungünstigen Taktung damit gesteuerter Abfüllprozesse ein gelegentliche Über- oder, wie in Fig. 1b gezeigt, eine entsprechende Unterdosierung nicht immer sicher auszuschließen.

Eine Aufgabe der Erfindung besteht daher darin, In-Line-Meßgeräte für strömende Medien mit einem Meßaufnehmer vom Vibrationstyp dahingehend zu verbessern, daß der schädliche Einfluß von, insb. vereinzelt in einem zu messenden Medium und/oder während eines der Dosierung einer vorgegebenen Charge eines Mediums dienenden Abfüllvorganges gelegentlich auftretenden, Inhomogenitäten der vorgenannten Art auf die Meßgenauigkeit von solchen In-Line-Meßgeräten, insb. auf deren jeweiligen Nullpunkt, weitgehend unterdrückt oder zumindest deutlich minimiert ist. Ferner besteht eine Aufgabe der Erfindung darin, In-Line-Meßgeräte der in Rede stehenden Art dahingehend zu verbessern, daß eine genaue, insb. auch robuste und ausreichend gut wiederholbare, Messung der für ein Abfüllen zu ermitteInden Meßgrößen, insb. der Massendurchflußraten und/oder totalisierten Massendurchflüsse, auch bei zwei- oder mehrphasigen Medien bzw. bei Batch-Betrieb ermöglicht wird und damit eine exakte Dosierung gewährleistet werden kann.

Zur Lösung der Aufgabe besteht die Erfindung in einem In-Line-Meßgerät, etwa einem Coriolis-Massedurchfluß-/Dichtemeßgerät und/oder einem Coriolis-Massedurchfluß-/Viskositätsmeßgerät, für ein zumindest zeitweise zwei- oder mehrphasiges und/oder mit Fremdstoffen, wie etwa Gasblasen und/oder Feststoffpartikel, beladenes, fließfähiges Medium. Das In-Line-Meßgerät umfaßt einen Meßaufnehmer vom Vibrationstyp mit wenigstens einem im Betrieb zumindest zeitweise vibrierenden, insb. Biegeschwingungen ausführenden, Meßrohr zum Führen von zumindest zeitweise zwei- oder mehrphasigen und/oder mit Fremdstoffen beladenem fließfähigem Medium, mit einer, beispielsweise zentral, auf das Meßrohr einwirkenden Erregeranordnung zum Erzeugen von Vibrationen, insb. Biegeschwingungen, des wenigstens einen Meßrohrs, und mit einer Sensoranordnung zum Erfassen von Vibrationen, insb. Biegeschwingungen, des wenigstens einen Meßrohrs, die wenigstens ein Schwingungen, insb. Biegeschwingungen, des Meßrohrs repräsentierendes Schwingungsmeßsignal liefert. Darüber hinaus umfaßt das In-Line-Meßgerät eine mit dem Meßaufnehmer elektrisch gekoppelte Meßgerät-Elektronik, die zumindest zeitweise wenigstens ein die Erregeranordnung treibendes Erregersignal, beispielsweise mit einem periodisch veränderlichen und/oder eingeprägten Strom, liefert, und zwar derart daß das wenigstens eine Meßrohr im Betrieb - getrieben von der mittels des wenigstens einen Erregersignals angesteuerten Erregeranordnung - zumindest zeitweise zu Vibrationen in einem Nutzmode des Meßaufnehmers angeregt ist, in dem es zumindest anteilig, insb. überwiegend und/oder bezüglich einer zu einem Querschnitt des Meßrohrs koplanaren gedachten Mittelebene des wenigstens Meßrohrs symmetrische, Biegeschwingungen, um eine gedachte Biegeschwingungsachse des Meßaufnehmers ausführt, die im wesentliche parallel zu einer ein Einlaßende des Meßrohrs mit einem Auslaßende des Meßrohrs imaginär verbindende gedachte Längsachse des Meßaufnehmers verläuft oder mit dieser koinzidert, und daß das wenigstens eine im Nutzmode vibrierende Meßrohr unter dem Einfluß von im hindurchströmenden Medium induzierten Corioliskräften zumindest zeitweise in einem dem Nutzmode überlagerten Coriolismode des Meßaufnehmers schwingt, in dem es zumindest anteilig, insb. überwiegend, bezüglich einer zu einem Querschnitt des Meßrohrs koplanaren gedachten Mittelebene des wenigstens Meßrohrs antisymmetrische Biegeschwingungen um die gedachte Biegeschwingungsachse des Meßaufnehmers ausführt.

Darüberhinaus ermittelt die Meßgerät-Elektronik zumindest zeitweise - beispielsweise mittels des wenigstens einen Schwingungsmeßsignals und/oder mittels des wenigstens einen Erregersignals - im Betrieb, insb. periodisch und/oder mit einer vorgegebenen Aktualisierungsrate, wiederkehrend, einen Dämpfungswert erster Art. Der Dämpfungswert erster Art repräsentiert hier eine von im wenigstens einen Meßrohr geführtem Medium induzierte zeitliche Änderung einer Dämpfung von Vibrationen des wenigstens einen Meßrohrs, die den dem Nutzmode entsprechenden Biegeschwingungen des wenigtens einen Meßrohrs entgegenwirkt und daher anhand des wenigstens einen Schwingungsmeßsignals und/oder anhand des wenigstens einen Erregersignals direkt ermittelt werden kann. Vorgenannte - beispielsweise anhand einer zeitlich Änderung der auch in konventionellen Meßaufnehmern vom Vibrationstyp typischerweise direkt meßbaren Dämpfungen von dem Nutzmode entsprechenden Vibrationen des wenigstens einen Meßrohrs im Betrieb direkt bestimmbare - Dämpfung der Schwingungen im Nutzmode korrespondiert im besonderen mit einer räumlichen Verteilung von Inhomogenitäten, wie etwa Gasblasen und/oder Feststoffpartikel, im durch das wenigstens eine Meßrohr strömenden Medium und kann beispielsweise auch eine Phasendifferenz zwischen dem wenigstens einen Schwingungsmeßsignal und dem wenigstens einen Erregersignal und insoweit auch einen Nullpunkt des In-Line-Meßgeräts, insb. den für die Messung der Massendurchflußrate bzw. des totalisierten Massendurchflusses relevanten, zumindest vorübergehend signifikant beeinflussen. Die räumliche Verteilung der Inhomogenitäten und insoweit auch die den Coriolismode-Schwingungen entgegenwirkende Dämpfung können in geringem Maße auch von einer Strömungsgeschwindigkeit des Mediums abhängig sein, die in den zahlreichen Anwendungen zumindest im zeitlichen Mittel üblicherweise möglichst konstant gehalten ist.

Nach einer Ausgestaltung der Erfindung ist vorgesehen, daß die Meßgerät-Elektronik den Dämpfungswert erster Art basierend auf einer zeitlichen Ableitung einer bezüglich einer zu einem Querschnitt des Meßrohrs koplanaren gedachten Mittelebene des wenigstens einen Meßrohrs und/oder bezüglich einer gedachten Wirkungslinie einer im Betrieb von der Erregeranordnung unter dem Einfluß des Erregersignals auf das Meßrohr ausgeübten Erregerkraft, symmetrische Dämpfung von Vibrationen des wenigstens einen Meßrohrs ermittelt. Besonders geeignet für die Berechnung des Dämpfungswerts erster Art sind dabei jene Dämpfungen, die Biegeschwingungen des wenigstens einen Meßrohrs in einem mittels der Erregeranordnung angeregten Nutzmodes des Meßaufnehmers, da diese anhand der bei Meßaufnehmern der in Rede stehenden Art typischerweise vorliegender Meß- bzw. Treibersignale, wie etwa den Schwingungsmeßsignalen und dem Erregerstrom, mittels der Meßgerät-Elektronik praktisch direkt gemessen werden können. Die angeregten Biegeschwingungen im Nutzmode können - wie bei Meßaufnehmern der in Rede stehenden Art durchaus üblich - Biegeschwingungen um eine gedachte, Ein- und Auslaßende des Meßaufnehmers imaginär verbindende Biegeschwingungsachse des Meßaufnehmers sein.

Nach einer Ausgestaltung der Erfindung ist vorgesehen, daß die Meßgerät-Elektronik den Dämpfungswert erster Art unter Berücksichtigung einer, wie etwa einer momentanen und/oder zeitlich gemittelten, Strömungsgeschwindigkeit des Mediums ermittelt.

Nach einer Ausgestaltung der Erfindung ist vorgesehen, daß die Meßgerät-Elektronik im Betrieb zumindest zeitweise wenigstens einen Dichte-Meßwert intern vorhält, beispielsweise auch mittels des wenigstens einen Schwingungsmeßsignals und/oder mittels des Erregersignals zumindest zeitweise, insb. periodisch wiederkehrend, ermittelt, der eine Dichte, $\rho$, des innerhalb des wenigstens einen Meßrohrs geführten Mediums repräsentiert.

Nach einer Ausgestaltung der Erfindung ist vorgesehen, daß die Meßgerät-Elektronik im Betrieb, insb. periodisch, wiederkehrend mittels des wenigstens einen Schwingungsmeßsignals einen Schwingungsmeßwert ermittelt, der eine Schwingungsamplitude von Schwingungen, insb. Biegeschwingungen, des wenigstens einen vibrierenden Meßrohrs und/oder einen Effektivwert davon repräsentiert.

Nach einer Ausgestaltung der Erfindung ist vorgesehen, daß das wenigstens eine Meßrohr im Betrieb - getrieben von der mittels des wenigstens einen Erregersignals angesteuerten Erregeranordnung - zumindest zeitweise zu Vibrationen in einem Nutzmode des Meßaufnehmers angeregt ist, in dem es zumindest anteilig, insb. überwiegend und/oder bezüglich einer zu einem Querschnitt des Meßrohrs koplanaren gedachten Mittelebene des wenigstens Meßrohrs symmetrische, Biegeschwingungen, um eine gedachte Biegeschwingungsachse des Meßaufnehmers ausführt, die im wesentliche parallel zu einer ein Einlaßende des Meßrohrs mit einem Auslaßende des Meßrohrs imaginär verbindende gedachte Längsachse des Meßaufnehmers verläuft oder mit dieser koinzidiert. Diese Ausgestaltung der Erfindung weiterführend ist weiters vorgesehen, daß die Erregeranordnung ferner das wenigstens eine Meßrohr im Betrieb zumindest zeitweise in Biegeschwingungen um die gedachte Biegeschwingungsachse, insb. überwiegend auf einer niedrigsten Resonanzfrequenz des Meßrohrs, versetzt, die bezüglich der gedachten Mittelebene des wenigstens Meßrohrs im wesentlichen symmetrisch ausgebildet sind. Alternativ oder in Ergänzung dazu schwingt das wenigstens eine im Nutzmode vibrierende Meßrohr unter dem Einfluß von im hindurchströmenden Medium induzierten Corioliskräften zumindest zeitweise in einem dem Nutzmode überlagerten Coriolismode des Meßaufnehmers, in dem es zumindest anteilig, insb. überwiegend, bezüglich einer zu einem Querschnitt des Meßrohrs koplanaren gedachten Mittelebene des wenigstens Meßrohrs antisymmetrische Biegeschwingungen, um die gedachte Biegeschwingungsachse des Meßaufnehmers ausführt. Für vorgenannten Fall, repräsentiert der Dämpfungswert erster Art eine Dämpfung, die den dem Coriolismode entsprechenden Biegeschwingungen entgegenwirkt.

Nach einer Ausgestaltung der Erfindung ist vorgesehen, daß die Meßgerät-Elektronik im Betrieb, insb. periodisch wiederkehrend, mittels des wenigstens einen Schwingungsmeßsignals und/oder mittels des Erregersignals einen Anregungsmeßwert ermittelt, der eine Schwingungen, insb. Biegeschwingungen, des wenigstens einen Meßrohr aufrechterhaltenden Erregerkraft, insb. eine Amplitude und/oder einen Effektivwert davon, repräsentiert und/oder der eine Schwingungen, insb. Biegeschwingungen, des wenigstens einen Meßrohr aufrechterhaltenden Erregerleistung repräsentiert.

Nach einer Ausgestaltung der Erfindung ist vorgesehen, daß die Meßgerät-Elektronik im Betrieb, insb. periodisch und/oder mit einer vorgegebenen Aktualisierungsrate wiederkehrend, insb. mittels des wenigstens einen Schwingungsmeßsignals und/oder mittels des Erregersignals, einen Dämpfungswert zweiter Art ermittelt, insb. auch intern abspeichert, der eine, insb. zeitlich veränderliche, Dämpfung von, insb. bezüglich einer zu einem Querschnitt des Meßrohrs koplanaren gedachten Mittelebene des wenigstens einen Meßrohrs und/oder bezüglich einer gedachten Wirkungslinie einer im Betrieb von der Erregeranordnung unter dem Einfluß des Erregersignals auf das Meßrohr ausgeübten Erregerkraft symmetrische, Biegeschwingungen des wenigstens einen Meßrohrs in dem mittels der Erregeranordnung angeregten Nutzmode des Meßaufnehmers momentan repräsentiert.

Diese Ausgestaltung der Erfindung weiterbildend ist für den vorbeschriebenen Fall, daß die Meßgerät-Elektronik im Betrieb wiederkehrend einen Anregungsmeßwert sowie auch einen Schwingungsmeßwert ermittelt, ferner vorgesehen, daß die Meßgerät-Elektronik den Dämpfungswert zweiter Art basierend auf einem im Betrieb, insb. periodisch, wiederkehrend ermittelten Verhältnis des Anregungsmeßwerts zum Schwingungsmeßwert berechnet. Alternativ oder in Ergänzung dazu berechnet die Meßgerät-Elektronik den Dämpfungswert erster Art basierend auf wenigstens einem Dämpfungswert, insb. zwei oder mehreren, während verschiedener Meßzyklen ermittelten Dämpfungswerten zweiter Art, beispielsweise etwa basierend auf einer Differenz zweier während verschiedener Meßzyklen generierter Dämpfungswerte zweiter Art. Diese Ausgestaltung der Erfindung weiterbildenden ermittelt die Meßgerät-Elektronik den Dämpfungswert erster Art basierend auf einem Differenzenquotienten, der die zeitliche Ableitung der dem Nutzmode des Meßaufnehmers entsprechenden Biegeschwingungen des wenigstens einen Meßrohrs entgegenwirkenden Dämpfung repräsentiert, und der beispielsweise aus einem Verhältnis vorgenannter Differenz zu dem zwischen den beiden Dämpfungswerten liegenden Zeitintervall gebildet ist.

Zur Ermittlung des Dämpfungswerts erster Art hält die Meßgerät-Elektronik ferner einen, insb. intern gespeicherten und/oder intern ermittelten, Meßgerätparameter vor, der zwischen dem Dämpfungswert zweiter Art und dem Dämpfungswert erster Art vermittelt. Dieser Meßgerätparameter ist eine vom tatsächlichen Aufbau des Meßaufnehmers und/oder vom Medium abhängige Kennzahl des In-Line-Meßgeräts, die beispielsweise im Zuge einer einer Naß-Kalibration des In-Line-Meßgeräts - also bei Beaufschlagung des Meßaufnehmers mit einem bekannten Medium von bekannter bzw. eingeprägter Massendurchflußrate und/oder im Dialog mit einem mit dem In-Line-Meßgerät interagierenden Anwender - ermittelt ist, etwa während der Inbetriebnahme des In-Line-Meßgeräts und/oder wiederkehrend im Betrieb.

Gemäß der Erfindung ist vorgesehen, daß die Meßgerät-Elektronik mittels des wenigstens einen Schwingungsmeßsignals und/oder mittels des Erregersignals, insb. auch mittels des Dämpfungswerts erster Art, zumindest zeitweise, insb. periodisch und/oder mit einer vorgegebenen Aktualisierungsrate wiederkehrend, wenigstens einen Massendurchfluß-Meßwert generiert, der eine Massendurchflußrate, $m$, des im wenigstens einen Meßrohr geführten Mediums momentan repräsentiert. Nach einer Ausgestaltung der Erfindung ist ferner vorgesehen, daß die Meßgerät-Elektronik mittels des wenigstens einen Dämpfungswerts erster Art gegebenenfalls einen Alarm generiert, der signalisiert, daß der Massendurchfluß-Meßwert eine verringerte Meßgenauigkeit aufweist, insb. infolge einer von einer entsprechenden Vorgabe abweichenden Qualität des Mediums. Alternativ oder in Ergänzung dazu ist ferner vorgesehen, daß die Meßgerät-Elektronik mittels des wenigstens einen Schwingungsmeßsignals und/oder mittels des Erregersignals zumindest zeitweise, insb. periodisch und/oder mit einer vorgegebenen Aktualisierungsrate wiederkehrend, einen provisorischen Massendurchfluß-Meßwert generiert, der die Massendurchflußrate, $m$, des im wenigstens einen Meßrohr geführten Mediums ungenauer repräsentiert, als der Massendurchfluß-Meßwert. Unter Verwendung des provisorischen Massendurchfluß-Meßwerts sowie des Dämpfungswert erster Art kann mittels der Meßgerät-Elektronik der Massendurchfluß-Meßwert auch im Falle von asymmetrischer Dämpfung von Vibrationen des wenigstens einen Meßrohrs infolge von Inhomogenitäten im Medium mit sehr hoher Meßgenauigkeit generiert werden.

Nach einer Ausgestaltung der Erfindung ist vorgesehen, daß die Meßgerät-Elektronik mittels des wenigstens einen Schwingungsmeßsignals und/oder mittels des Erregersignals sowie mittels des Dämpfungswerts erster Art zumindest zeitweise, insb. periodisch und/oder mit einer vorgegebenen Aktualisierungsrate, wiederkehrend, einen Masse-Meßwert generiert, der einen totalisierten Massendurchfluß, momentan repräsentiert, der einer zu messenden Masse des Mediums entspricht, die während eines Zeitintervalls, insgesamt durch den Meßaufnehmer hindurchgeströmt ist. Diese Ausgestaltung der Erfindung weiterbildend ist ferner vorgesehen, daß die Meßgerät-Elektronik mittels des wenigstens einen Dämpfungswerts erster Art gegebenenfalls einen Alarm generiert, der signalisiert, daß der Masse-Meßwert eine verringerte Meßgenauigkeit aufweist, insb. infolge einer von einer entsprechenden Vorgabe abweichenden Qualität des Mediums. Alternativ oder in Ergänzung dazu ist der Dämpfungswert erster Art in der Weise berechnet, daß die davon repräsentierte Dämpfung einer über das Zeitintervall totalisierten antisymmetrischen Dämpfung der Vibrationen des wenigstens einen Meßrohrs entspricht. Das Zeitintervall kann fest vorgegeben oder im Betrieb wiederkehrend ermitteltet bzw. seitens eines mit dem In-Line-Meßgerät interagierenden Anwenders und/oder von einem das In-Line-Meßgerät steuernden übergeordneten elektronischen Datenverarbeitungssystem auch neu definiert werden. Im Falle des Verwendens des In-Line-Meßgerät in einem Abfüllprozeß kann das Zeitintervall beispielsweise einer sich von einem einem Startzeitpunkt eines Abfüllvorganges entsprechenden Betriebszeitpunkt bis zu einem einem Endzeitpunkt desselben Abfüllvorganges entsprechenden Betriebszeitpunkt erstreckenden, insb. mit einer vorgegebenen Abfüllmenge des Mediums korrespondierenden, Abfülldauer entsprechen,

Nach einer Ausgestaltung der Erfindung ist vorgesehen, daß die Meßgerät-Elektronik mittels des wenigstens einen Schwingungsmeßsignals und/oder mittels des Erregersignals sowie mittels des Dämpfungswerts erster Art zumindest zeitweise, insb. periodisch und/oder mit einer vorgegebenen Aktualisierungsrate, wiederkehrend, einen Masse-Meßwert generiert, der einen totalisierten Massendurchfluß, momentan repräsentiert, der einer zu messenden Masse des Mediums entspricht, die während eines Zeitintervalls, insgesamt durch den Meßaufnehmer hindurchgeströmt ist, wobei die Meßgerät-Elektronik mittels des wenigstens einen Schwingungsmeßsignals und/oder mittels des Erregersignals zumindest zeitweise, insb. periodisch und/oder mit einer vorgegebenen Aktualisierungsrate wiederkehrend, wenigstens einen provisorischen Masse-Meßwert generiert, der die zu messende Masse ungenauer repräsentiert, als der tatsächliche Masse-Meßwert. Diese Ausgestaltung der Erfindung weiterbildend ist ferner vorgesehen, daß die Meßgerät-Elektronik den wenigstens einen Masse-Meßwert auch mittels des provisorischen Masse-Meßwerts und/oder mittels des Dämpfungswerts erster Art generiert. Für den erwähnten Fall, daß die Meßgerät-Elektronik im Betrieb zudem auch wiederkehrend einen Massendurchfluß-Meßgerät ermittelt, kann der aktuelle Masse-Meßwert jeweils auch mittels eines vorher ermittelten Masse-Meßwert sowie mittels eines aktuellen provisorischen Massendurchfluß-Meßwerts ermittelt werden.

Nach einer Ausgestaltung der Erfindung ist vorgesehen, daß die Meßgerät-Elektronik im Betrieb zumindest zeitweise wenigstens einen Geschwindigkeits-Meßwert intern vorhält, beispielsweise auch mittels des wenigstens einen Schwingungsmeßsignals und/oder mittels des Erregersignals ermittelt, der eine Strömungsgeschwindigkeit des innerhalb des wenigstens einen Meßrohrs geführten Mediums momentan repräsentiert. Diese Ausgestaltung der Erfindung weiterbildend ist ferner vorgesehen, daß die Meßgerät-Elektronik den Dämpfungswert erster Art auch unter Verwendung des Geschwindigkeits-Meßwerts ermittelt. Für den vorgenannten Fall, daß die Meßgerät-Elektronik zumindest zeitweise einen eine Dichte des innerhalb des wenigstens einen Meßrohrs geführten Mediums repräsentierenden Dichte-Meßwert ermittelt, kann die Meßgerät-Elektronik im Betrieb den wenigstens einen Geschwindigkeitsmeßwert auch mittels nämlichen Dichte-Meßwerts generieren, beispielsweise mittels numerischer Division eines gegebenenfalls ebenfalls mittels der Meßgerät-Elektronik generierten Massendurchfluß-Meßwerts und durch den Dichte-Meßwert und/oder mittels numerischer Division eines gegebenenfalls ebenfalls mittels der Meßgerät-Elektronik generierten Masse-Meßwerts und durch den Dichte-Meßwert. Diese Ausgestaltung der Erfindung weiterbildend ist ferner vorgesehen, daß die Meßgerät-Elektronik einen, insb. mit einem effektiven Strömungsquerschnitt des Meßaufnehmers korrespondierenden, meßgerätspezifischen Meßgerätparameter vorhält, der zwischen einem bei Beaufschlagung des Meßaufnehmers mit einem strömenden Medium von vorgegebener Strömungsgeschwingkeit ermittelten Geschwindigkeitsmeßwert und dieser vorgegebenen Strömungsgeschwindigkeit vermittelt. Der Meßgerätparameter kann beispielsweise im Zuge einer Kalibration des In-Line-Meßgeräts mit strömendem Medium von vorgegebener Strömungsgeschwindigkeit vorab experimentell sehr einfach ermittelt werden. Insbesondere für den Fall, daß das In-Line-Meßgerät so installiert ist, daß die Längsachse des Meßaufnehmers im wesentlichen senkrecht ausgerichtet ist, und/oder für den Fall, daß das Mediums typischerweise mit einem Fremdstoff beladen ist, dessen Dichte und/oder dessen Viskosität in erheblichem Maße von der des eigentlichen Mediums abweicht, ist gemäß einer anderen Weiterbildung der dreizehnten Ausgestaltung der Erfindung ferner vorgesehen, daß die Meßgerät-Elektronik zur Ermittlung der Strömungsgeschwindigkeit bzw. zur Ermittlung des Dämpfungsmeßwerts erster Art intern einen Mediumsparameter vorhält bzw. verwendet, der eine - bei gegebener Einbausituation zumindest im zeitlichen Mittel weitgehend invariante - Relativgeschwindigkeit zwischen dem aktuellen Medium und dem darin gelegentlich enthaltenen Fremdstoff repräsentiert. Solch eine Relativbewegung zwischen Fremdstoff und Medium und damit einhergehend die Relativgeschwindigkeit kann beispielsweise infolge einer auf den Fremdstoff wirkenden Beschleunigungskraft, wie etwa der Gravitationskraft bzw. einer Auftriebskraft, hervorgerufen sein.

Nach einer Ausgestaltung der Erfindung ist vorgesehen, daß die Erregeranordnung einen, insb. einzigen und/oder elektrodynamischen, im wesentlichen mittig am wenigstens einen Meßrohr angreifenden Schwingungserreger aufweist.

Nach einer Ausgestaltung der Erfindung ist vorgesehen, daß die Meßgerät-Elektronik mittels des wenigstens einen Dämpfungswerts erster Art einen Alarm generiert, der signalisiert, daß das Medium eine von einer entsprechenden Vorgabe, insb. einem maximal zulässigen Anteil an mitgeführten Fremdstoffen, abweichende Qualität aufweist.

Nach einer Ausgestaltung der Erfindung ist vorgesehen, daß die Meßgerät-Elektronik mittels des wenigstens einen Dämpfungswerts erster Art einen Alarm generiert, der signalisiert, daß das In-Line-Meßgerät außerhalb einer dafür vorgegebenen Spezifikation betrieben ist.

Nach einer Ausgestaltung der Erfindung ist vorgesehen, daß die Meßgerät-Elektronik den Dämpfungswert erster Art mit einer vorgegebenen, insb. während eines sich über mehrere Meßzyklen erstreckenden Zeitraums im wesentlichen konstanten, Aktualisierungsrate wiederkehrend generiert.

Das erfindungsgemäße In-Line-Meßgeräts ist im besonderen auch für den Einsatz in einem Abfüllprozeß, beispielsweise auch zum Steuern eines dem Abdosieren einer vorgegebenen Menge und/oder Masse, $M_{SOLL}$, eines Mediums in ein Behältnis, insb. eine Flasche, ein Becher, eine Dose, ein Glas, eine Ampulle oder dergleichen, dienenden Abfüllvorgangs und/oder zum Ermitteln einer für das Abdosieren einer vorgegebenen Menge und/oder Masse, $M_{SOLL}$, eines Mediums erforderlichen, sich von einem Startzeitpunkt eines entsprechenden Abfüllvorganges bis zu einem einem Endzeitpunkt desselben Abfüllvorganges erstreckenden Abfülldauer und/oder zum Ermitteln eines Endzeitpunkts, $t_n$, eines dem Abdosieren einer vorgegebenen Menge und/oder Masse, $M_{SOLL}$, eines Mediums dienenden Abfüllvorganges geeignet. Weitere vorteilhafte Verwendung sowie auch Ausgestaltungen des erfindungsgemäßen In-Line-Meßgeräts ergeben sich darüberhinaus auch aus nachfolgenden Erläuterungen, den Ausführungsbeispielen sowie den Ansprüchen.

Die Erfindung basiert auf der überraschenden Erkenntnis, daß neben den bekannten Auswirkungen von, beispielsweise auch von unerwünschten bzw. unvermeidbare Fremdstoffen im Medium gebildete, Inhomogenitäten der in Rede stehenden Art, wie etwa dem erwähnten "Bubble-Effekt" oder dem "Moving-Resonator-Effekt", in erheblichem Maße auch eine momentane räumliche Verteilung solcher, gegebenenfalls auch nur sporadisch und/oder vereinzelt auftretenden Inhomogenitäten, wie etwa Gasblasen und/oder Feststoffpartikel, innerhalb des im jeweiligen Meßrohrs strömenden Medium, Einfluß auf die Schwingungsmeßsignale von Meßaufnehmern vom Vibrationstyp nehmen kann. Als bedeutsam für die Beeinflussung der Meßsignale, insb. auch von deren Phasenlage relativ zueinander bzw. relativ zum Erregersignal, und somit auch für den Nullpunkt des In-Line-Meßgeräts insgesamt konnte dabei eine gelegentlich in erheblichem Maße und/oder nicht vorhersehbarer Weise veränderliche Asymmetrie einer räumlichen Verteilung selbiger Inhomogenitäten innerhalb des Meßrohrs bezüglich der weiter oben erwähnten, als Mittelebene bezeichneten Symmetrieebene des jeweiligen Meßrohrs identifiziert werden. Einhergehend mit einer solchen zeitlich veränderlichen, zumeist auch nur vorübergehend auftretenden Asymmetrie der räumlichen Verteilung der Inhomogenitäten im Medium, wie sie beispielsweise bei Abfüllprozessen mit kurzen Abfülldauern und/oder mit im Vergleich zum Meßrohrvolumen kleinen Chargenvolumen, bei Anwendungen von geringer Strömungsgeschwindigkeit und/oder bei senkrecht eingebautem Meßaufnehmer häufig beobachtet werden können, wirkt auf das vibrierende Meßrohr insgesamt auch eine gleichermaßen veränderliche asymmetrische Dämpfung, $D$, ein, die dazu führt, daß sowohl die im Nutz- als auch die im Coriolismode angeregten Schwingungsformen entsprechend deformiert und die Schwingungssensoren zusätzlich zu den eigentlichen Meßeffekten eine durch die asymmetrische Dämpfung bzw. einen entsprechenden asymmetrischen Dämpfungskraftbelag beeinflußte Schwingungsbewegung erfassen.

Im Ergebnis einer solchen, beispielsweise durch eine einzelne in einer Flüssigkeit mitgeführte, langsam durch das Meßrohr hindurchströmende Luftblase hervorgerufene, Asymmetrie können sich in Fig. 1a, 1b gezeigten, von den tatsächlichen Meßgrößen jeweils teilweise erheblich abweichenden zeitlichen Verläufe der gemessenen Massendurchflußrate, $m'$, bzw. des davon abgeleiteten totalisierten Massendurchflusse, $M'$, einstellen. In Fig. 1a entspricht jener zwischen den Zeitpunkten, $t_{ein}$, $t_{aus}$, verlaufender Wellenzug im zeitlichen Verlauf einer bei gleichmäßig strömendem Medium mit im wesentlichen schlupfrei - also ohne nennenswerte Relativgeschwindigkeit zwischen dem Medium und Fremdstoff - mitgeführter Luftblase vom Eintritt derselben am Einlaßende des Meßrohrs bis zum Wiederaustritt am Auslaßende des Meßrohr gemessenen Massendurchflußrate. Der Wendepunkt des Wellenzuges entspricht dabei der gemessenen Massendurchflußrate zudem Zeitpunkt, zu dem die Luftblase die erwähnte gedachte Mittelebene passiert. Daraus abgeleitet ist ohne weiteres erkennbar, daß eine bezüglich der Mittelebene - zumindest in einer gedachten Projektion auf die Längsachse - im wesentlichen symmetrisch ausgebildete räumliche Verteilung von Inhomogenitäten der in Rede stehenden Art bzw. das vollständige Passieren des Meßrohrs seitens einer solchen Inhomogenität innerhalb eines betrachteten Zeitintervall,

$$\Delta T_M = t_2 - t_1,$$

wie etwa einer für eine entsprechende Bilanzierung relevanten Abfülldauer, praktische zu keiner über die bekannten Effekte hinausgehende Beeinträchtigung des Nullpunkts führt. Für den anderen Fall aber, daß infolge asymmetrischer räumlicher Verteilungen von Inhomogenitäten im Meßrohr bezüglich der genannten Mittelebene asymmetrische Dämpfungen, $D$, den Schwingungen des Meßrohrs effektiv entgegenwirken, ist davon auszugehen, daß die basierend auf den Schwingungen des jeweiligen Meßrohrs, insb. basierend auf dessen vom hindurchströmenden Medium beeinflußten Schwingungsformen, ermittelte Meßwerte, wie etwa die Massendurchflußrate und/oder der totalisierte Massendurchfluß, ohne entsprechende Kompensationsmaßnahmen in erheblichem Maße fehlerbehaftet sein können. Infolge solcher zeitlich veränderlichen Asymmetrien in der räumlichen Verteilung der Inhomogenitäten bzw. in der Meßrohrschwingungen beeinträchtigenden Dämpfung ist es dementsprechend also erforderlich, die von herkömmlichen Meßaufnehmern vom Vibrationstyp gelieferten Meßsignale bzw. die von konventionellen In-Line-Meßgeräten ermittelten Meßwerte durch weiterführende, die asymmetrische Dämpfung entsprechend mitberücksichtigende Korrekturmaßnahmen geeignet aufzubereiten.

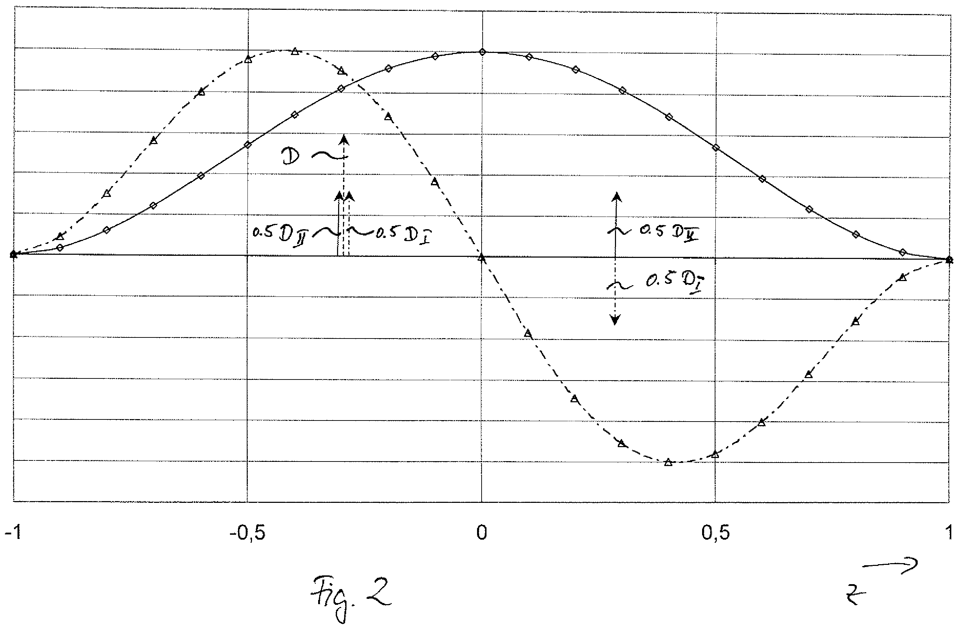

Darüberhinaus ist ferner erkannt worden, daß die Abhängigkeiten des Nullpunkts bzw. dessen sporadische Veränderungen im Betrieb im besonderen auf jenen modalen Anteil dieser asymmetrischen Dämpfungen zurückzuführen sind, die effektiv den Schwingungen des Meßrohrs im Coriolismode entgegenwirken, und die daher im weiteren auch als Coriolismode-Dämpfung, $D_I$, bezeichnet werden. Eine mögliche momentane Ausprägung dieser Coriolismode-Dämpfung, $D_I$, entlang des ausgelenkten Meßrohrs ist beispielhaft und schematisch in der der Fig. 2 zusammen mit einem entsprechend korrespondierenden momentanen Amplitudenverlauf, $S_{II}$, der Schwingungen des Nutzmodes sowie mit einem entsprechend korrespondierenden momentanen Amplitudenverlauf, $S_I$, der Schwingungen des Coriolismodes dargestellt; die insgesamt den Schwingungen des Meßrohrs entgegenwirkend asymmetrische Dämpfung entspricht hierbei im wesentlichen einer Überlagerung der Nutzmode-Dämpfung, $D_{II}$, mit der Coriolis-Dämpfung, $D_I$.

Eine Möglichkeit diese durch Inhomogenitäten verursachten - insoweit eher flüchtigen - Coriolismode-Dämpfung, $D_I$, im Betrieb des In-Line-Meßgeräts wiederkehrend zu messen bzw. entsprechend zu aktualisieren besteht überraschenderweise darin, eine zeitliche Ableitung jenes modalen Anteil der asymmetrischen Dämpfungen zu ermitteln, die den - hier symmetrischen - Schwingungen des Meßrohrs im Nutzmode entgegenwirken und die daher im weiteren auch als Nutzmode-Dämpfung, $D_{II}$, bezeichnet werden.

Die Nutzmode-Dämpfung, $D_{II}$, - von der eine mögliche, mit vorgenannter Coriolismode-Dämpfung, $D_I$, entsprechend korrespondierende momentane Ausprägung ebenfalls in der Fig. 2 dargestellt ist - kann z.B. basierend auf dem Erregersignal und einem der Schwingungsmeßsignale und/oder basierend auf einer die Schwingungen aufrechterhaltenden Erregerleistung und/oder basierend auf im Betrieb wiederkehrend ermittelten Schwingungsgüte des im Nutzmode schwingenden Meßrohrs in herkömmlicher, dem Fachmann bekannter Weise ermittelt werden, beispielsweise auch gemäß der eingangs erwähnten US-A 50 27 662. Ein mit den Meßwerten von Fig. 1a bzw. 1b entsprechend korrespondierender zeitlicher Verlauf der Nutzmode-Dämpfung, $D_{II}$, ist zu Veranschaulichung in Fig. 3b gezeigt.

Die zeitliche Ableitung der Nutzmode-Dämpfung, $D_{II}$, kann beispielsweise basierend auf einem mittels einer mit dem aktuellen Meßzeitpunkt, $t_2 = t_i$, korrespondierenden Nutzmode-Dämpfung, $D_{II,i}$, und einer mit einem vorherigen Meßzeitpunkt, $t_1 = t_{i-1}$, korrespondierenden Nutzmode-Dämpfung, $D_{II, i-1}$, und einer zwischen beiden Meßzeitpunkten vergangenen Zeit gebildeten Differenzenquotienten in der Meßgerät-Elektronik während des Betriebs des In-Line-Meßgerät ausreichend genau berechnet werden. Die gemessene Massendurchflußrate läßt sich somit in einfacher Weise durch nachträgliche Korrektur einer in konventioneller Weise, also zunächst ohne Berücksichtigung von Asymmetrien der vorgenannten Art, und infolgedessen zu ungenau ermittelten Massendurchflußrate, $m'$, entsprechend präzisieren, und somit der tatsächlichen Meßgröße, $m$, genauer annähern, beispielsweise durch entsprechende Umsetzung

der Operation $\quad m' - K \cdot \dfrac{dD_{II}}{dt} \longrightarrow m \quad$ in der Meßgerät-Elektronik.

In Ergänzung zur Ermittlung anhand der zeitliche Ableitung, $dD_{II}/dt$ der Nutzmode-Dämpfung, $D_{II}$, besteht eine weitere Möglichkeit zur Ermittlung der Coriolismode-Dämpfung, $D_I$, darin, die gemessene Nutzmode-Dämpfung, $D_{II}$, über einen bestimmtes, beispielsweise für die Ermittlung des totalisierten Massendurchfluß vorgegebenes, Zeitintervall, $\Delta T_M = t_2 - t_1$, zu totalisieren und somit entsprechend zu bilanzieren sowie mit Erreichen von dessen Ende, $t_2 = t_n$, in die Bilanz der einzeln gemessenen und über das selbe Zeitintervall, $\Delta T_M$, zunächst ohne Berücksichtigung des Einflusses asymmetrischer Dämpfungen aufintegrierten Massendurchflußraten, $m'$, entsprechend einzubeziehen. Diese für die Ermittlung der Coriolismode-Dämpfung, $D_I$, erforderliche Bilanzierung der effektiv wirksamen Anteile der Nutzmode-Dämpfung, $D_{II}$, kann dabei auf einfache Weise durch Bilden einer Differenz, $\Delta D_{II}$, einer mit dem Ende, $t_{STOPP}$, des Zeitintervalls, $\Delta T_M$, korrespondierenden momentanen Nutzmode-Dämpfung, $D_{II,2}$, und einer mit dem Beginn, $t_1 = t_{START}$, desselben Zeitintervalls, $\Delta T_M$, korrespondierenden momentanen Nutzmode-Dämpfung, $D_{II,1}$, erfolgen. Ein mit den Meßwerten, $m'$, $M'$, von Fig. 1a bzw. 1b entsprechend korrespondierender zeitlicher Verlauf der daraus resultierend ermittelten Coriolismode-Dämpfung, $D_I$, ist zu Veranschaulichung in Fig. 3a gezeigt. Der totalisierte Massendurchfluß kann in einfacher Weise durch nachträgliche Korrektur einer in konventioneller Weise, also zunächst wieder ohne Berücksichtigung von Asymmetrien der vorgenannten Art, und somit zu ungenau ermittelten totalisierten Massendurchfluß, $M'$, entsprechend präzisiere ermittelt werden, beispielsweise durch entsprechende Umsetzung der Operation

$$\int_{t1}^{t2} m\, dt = \int_{t1}^{t2} m'\, dt - K_1 \cdot D_{II}(t) = \int_{t1}^{t2} m'\, dt - K_1 \cdot \Delta D_{II} = M' - K_1 \cdot \Delta D_{II} \longrightarrow M \quad \text{in der Meßgerät-Elektronik.}$$

Da die räumliche Verteilung der Inhomogenitäten bzw. deren zeitliche Änderung mit dem Durchgang von Fremdstoffen im Medium durch das wenigstens eine Meßrohr und insoweit wiederum auch mit einer Strömungsgeschwindigkeit des Mediums korrespondiert läßt sich die Genauigkeit mit der die antisymmetrisch Dämpfung im Betrieb ermittelt wird dadurch weiter verbessern, daß eine momentane Beladung des im Meßrohr geführten Mediums mit Fremdstoffen bzw. auch eine Strömungsgeschwindigkeit des Mediums entsprechend mit berücksichtigt wird. Besonders im Falle von Abfüllprozessen der vorgenannten Art können, infolge der dabei üblicherweise über einen großen Zeitraum weitgehend konstant gehalten Prozeßbedingungen, sowohl ein Grad der Fremdstoffbeladung als auch eine eingestellte Strömungsgeschwindigkeit mit einer für eine Ermittlung der Dämpfung ausreichenden Genauigkeit sehr einfach bestimmt und entsprechend berücksichtigt werden, beispielsweise im Zuge einer Naß-Kalibration des In-Line-Meßgerät vor Ort.

Ein Vorteil der Erfindung besteht unter anderem darin, daß die Korrektur der durch Asymmetrien in der räumlichen Verteilung von allfällig im zu messenden Medium mitgeführten Inhomogenitäten bzw. den damit einhergehenden asymmtrischen Dämpfungen der Meßrohrschwingungen verursachten Meßfehler bereits durch geringfügige Veränderungen an den die Meßsignale des Meßaufnehmers auswertenden und basierend darauf die betreffenden primären Meßwerte, insb. den Massendurchfluß-Meßwert oder den Masse-Meßwert, ermittelnden etablierten Auswertealgorithmen bzw. den diesen entsprechenden Programmcodes für den Mikrocomputer realisiert werden kann, insb. auch ohne nennenswerte Veränderungen im schaltungstechnischen Aufbau der Meßgerät-Elektronik oder auch ohne daß, insb. auch im Gegensatz etwa zur eingangs erwähnten US-B 67 05 172 oder US-B 70 73 396, im Vergleich zu etablierten Meßaufnehmertypen spezielle Änderung hinsichtlich des mechanischen und/oder des elektro-mechanischen Aufbaus des jeweiligen Meßaufnehmers unbedingt erforderlich sind.

Die Erfindung sowie weitere vorteilhafte Ausgestaltungen davon werden nun anhand von Ausführungsbeispielen näher erläutert, die in weiteren Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet. Im einzelnen zeigen die Figuren:

Fig. 1a, b zeitlichen Verläufe einer gemessenen Massendurchflußrate, *m'*, bzw. des davon abgeleiteten totalisierten Massendurchflusses, *M'*, sowie korrespondierende zeitliche Verläufe von der dafür vorgegebenen tatsächlichen Meßgröße, $m_{SOLL}$, $M_{SOLL}$;

Fig. 2 Amplitudenverläufe von mit einem symmetrischen Schwingungsmode korrespondierenden Biegeschwingungen und von mit einem antisymmetrischen Schwingungsmode korrespondierenden Biegeschwingungen sowie momentane Ausprägungen von den Biegeschwingungen jeweils entgegenwirkenden Dämpfungskräften;

Fig. 3a, b mit den zeitlichen Verläufen gemäß Fig. 1a bzw. 1b korrespondierende zeitlichen Verläufe einer gemessenen symmetrischen Dämpfung, $D_{II}$, bzw. einer davon abgeleiteten antisymmetrischen Dämpfung, $D_I$;

Fig. 4 ein in eine Rohrleitung einfügbares In-Line-Meßgerät in Prozeßleitung geführte Medien,

Fig. 5 ein Ausführungsbeispiel für einen für das Meßgerät von Fig. 4 geeigneten Meßaufnehmer vom Vibrations-Typ in einer perspektivischen Seitenansicht,

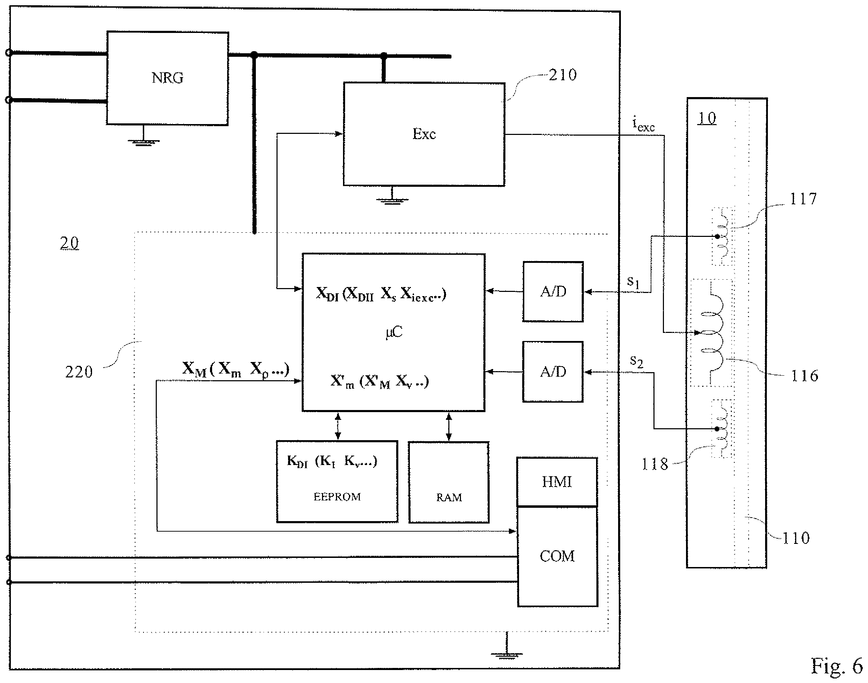

Fig. 6 schematisch nach der Art eines Blockschaltbildes eine Ausgestaltung einer für das In-Line-Meßgerät von Fig. 4 geeigneten Meßgerät-Elektronik

Fig. 7 graphisch mit einem In-Line-Meßgerät gemäß den Fig. 4 experimentell ermittelte Massendurchflußraten; und

Fig. 8 graphisch mit einem In-Line-Meßgerät gemäß den Fig. 4 experimentell ermittelte totaliserte Masendurchflüse.

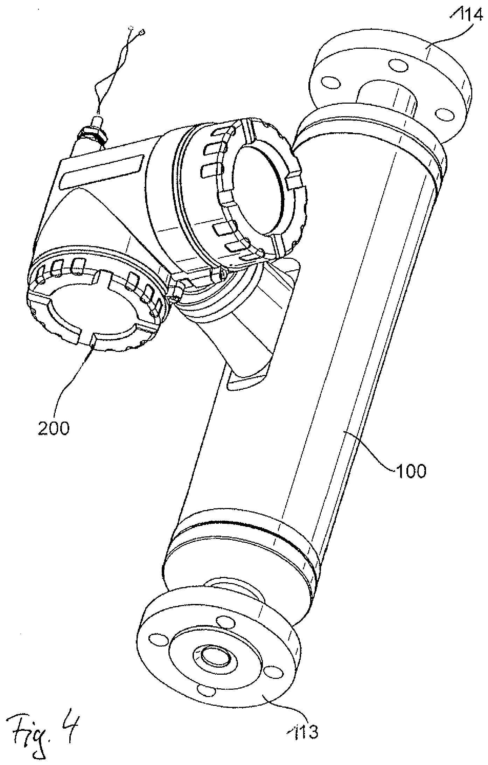

In der Fig. 4 ist ein in eine - hier nicht dargestellte - Prozeßleitung, etwa eine Rohrleitung einer industriellen Anlage, einfügbares, beispielsweise als Coriolis-Massendurchflußmeßgerät, Coriolis-Massendurchfluß-/ Dichtemeßgerät und/oder Coriolis-Massendurchfluß-/Viskositätsmeßgerät, In-Line-Meßgerät dargestellt, das dem Messen und/oder Überwachen wenigstens einer physikalischen Meßgröße von einem in der Prozeßleitung strömenden, insb. zumindest zeitweise zwei- oder mehrphasigen und/oder mit Fremdstoffen beladenen, Medium dient, beispielsweise einer Massendurchflußrate, m, oder einen totalisierten Massedurchfluß, M, einer Dichte, $\rho$, und/oder einer Viskosität, $\eta$. Das, insb. multivariate, In-Line-Meßgerät ist zudem auch für die Verwendung in einem automatisierten Abfüllprozeß geeignet, insb. zum Steuern eines dem Abdosieren einer vorgegebenen Menge eines Mediums in ein Behältnis, wie etwa eine Flasche, eine Glas, eine Dose, einen Becher, eine Ampulle oder dergleichen, dienenden Abfüllvorgangs und/oder zum Ermitteln einer für das Abdosieren einer vorgegebenen Menge und/oder Masse, $M_{SOLL}$, eines Mediums erforderlichen, sich von einem Startzeitpunkt, $t_1 = t_{START}$, eines entsprechenden Abfüllvorganges bis zu einem einem Endzeitpunkt, $t_2 = t_{STOPP}$, desselben Abfüllvorganges erstreckenden Abfülldauer, $\Delta T_M$.

Das In-Line-Meßgerät umfaßt dafür einen über ein Einlaßende sowie ein Auslaßende jeweils an die Prozeßleitung angeschlossenen Meßaufnehmer 10 vom Vibrationstyp, welcher Meßaufnehmer im Betrieb von zu messenden Medium, wie etwa einer niedrigviskosen Flüssigkeit oder einer hochviskosen Paste oder dergleichen, durchströmt ist. Darüber hinaus ist der Meßaufnehmer an eine dem Ansteuern des Meßaufnehmers dienende sowie Primärsignale des Meßaufnehmers 10 verarbeitende, insb. von extern mit elektrischer Energie gespeiste, Meßgerät-Elektronik 20 des In-Line-Meßgeräts elektrisch gekoppelt, die im Betrieb die wenigstens eine Meßgröße repräsentierende Meßwerte liefert. Die Meßgerät-Elektronik 20 ist in einem entsprechenden, insb. schlag- und/oder auch explosionsfest ausgebildeten, gegebenenfalls auch entfernt vom Meßaufnehmer angeordneten Elektronikgehäuse 200 untergebracht und weist eine dem Ansteuern des Meßaufnehmers dienende Treiberschaltung, sowie eine, insb. mittels eines Mikrocomputers gebildete, Meß- und Auswerte-Schaltung zur Generierung, insb. digitaler, Meßwerte [$X_m$, $X_M$, $X_\rho$, $X_\eta$,...] der mittels des In-Line-Meßgeräts zu erfassenden Meßgrößen auf. Zudem sind in der Meßgerät-Elektronik weitere dem Betrieb des In-Line-Meßgeräts dienende Elektronik-Komponenten, wie etwa eine interne Energieversorgungsschaltung NRG, eine Anzeige-und Bedieneinheit HMI etc. vorgesehen.

In vorteilhafter Weise ist die, insb. programmierbare und/oder fernparametrierbare, Meßgerät-Elektronik 20 ferner so ausgelegt, daß sie im Betrieb des In-Line-Meßgeräts mit einer diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Meßgerät-Elektronik 20 beispielsweise mittels einer solchen interne Energieversorgungsschaltung NRG gebildet sein, die im Betrieb von einer im Datenverarbeitungssystem vorgesehen externen Energieversorgung über das vorgenannte Feldbussystem gespeist wird. Für den Fall, daß das In-Line-Meßgerät für eine Ankopplung an ein Feldbus- oder ein anderes Kommunikationssystem vorgesehen ist, weist die Meßgerät-Elektronik 20 eine entsprechende Kommunikations-Schnittstelle COM für eine Datenkommunikation auf, z.B. gemäß einem der eingangs erwähnten industriestandards.

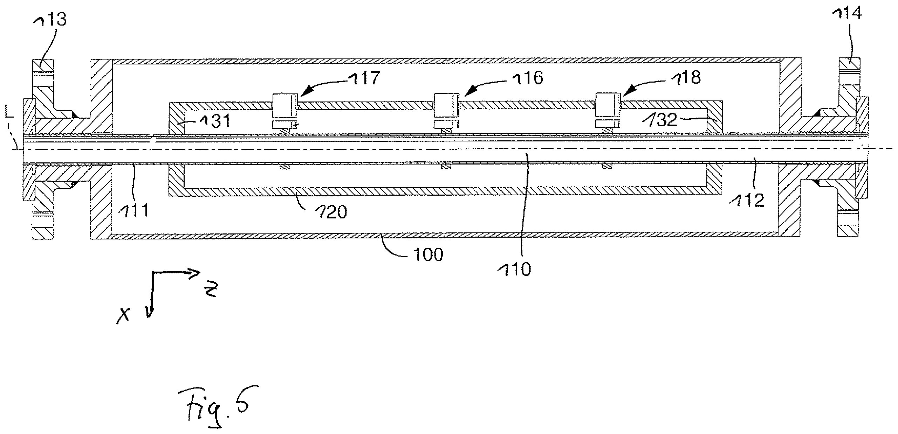

In Fig. 5 ist ein Ausführungsbeispiel für einen für das In-Line-Meßgerät geeigneten Meßaufnehmer 10 vom Vibrationstyp schematisch dargestellt. Der Meßaufnehmer dient dazu, in einem hindurchströmenden Medium mechanische Reaktionskräfte, z.B. massedurchflußabhängige Corioliskräfte, dichteabhängige Trägheitskräfte und/oder viskositätsabhängige Reibungskräfte, zu erzeugen, die sensorisch erfaßbar auf den Meßaufnehmer zurückwirken und insoweit meßbar sind. Abgeleitet von diesen Reaktionskräften können so in der dem Fachmann bekannten Weise z.B. ein Massedurchflußrate, $m$, eine Dichte, $\rho$, und/oder eine Viskosität, $\eta$, oder davon abgeleitete Meßgrößen des Mediums gemessen werden. Der Meßaufnehmer umfaßt dafür ein in einem, beispielsweise im wesentlichen rohr- oder kastenförmigen, Aufnehmer-Gehäuse 100 angeordnetes, die physikalisch-elektrische Konvertierung der wenigstens einen zu erfassenden Meßgröße, wie etwa dem Strömungsparameter Massendurchflußrate, eigentlich bewirkendes Innenteil. Aufnehmer-Gehäuse 100 und Elektronik-Gehäuse 200 können, wie auch in Fig. 4 dargestellt, unter Bildung eines In-Line-Meßgeräts in Kompaktbauweise miteinander starr verbunden sein.

Zum Führen des Mediums umfaßt das Innenteil wenigstens ein - im in den Fig. 5 gezeigten Ausführungsbeispiel einziges im wesentlichen gerades - Meßrohr 10, das im Betrieb vibrieren gelassen und dabei, um eine statische Ruhelage oszillierend, wiederholt elastisch verformt wird. An dieser Stelle sei allerdings darauf hingewiesen, daß - obwohl der Meßaufnehmer im in Fig. 5 gezeigten Ausführungsbeispiel ein einziges gerades Meßrohr aufweist und zumindest insoweit in seinem mechanischen Aufbau wie auch seinem Wirkprinzip im wesentlichen etwa dem in den eingangs erwähnten US-A 48 23 614, US-A 49 62 671, US-B 72 99 699, US-B 70 73 396, US-B 70 40 179, US-B 70 17 424, US-B 72 13 470, US-B 65 57 422, US-B 68 40 109, US-B 66 91 583, US-B 66 51 513, US-B 65 16 674, US- B 63 97 685, US-B 63 30 832, US-A 60 06 609, US-A 59 79 246, US-A 59 45 609, US-A 57 96 012, US-A 57 96 010, US-A 56 91 485, US-A 55 31 126, US-A 54 76 013, US-A 53 98 554, oder US-A 52 91 792 entspricht, - zur Realisierung der Erfindung selbstverständlich auch andere aus dem Stand der Technik bekannte und in der industriellen Meßtechnik etablierte Meßaufnehmer vom Vibrationstyp, insb. auch mit mehr als einem Meßrohr und/oder mit gebogenem Meßrohr, dienen können. Beispielsweise kann das wenigstens eine Meßrohr und insoweit auch eine innerhalb von dessen Lumen verlaufende gedachte Schwerelinie des Meßrohrs dabei zumindest abschnittsweise im wesentlichen S-, $\Omega$-, oder U-förmig oder, wie z.B. in der US-A 52 87 754, US-B 68 60 158, US-B 66 66 098, US-B 72 13 469 bzw. der US-B 73 60 451 gezeigt, zumindest abschnittsweise im wesentlichen V-förmig ausgebildet sein. Beispiele anderer für die Realisierung der Erfindung geeignete Meßrohrformen sind darüberhinaus u.a. in den eingangs erwähnten Stand der Technik beschrieben, wie etwa in der US-A 56 02 345, US-A 57 96 011, US- 6311136, US-B 67 58 102, US-A 57 31 527, US-A 53 01 557, US-A 60 92 429 oder der US-B 69 20 798.

Im Betrieb des Meßaufnehmers wird das Meßrohr 10, wie bei derartigen Meßaufnehmern üblich, zu Biegeschwingungen im sogenannten Nutzmode - beispielsweise bei einer im wesentlichen einer natürlichen Resonanzfrequenz entsprechenden Erregerfrequenz $f_{exc}$ - so angeregt, daß es sich, um eine gedachte - hier zu einer gedachten Längsachse L des Meßaufnehmers, die dessen Einlaß- und Auslaßende imaginär verbindet, im wesentlichen parallele oder auch koinzidente - Biegeschwingungsachse oszillierend, zumindest anteilig im wesentlichen gemäß einer natürlichen Eigenschwingungsform ausbiegt. Zur Minimierung von allfällig auf das Meßrohr 10 wirkenden Störeinflüssen wie auch zur Reduzierung von seitens des Meßaufnehmers allfällig an die angeschlossene Prozeßleitung abgegebener Schwingungsenergie ist im Meßaufnehmer des weiteren ein Gegenschwinger 120 vorgesehen. Dieser ist, wie auch in Fig. 5 gezeigt, vom Meßrohr 110 seitlich beabstandet im Meßaufnehmer angeordnet und unter Bildung einer - praktisch ein Einlaßende des Meßrohrs 10 definierenden - ersten Kopplungszone 111# einlaßseitig und der unter Bildung einer - praktisch ein Auslaßende des Meßrohrs 110 definierenden - zweiten Kopplungszone 112# auslaßseitig jeweils am Meßrohr 110 fixiert. Der - im gezeigten Ausführungsbeispiel im wesentlichen parallel zum Meßrohr 110 verlaufende, ggf. auch koaxial zu diesem angeordnete - Gegenschwinger 120 kann beispielsweise rohrförmig oder auch im wesentlichen kastenförmig. auch ausgeführt sein. Im hier gezeigten Ausführungsbeispiel ist der Gegenschwinger 120 mittels wenigstens eines einlaßseitigen ersten Kopplers 131 am Einlaßende 111# des Meßrohrs 110 und mittels wenigstens eines auslaßseitigen, insb. zum Koppler 131 im wesentlichen identischen, zweiten Kopplers 132 am Auslaßende 112# des Meßrohrs 110 gehaltert. Als Koppler 131, 132 können hierbei z.B. einfache Knotenplatten dienen, die in entsprechender Weise einlaßseitig und auslaßseitig jeweils an Meßrohr 110 und Gegenschwinger 120 befestigt sind, etwa durch Aufpressen und/oder Auflöten entsprechender Metallkörper gemäß der eingangs erwähnten US-A 60 47 457 oder US-B 61 68 069.

Wie in der Fig. 5 schematisch dargestellt, ist das Meßrohr 110 ferner über ein einlaßseitig im Bereich der ersten Kopplungszone 111# einmündendes gerades erstes Verbindungsrohrstück 11 1 und über ein auslaßseitig im Bereich der zweiten Kopplungszone 112# einmündendes, insb. zum ersten Verbindungsrohrstück 111 im wesentlichen identisches, gerades zweites Verbindungsrohrstück 112 entsprechend an die das Medium zu- bzw. abführende - hier nicht dargestellte - Prozeßleitung angeschlossen, wobei ein Einlaßende des einlaßseitigen Verbindungsrohrstück 111 praktisch das Einlaßende des Meßaufnehmers und ein Auslaßende des auslaßseitigen Verbindungsrohrstück 112 das Auslaßende des Meßaufnehmers bilden. In vorteilhafter Weise können das Meßrohr 110 und zusammen mit den beiden Verbindungsrohrstücken 111, 112 einstückig ausgeführt sein, so daß zu deren Herstellung z.B. ein einziges rohrförmiges Halbzeug dienen kann. Anstelle dessen, daß Meßrohr 110, Einlaßrohrstück 111 und Auslaßrohrstück 112 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Zur Herstellung des Meßrohrs 10 kann im übrigen praktisch jedes der für solche Meßaufnehmer üblichen Materialien, wie z.B. Stahl, Hastelloy, Titan, Zirkonium, Tantal etc., verwendet werden.

Wie aus der Zusammenschau der Fig. 4 und 5 weiterhin ersichtlich, ist das, insb. im Vergleich zum Meßrohr 110 biege- und torsionssteifes, Wandlergehäuse 100, insb. starr, an einem bezüglich der ersten Kopplungszone 111# distalen Einlaßende des einlaßseitigen Verbindungsrohrstücks 111 sowie an einem bezüglich der zweiten Kopplungszone 121# distalen Auslaßende des auslaßseitigen Verbindungsrohrstück 112 fixiert. Insoweit ist also das gesamte Innenteil nicht nur vom Wandlergehäuse 100 vollständig umhüllt, sondern infolge seiner Eigenmasse und der Federwirkung beider Verbindungsrohrstücke 111, 112 im Aufnehmer-Gehäuse 100 auch schwingfähig gehalten. Bei dem in der Fig. 5 gezeigten Ausführungsbeispiel sind die beiden im wesentlichen geraden Verbindungsrohrstücke 111, 112 so zueinander auszurichten, daß sie im wesentlichen parallel zur gedachten Längsachse L bzw. zur gedachten Schwingungsachse der Biegeschwingungen des Meßrohrs verlaufen bzw. daß sie sowohl zur Längsachse L als auch zueinander im wesentlichen fluchten. Da die beiden Verbindungsrohrstücke 111, 112 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet. Zusätzlich zur Aufnahme des Innenteils kann das Wandlergehäuse 100 zudem auch dazu dienen, das Elektronikgehäuse 200 des In-line-Meßgeräts mit darin untergebrachter Meßgerät-Elektronik zu haltern.

Für den Fall, daß der Meßaufnehmer lösbaren mit der, beispielsweise als metallische Rohrleitung ausgebildeten, Prozeßleitung zu montieren ist, ist ferner dem einlaßseitigen Verbindungsrohrstück 111 an seinem Einlaßende ein erster Anschlußflansch 113 des Meßaufnehmers und dem auslaßseitigen Verbindungsrohrstück 112 an einem Auslaßende ein zweiter Anschlußflansch 114 des Meßaufnehmers angeformt. Die Anschlußflansche 113, 114 können dabei, wie bei Meßaufnehmern der beschriebenen Art durchaus üblich auch zumindest teilweise endseitig in das Wandlergehäuse 100 integriert sein, Falls erforderlich können die Verbindungsrohrstücke 111, 112 im übrigen aber auch direkt mit der Prozeßleitung, z.B. mittels Schweißen oder Hartlötung, verbunden werden.

Zum Anregen mechanischer Schwingungen des Meßrohrs 110, insb. den Biegeschwingungen im Nutzmode, umfaßt der Meßaufnehmer ferner eine, insb. elektrodynamische, Erregeranordnung 116. Diese dient dazu - angesteuert von einem von der erwähnten Treiber-Schaltung 210 der Meßgerät-Elektronik 20 gelieferten und, gegebenenfalls im Zusammenspiel mit deren erwähnter Auswerte-Schaltung 220, entsprechend konditionierten Erregersignal, z.B. mit einem periodisch veränderlichen und/oder eingeprägten Strom bzw. einer mit periodisch veränderlichen und/oder eingeprägten Spannung -, von der Treiber-Elektronik 210 eingespeiste elektrische Erregerenergie bzw. -leistung $E_{exc}$ in eine auf das Meßrohr 110, z.B. pulsförmig oder harmonisch, einwirkende und dieses in der vorbeschriebenen Weise auslenkende Erregerkraft $F_{exc}$ umzuwandeln, Im hier gezeigten Ausführungsbeispiel ist die Erregeranordnung ferner so ausgebildet, daß eine gedachten Wirkungslinie der im Betrieb von der Erregeranordnung 116 unter dem Einfluß des Erregersignals $i_{exc}$ auf das Meßrohr 110 ausgeübten Erregerkraft $F_{exc}$ im wesentlichen entlang einer gedachten Mittelebene bzw. -achse des Meßrohrs verläuft, die zur Meßrohrlängsachse L senkrecht ist. Im hier gezeigten Ausführungsbeispiel entspricht die Mittelebene - wie bei Meßaufnehmern der in Rede stehenden Art durchaus üblich - jener Symmetrieebene des jeweiligen Meßrohrs bzw. auch des gesamten Meßaufnehmers, in weicher der durch die Mitte des Meßrohrs verlaufende Querschnitt liegt, und welche Symmetrieebene somit koplanar zu diesem Querschnitt ist.

Für das Einstellen der Erregerenergie $E_{exc}$ geeignete Treiber-Schaltungen sind dem Fachmann hinlänglich bekannt und z.B. in der US-A 47 77 833, der US-A 48 01 897, der 48 79 911 oder der US-A 50 09 109 gezeigt. Die Erregerkraft $F_{exc}$ kann, wie bei derartigen Meßaufnehmern üblich, bidirektional oder unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 116 kann z.B. ein etablierter elektrodynamischer Schwingungserreger dienen, der mittels einer am Gegenschwinger 120 befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am Meßrohr 110 fixiert ist, gebildet ist. Weitere Beispiele für das erfindungsgemäße In-Line-Meßgerät geeigneter Erregeranordnungen für Schwingungen des wenigstens einen Meßrohrs sind u.a. auch in den eingangs erwähnten US-B 70 17 424, US-B 68 40 109, US-B 68 05 012, US-B 65 57 422, US-A 60 92 429, US-A 60 06 609, US-A 48 23 614, US-B 62 23 605 oder US-A 55 31 126 gezeigt.

Gemäß einer weiteren Ausgestaltung der Erfindung ist das wenigstens eine Meßrohr im Betrieb mittels der Erregeranordnung 116 zumindest zeitweise in einem Nutzmode angeregt, in dem es zumindest anteilig - insb. überwiegend oder ausschließlich - Biegeschwingungen um die Einlaß- und Auslaßende des Meßrohrs imaginär miteinander verbindende gedachte Schwingungsachse ausführt, beispielsweise mit einer einzigen und/oder einer niedrigsten seiner Resonanzfrequenzen. Die Biegeschwingungen des Meßrohrs weisen dabei im Bereich der das einlaßseitige Ende des Meßrohrs definierenden einlaßseitigen Kopplungszone 111# einen einlaßseitigen Schwingungsknoten und im Bereich der das auslaßseitige Ende des Meßrohrs definierenden auslaßseitigen Kopplungszone 112# einen auslaßseitigen Schwingungsknoten auf. Bei dem in Fig. 5 gezeigten Ausführungsbeispiel führt das Meßrohr 110 die Biegeschwingungen relativ zu Gegenschwinger 120 und Längsachse L aus. Im Falle einer differentiell auf Meßrohr und Gegenschwinger wirkenden Erregeranordnung wird zwangsweise auch der Gegenschwinger 120 zu simultanen - hier bezüglich der Biegeschwingungen des Meßrohrs im wesentlichen komplanaren Biegeschwingungen angeregt, und zwar so, daß er zumindest anteilig außerphasig, insb. im wesentlichen gegenphasig, zum im Nutzmode schwingenden Meßrohr 110 oszilliert. Im besonderen sind Meßrohr 110 und Gegenschwinger120 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Nach einer weiteren Ausgestaltung der Erfindung, ist die Erreger- oder auch Nutzmodefrequenz, $f_{exc}$, dabei so eingestellt, daß sie möglichst genau einer natürlichen Eigenfrequenz von Biegeschwingungen des Meßrohrs 110 entspricht, beispielsweise einer einem Biegeschwingungsgrundmode entsprechenden kleinsten Eigenfrequenz. Für den betriebsmäßig vorgesehenen Fall, daß das Medium in der Prozeßleitung strömt und somit der Massedurchfluß bzw. die Massendurchflußrate, $m$, von Null verschieden ist, werden mittels des in vorbeschriebener

Weise vibrierenden Meßrohrs 110 im hindurchströmenden Medium auch Corioliskräfte induziert. Diese wiederum wirken auf das Meßrohr 110 zurück und bewirken so eine zusätzliche, sensorisch erfaßbare Verformung desselben, und zwar im wesentlichen gemäß einer natürlichen Eigenschwingungsform von höherer modaler Ordnung als die als Nutzmode dienende Eigenschwingung. Eine momentane Ausprägung dieses sogenannten, dem angeregten Nutzmode gleichfrequent überlagerten Coriolismodes ist dabei, insb. hinsichtlich ihrer Amplituden, auch von der momentanen Massedurchflußrate, $m$, abhängig. Als als Coriolismode dienende Eigenschwingungsform kann, wie bei derartigen Meßaufnehmern mit geradem Meßrohr üblich, z.B. die Eigenschwingungsform eines zum Nutzmode im wesentlichen koplanaren anti-symmetrischen Biegeschwingungsmodes sein.

Da natürliche Eigenfrequenzen solcher lateralen Biege-Schwingungsmoden von Meßrohren und insoweit auch die darauf abgestellte Erregerfrequenz $f_{exc}$ bekanntlich in besonderem Maße auch von der Dichte, $\rho$, des Mediums abhängig sind, kann mittels des In-Line-Meßgerät ohne weiteres auch die Dichte, $\rho$, gemessen werden. Nach einer weiteren Ausgestaltung der Erfindung wird das Meßrohr 110 zum Erzeugen von massendurchflußabhängigen Corioliskräften im strömenden Medium und/oder dichteabhängigen Trägheitskräften daher zumindest zeitweise mit einer Erregerfrequenz, $f_{exc}$, angeregt, die möglichst genau einer niedrigsten natürlichen Eigen- oder Resonanzfrequenz aller Biegeschwingungmoden des Meßrohrs 110 entspricht, so daß also das im Nutzmode schwingende, jedoch nicht vom Fluid durchströmte Meßrohr 110 bezüglich der zur Meßrohrlängsachse L senkrechten Mittelebene bzw. -achse im wesentlichen symmetrisch ausgebogen wird und dabei einen einzigen Schwingungsbauch aufweist. Zusätzlich zu den lateralen Bieg-Schwingungen kann das hier gezeigte Innenteil, beispielsweise auch zum Erzeugen von viskositätsabhängigen Scherkräften im strömenden Medium, zumindest zeitweise in einem Torsions-Schwingungsmode betrieben werden, und zwar so, daß das Meßrohr 110 mit einer natürlichen Torsions-Eigenfrequenz um eine mit der Meßrohrlängsachse L parallel verlaufenden oder koinzidierenden Torsions-Schwingungsachse im wesentlichen gemäß einer natürlichen Torsionsschwingungsform oszillierend wiederkehrend verdrillt wird, vgl. hierzu z.B. auch die US-A 52 53 533, die US-A 60 06 609, US-B 68 40 109, US-B 70 17 424 oder die EP-A 1 158 289. Das Anregen der Torsionsschwingungen kann hierbei auch mittels des die Biegschwingungen treibenden einen Schwingungserregers erfolgend, und zwar sowohl zeitlich versetzt zu den Biegeschwingungen des Nutzmodes oder aber, insb. bei voneinander unterscheidbaren Schwingungsfrequenzen, auch simultan zu den Biege-Schwingungen im Nutzmode, etwa gemäß der in der US-B 68 40 109 oder US-B 70 17 424 vorgeschlagenen Verfahren.

Zum Vibrierenlassen des Meßrohrs 110 wird die Erregeranordnung 116, wie bereits angedeutet, mittels eines gleichfalls oszillierenden Erregersignals $i_{exc}$ von einstellbarer Erregerstromamplitude und von einstellbarer Erregerfrequenz, $f_{exc}$, gespeist, so daß die Erregerspule des - hier einzigen am Meßrohr angreifenden Schwingungserregers - im Betrieb von einem entsprechenden Erregerstrom durchflossen ist und in entsprechender Weise das zum Bewegen des Meßrohrs erforderliche Magnetfeld erzeugt wird. Das Erregersignal bzw. dessen Erregerstrom $i_{exc}$ kann z.B. harmonisch, mehrfrequent oder auch rechteckförmig sein. Die Erregerfrequenz, $f_{exc}$, des zum Aufrechterhalten der Biegeschwingungen des Meßrohrs 110 erforderlichen Erregerstrom $i_{exc}$ kann beim im Ausführungsbeispiel gezeigten Meßaufnehmer in vorteilhafter Weise so gewählt und eingestellt sein, daß das lateral schwingende Meßrohr 110 im wesentlichen in einem Biegeschwingungsgrundmode mit einem einzigen Schwingungsbauch oszilliert.

Die Treiberschaltung kann z.B. als Phasen-Regelschleife (PLL) ausgebildet sein, die in der dem Fachmann bekannten Weise dazu verwendet wird, anhand einer Phasendifferenz, gemessen zwischen wenigstens einem der Schwingungsmeßsignale $s_1$, $s_2$ und dem einzustellenden bzw. dem momentan gemessenen Erregerstrom des Erregersignals $i_{exc}$, dessen Erregerfrequenz, $f_{exc}$, ständig auf die momentane Eigenfrequenz des gewünschten Nutzmodes abzugleichen. Der Aufbau und die Verwendung solcher Phasenregel-Schleifen zum Betreiben von Meßrohren auf einer ihrer mechanischen Eigenfrequenzen ist z.B. in der US-A 01 897 ausführlich beschrieben. Selbstverständlich können auch andere, dem Fachmann bekannte Treiberschaltungen verwendet werden, beispielsweise auch gemäß der dem eingangs erwähnten Stand der Technik, etwa der US-A 50 24 104, US-A 50 50 439, US-A 58 04 741, US-A 58 69 770, US-A 60 73 495 oder US-A 63 111 36. Ferner sei hinsichtlich einer Verwendung solcher Treiberschaltungen für Meßaufnehmer vom Vibrationstyp auf die Meßumformer der Serie "PROMASS 83" verwiesen, wie sie von der Anmelderin beispielsweise in Verbindung mit Meßaufnehmern der Serie "PROMASS I" angeboten werden. Deren Treiberschaltung ist beispielsweise so ausgeführt, daß die lateralen Biegeschwingungen im Nutzmode auf eine konstante, also auch von der Dichte, $\rho$, weitgehend unabhängige Amplitude geregelt werden.

Zum Erfassen von Schwingungen des Meßrohrs 110 weist der Meßaufnehmer ferner eine Sensoranordnung auf, die mittels wenigstens eines - hier einlaßseitig des Meßrohrs angeordneten - Schwingungssensor 117 zum Erzeugen wenigstens eines Vibrationen, insb. Biegeschwingungen, des Meßrohrs 110 repräsentierenden, insoweit als ein erstes Schwingungsmeßsignal $s_1$ dienenden Primärsignals des Meßaufnehmers gebildet ist. Wie bei In-Line-Meßgeräten der in Rede stehenden Art üblich, kann der Meßaufnehmer ferner wenigstens einen - beispielsweise auslaßseitig am Meßrohrs plazierten und/oder zum Schwingungssensor 117 im wesentlichen baugleichen - zusätzlichen zweiten Schwingungssensor 118 aufweisen, der wenigstens ein weiteres, beispielsweise auslaßseitige, Vibrationen des wenigstens einen Meßrohrs 110 repräsentierendes, insoweit also als ein zweites Schwingungsmeßsignal $s_2$ ausgebildeten Primärsignal des Meßaufnehmers liefert. Die beiden Schwingungssensoren 117, 118 sind entlang des Meßrohrs 110 voneinander beabstandet, insb. jeweils in einem gleichen Abstand von der Mittelebene des Meßrohrs 110, so im Meßaufnehmer 110 angeordnet, daß mittels der Sensoranordnung sowohl einlaß-seitige als auch auslaß-seitige Vibrationen des Meßrohrs 10 örtlich erfaßt und in die entsprechenden Schwingungsmeßsignale $s_1$ bzw. $s_2$ umgewandelt werden. Im hier gezeigten Ausführungsbeispiel sind der erste Schwingungssensor 117 einlaßseitig und der zweite Schwingungssensor 118 auslaßseitig am wenigstens einen Meßrohr angeordnet, und zwar vom wenigstens einen Schwingungserreger gleichweit beabstandet wie der erste Schwingungssensor 117.

Als Schwingungssensoren 117, 118 können z.B. etablierte, die Schwingungen relativ, insb. differentiell, zum Gegenschwinger messende elektrodynamische Geschwindigkeitssensoren verwendet werden, etwa gemäß der eingangs erwähnten US-B 70 17 424, US-B 68 40 109, US-A 47 77 833 oder der nicht vorveröffentlichten DE102007062397. Falls erforderlich, können ferner in der dem Fachmann bekannten Weise noch weitere für die Messung und/oder den Betrieb des Meßaufnehmers benötigte Sensoren, wie z.B. am Gegenschwinger 120 und/oder am Wandlergehäuse 100 angeordnete zusätzliche Beschleunigungssensoren, vgl. hierzu auch die US-A 57 36 653, oder z.B. auch am Meßrohr 110, am Gegenschwinger 120 und/oder am Wandlergehäuse 100 angeordnete Temperatursensoren und/oder Dehnungsmeßstreifen vorgesehen sein, vgl. hierzu auch die US-A 47 68 384, die US-B 70 40 179 oder die WO-A 00/102816.

Beide von der Sensoranordnung gelieferten Schwingungsmeßsignale $s_1$, $s_2$, die jeweils eine einer momentanen Schwingfrequenz, $f_{exc}$, des im Nutzmode schwingenden Meßrohrs 110 entsprechende Signalfrequenz aufweisen, sind, wie in Fig. 5 gezeigt, der Meßgerät-Elektronik 20 zugeführt, wo sie in der dem Fachmann bekannten Weise mittels einer entsprechenden Meß- und Auswerteschaltung 220 zunächst vorverarbeitet, insb. vorverstärkt, gefiltert und digitalisiert werden, um anschließend geeignet ausgewertet werden zu können. Als Meß- und Auswerteschaltung 220 können hierbei in herkömmlichen Coriolis-Massedurchfluß-Meßgeräten zwecks Ermittlung von Massendurchflußraten und/oder totalisierten Massendurchflüssen etc. bereits eingesetzte und etablierte programmierbare Schaltungen weiter verwendet werden, beispielsweise auch solche gemäß den eingangs erwähnten Stand der Technik. Nach einer weiteren Ausgestaltung der Erfindung ist die Meß- und Auswerteschaltung 220, wie in Fig. 5 schematisch dargestellt, dementsprechend auch mittels eines in der Meßgerät-Elektronik 20 vorgesehenen, beispielsweise mittels eines digitalen Signalprozessors (DSP) realisierten, Mikrocomputers $\mu$C und mittels in diesen entsprechend implementierter und darin ablaufender Programm-Codes realisiert. Die Programm-Codes können z.B. in einem nicht-flüchtigen Speicher EEPROM des Mikrocomputers persistent gespeichert sein und beim Starten desselben in einen, z.B. im Mikrocomputer integrierten, flüchtigen Speicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Schwingungsmeßsignale $s_1$, $s_2$, wie bereits angedeutet, für eine Verarbeitung im Mikrocomputer mittels entsprechender Analog-zu-digitalWandler A/D der Meß- und Auswerteschaltung 220 in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

Die Meß- und Auswerteschaltung 220 dient gemäß einer Ausgestaltung der Erfindung im besonderen dazu, anhand einer zwischen den bei anteilig in Nutz- und Coriolismode schwingendem Meßrohr 110 generierten Schwingungsmeßsignalen $s_1$, $s_2$ detektierten Phasendifferenz wiederkehrend einen Massendurchfluß-Meßwert $X_m$ zu ermitteln, der die zu messende Massendurchflußrate, $m$, des durch den Meßaufnehmer geführten Mediums möglichst genau repräsentiert. Alternativ oder in Ergänzung dazu dient die Meß- und Auswerteschaltung, beispielsweise abgeleitet von einem aktuellen Massendurchfluß-Wert $X_m$ und/oder einer Vielzahl von vorab sequentiell erzeugten und/oder Massendurchfluß-Meßwerte, einen Masse-Meßwert $X_M$ zu ermitteln, der einen totalisierten Massendurchfluß, $M$, momentan repräsentiert, der wiederum einer zu messenden Masse des Mediums entspricht, die während eines Zeitintervalls, wie etwa der eingangs erwähnten Abfülldauer, $\Delta T_M$, insgesamt durch den Meßaufnehmer hindurchgeströmt ist. Das für die Ermittlung des Masse-Meßwerts $X_M$ maßgebliche Zeitintervall kann beispielsweise seitens des Anwenders initial vorgegebenen und/oder im Betrieb wiederkehrend ermittelt und so an sich ändernde Prozeßbedingungen, wie etwa variierende Verschlußzeiten von mittels des In-Line-Meßgeräts gesteuerten Ventilen und/oder variierenden Eigenschaften des zu messenden Mediums und/oder veränderte Gebindegrößen der jeweils zu befüllenden Behältnisse etc., entsprechend angepaßt werden. Bei Verwendung des In-Line-Meßgeräts zum Steuern von Abfüllvorgängen der eingangs genannten Art kann der aktuelle Masse-Meßwert $X_M$ jeweils mit der für den jeweiligen Abfüllprozeß vorgegebenen, in das momentane Behältnis abzudosierenden Menge bzw. Masse, $M_{SOLL}$, verglichen werden, um bei daraufhin festgestelltem Erreichen dieser Vorgabe, $M_{SOLL}$, ein den Abfüllvorgang in das momentane Behältnis entsprechend beendendes Steuerkommando für ein den Mediumsstrom steuerndes Ventil zu veranlassen.

Des weiteren kann die Meß- Auswerteschaltung auch dazu dienen, abgeleitet von einer, beispielsweise anhand wenigstens eines der Schwingungsmeßsignale $s_1$, $s_2$, gemessenen Schwingungsfrequenz von lateralen Biegeschwingungen des wenigstens einen Meßrohrs, beispielsweise auch denen im Nutzmode, einen Dichte-Meßwert $X_\rho$ zu generieren, der eine zu messende Dichte, $\rho$, des Mediums momentan repräsentiert. Ferner kann die Meß- und Auswerteschaltung wie bei In-Line-Meßgeräten der in Rede stehenden Art durchaus üblich ggf. auch dazu verwendet werden, abgeleitet vom Treibersignal $i_{exc}$, das bekanntlich auch als ein Maß für eine scheinbare Viskosität oder auch ein Viskositäts-Dichte-Produkt des im Meßrohr geführten Mediums dienen kann, einen Viskositäts-Meßwert $X_\eta$ zu ermitteln, der eine Viskosität des Mediums momentan repräsentiert, vgl. hierzu auch die die US-B 70 17 424, die US-B 68 40 109 oder die US-B 66 51 513. Es ist hierbei für den Fachmann ohne weiteres erkennbar, daß das In-Line-Meßgerät die einzelnen, üblicherweise periodisch bzw. mit einer fest vorgegebenen Aktualisierungsrate, wiederkehrend ermittelten, gegebenenfalls mittels der Anzeige-und Bedieneinheit HMI vor Ort angezeigten und/oder in einem der erwähnten Speicher EEPROM bzw. RAM zwischengespeicherte, Meßwerte $[X_m, X_M, X_\rho, X_\eta...]$ für die verschiedenen primären Meßgrößen $[m, M, \rho, \eta...]$ sowohl jeweils in einem gemeinsamem Meßzyklus, also mit einer gleichen Aktualisierungsrate als auch ggf. mit unterschiedlichen Aktualisierungsraten ermitteln kann, Beispielsweise erfordert eine hochgenaue Messung der zumeist erheblich variierenden Massedurchflußrate, m, bzw. des davon abgeleiteten totalisierten Massendurchflusses, M, üblicherweise eine sehr niedrige Abtastzeit, $T_A$, bzw. eine sehr hohe, insb. auch während eines sich über mehrere einzelne Meßzyklen erstreckenden Zeitraums, $n\,T_A$, im wesentlichen konstante, Aktualisierungsrate, $f_A$ = $1/T_A$, während die im Vergleich dazu über einen längeren Zeitraum zumeist eher wenig veränderliche Dichte, $\rho$, und/oder Viskosität, $\eta$, des Mediums ggf. in größeren Zeitabständen aktualisiert werden kann. Des weiteren kann ohne weiteres vorausgesetzt werden, daß mittels der Meßgerät-Elektronik ermittelte Meßwerte in der Meßgerät-Elektronik zumindest temporär auch zwischengespeichert, beispielsweise im erwähnten EEPROM-Speicher und/oder RAM-Speicher, und so für nachfolgende Verwendungen ausreichend lange vorgehalten werden können.

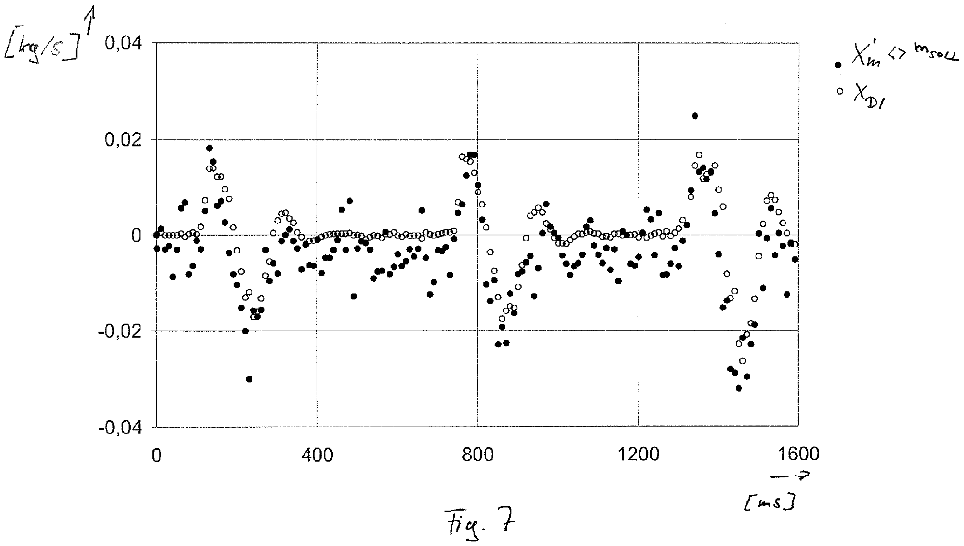

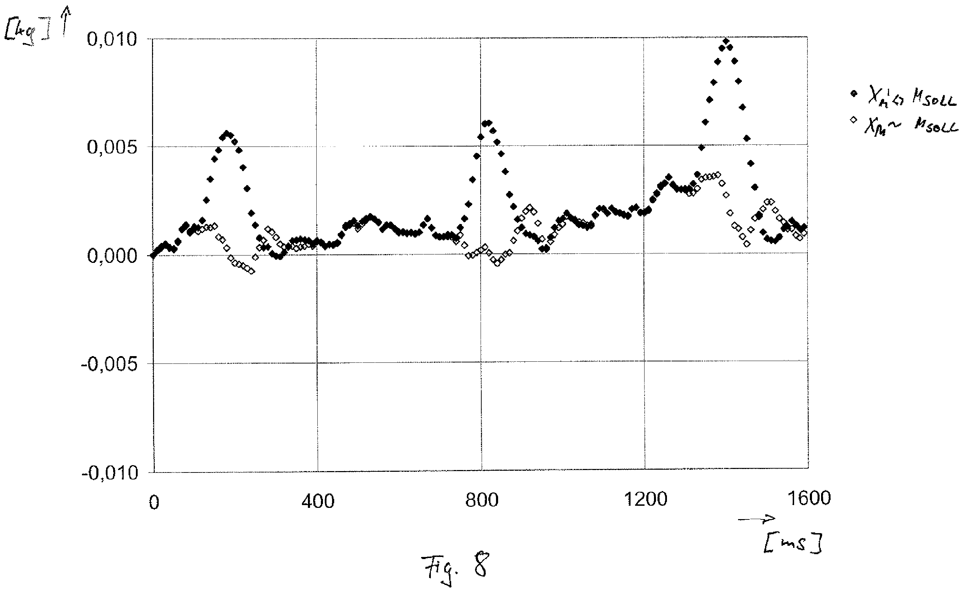

Wie bereits mehrfach erwähnt, können, besonders bei Vorliegen eines zwei- oder mehrphasigen bzw. mit Fremdstoffen, wie etwa Gasblasen oder Feststoffpartikel, beladenen und/oder eines in erheblichem Maße inhomogenem Mediums, die in herkömmlicher Weise ermittelten Meßwerte von In-Line-Meßgeräten der in Rede stehenden Art gelegentlich erhebliche Ungenauigkeiten infolge von asymmetrischen Dämpfungen von Schwingungen des Meßrohrs und den damit einhergehenden Nullpunktfehlern infolge schwankender Dämpfung - hier antisymmetrischer - Biegeschwingungen im Coriolismode unterliegen. Demgemäß sind solche auf konventionelle Weise - also ohne Berücksichtigung solcher vom Medium induzierter asymmetrischer Dämpfungen - generierte Meßwerte $[X'_m, X'_M,...]$, besonders auch der als primärer Meßwert solcher In-Line-Meßgeräte ausgegebene Massendurchfluß-Meßwert bzw. der Masse-Meßwert, entsprechend zu korrigieren, um die jeweiligen endgültigen primären Meßwerte $[X_m, X_M,...]$ mit einer für In-Line-Meßgeräte der in Rede stehenden Art angestrebten hohen Meßgenauigkeit tatsächlich zu erzielen. Ein möglicher zeitlicher Verlauf des für die Ermittlung des Massendurchfluß-Meßwerts $X_m$ relevanten Nullpunkts, also des bei tatsächlich nicht fließendem Medium, $m_{SOLL}$ = 0, ermittelten nicht korrigierten und insoweit provisorischen Masse-Meßwerts $X'_m$, unter Einfluß von durch den Meßaufnehmer hindurchströmenden Inhomogenitäten - aufgenommen an mit einem In-Line-Meßgerät vom Typ "PROMASS 83 I DN 50" - ist exemplarisch in Fig. 7 aufgezeigt, während Fig. 8 einen mit demselben In-Line-Meßgerät aufgenommenen - hier mit dem Durchgang von insgesamt drei zeitlich versetzen Gasblasen korrespondierenden - zeitlichen Verlauf des für die Ermittlung des Masse-Meßwerts $X_M$ relevanten Nullpunkts, also des bei tatsächlich nicht fließendem Medium, $M_{SOLL}$ = 0, ermittelten provisorischen Masse-Meßwerts $X'_M$, zeigt.

Beim erfindungsgemäßen In-Line-Meßgerät ist daher ferner vorgesehen, daß die Meß- und Auswerteschaltung 220 der Meßgerät-Elektronik 20 im Betrieb zumindest zeitweise einen Dämpfungswert $X_{DI}$ erster Art ermittelt - ggf. auch intern speichert - der eine von im Meßrohr geführtem Medium induzierte Dämpfung von - hier bezüglich der gedachten Mittelebene des wenigstens Meßrohrs antisymmetrischen - Vibrationen des wenigstens einen Meßrohrs im Coriolismode und/oder eine zeitliche Änderung einer Dämpfung von Vibrationen des wenigstens einen Meßrohrs momentan repräsentiert. Die vom Dämpfungswert $X_{DI}$ repräsentierte Dämpfung der - hier antisymmetrischen - Vibrationen des wenigstens einen Meßrohrs im Coriolismode - im folgenden kurz "Coriolismode-Dämpfung" - kann beispielsweise infolge einer von Inhomogenitäten innerhalb des im wenigstens eine Meßrohrs geführten Mediums, wie etwa in einer Flüssigkeit oder einer Paste mitgeführte Gasblasen und/oder Feststoffpartikel etc., insb. auch infolge einer sich zeitlich ändernden räumlichen Verteilung der Inhomogenitäten innerhalb des Meßrohrs, induziert sein.

Als Informationsbasis für den Dämpfungswert $X_{DI}$ erster Art können hierbei beispielsweise eines oder auch mehrere der von der Sensoranordnung gelieferten Schwingungsmeßsignale $s_1$, $s_2$ und/oder das wenigstens eine Erregersignal $i_{exc}$ dienen. Alternativ oder in Ergänzung dazu können auch mit den Signalen korrespondierende interne Meß- und/oder Betriebsdaten zur Ermittlung des Dämpfungswert $X_{DI}$ erster Art verwendet werden, wie etwa das Treibersignal $i_{exc}$ an momentane Schwingungseigenschaften des Meßaufnehmers 10 entsprechend anpassende aktuelle Einstellwerte der Treiberschaltung 210, Ein mit dem zeitlichen Verlauf des Nullpunkts gemäß Fig. 7 korrespondierender - ebenfalls mittels des In-Line-Meßgeräts vom Typ "PROMASS 83 I DN 50" experimentell ermittelter - zeitlicher Verlauf des Dämpfungsmeßwerts $X_{DI}$ erster Art ist passend synchronisiert in Fig. 7 gezeigt.

Für den vorbeschriebenen Fall, daß die Meßgerät-Elektronik 20 wiederkehrend einen Massendurchfluß-Meßwert $X_m$ erzeugt, kann die Korrektur des provisorischen Massendurchfluß-Meßwerts $X'_m$ durch eine entsprechend Umsetzung der Formel:

$$X_m = X'_m - K_1 \cdot \frac{X_{DI}}{T_A} \quad (1)$$

in der Meßgerät-Elektronik auf sehr einfache Weise realisiert werden. Für den Fall, daß die Meßgerät-Elektronik - alternativ oder in Ergänzung zur Ausgabe des Massendurchfluß-Meßwerts $X_m$ als primären Meßwert - einen wiederkehrend aktualisierten Masse-Meßwert $X_M$ als primären Meßwert der In-Line-Meßgeräts ermittelt, kann dies mittels der Meß- und Auswerteschaltung z.B. durch numerisches Lösen einer der Beziehungen:

$$X_M = \sum_{t1}^{t2} \left( X'_m \cdot T_A - K_1 \cdot X_{DI} \right) = X'_M - K_1 \cdot X_{DI} = \sum_{t1}^{t2} \left( X_m \cdot T_A \right) \quad (2)$$

erfolgen, insoweit also wahlweise unter Verwendung des provisorischen Massendurchfluß-Meßwerts $X'_m$ bzw. des provisorischen Masse-Meßwerts $X'_M$ oder durch einfache Aufintegration jeweils zuvor ermittelter korrekter Massendurchfluß-Meßwert $X_m$. Letzterer Fall birgt dabei u.a. den Vorteil, daß der aktuelle Masse-Meßwert stets auch der korrekte Masse-Meßwert $X_M$ und infolgedessen besonders gut als Steuergröße für eine hochpräzise Abdosierung geeignet ist. Der hierbei verwendete Meßgerätparameter $K_1$ ist eine vom tatsächlichen Aufbau des Meßaufnehmers abhängige, insb. auch dessen Schwingungsverhalten bei vom Medium induzierter asymmetrischer Dämpfung bzw. deren Einfluß auf den Nullpunkt des In-Line-Meßgeräts entsprechend repräsentierende, Kennzahl des In-Line-Meßgeräts, die beispielsweise während einer Naß-Kalibration des In-Line-Meßgeräts, also bei Beaufschlagung des Meßaufnehmers mit einem Medium von bekannter und/oder eingeprägter Massendurchflußrate, $m \rightarrow m_{SOLL}$, und bekannten Eigenschaften, wie Dichte, $\rho$, und Viskosität, $\eta$, etc., experimentell ermittelt und/oder im Dialog mit einem mit dem In-Line-Meßgerät, beispielsweise via Anzeige-und Bedieneinheit HMI, interagierenden Anwender passend bestimmt werden kann, und zwar in der Weise das eine Abweichung des jeweils zu ermittelnden primären Meßwerts ($X_m$, $X_M$) von dem dafür momentan vorgegebenen Sollwert ($m \rightarrow m_{SOLL}$, $M \rightarrow M_{SOLL}$) möglichst gering ist. Ein mit dem zeitlichen Verlauf des Nullpunkts gemäß Fig. 8 korrespondierender - ebenfalls mittels des In-Line-Meßgeräts vom Typ "PROMASS 83 I DN 50" experimentell ermittelter - zeitlicher Verlauf des korrigierten Masse-Meßwerts $X_M$ ist passend synchronisiert in Fig. 8 dargestellt, wobei eine signifikante Verbesserung des Nullpunktverhaltens des zugehörigen In-Line-Meßgerät an der nunmehr nur noch sehr geringen Abweichung des Masse-Meßwerts $X_M$ von der den tatsächlichen totalisierten Massendurchfluß, $M_{SOLL} = 0$, des Experiments repräsentierenden idealen Nulllinie deutlich erkennbar ist.

Die Ermittlung des Dämpfungswerts $X_{DI}$ kann beispielsweise bedarfsgesteuert, etwa bei sich im Betrieb drastisch ändernden Prozeßbedingungen, erfolgen, oder aber auch periodisch wiederkehrend, etwa mit der für die Generierung des Massendurchfluß-Meßwerts angesetzten Aktualisierungsrate, $f_A = 1/T_A$, und insoweit quasi-kontinuierlich erfolgen. Des weiteren kann der Dämpfungswert $X_{DI}$ erster Art vor Ort zur Anzeige gebracht und/oder gegebenenfalls auch an das erwähnte elektronische Datenverarbeitungssystem übermittelt werden, beispielsweise zwecks Verwendung in einem anderen typgleichen In-Line-Meßgerät in demselben Prozeß bzw. in derselben Abfüllanlage und/oder zwecks Weiterverarbeitung im Rahmen einer meßgerätübergreifenden oder anlagenweiten Diagnose. Gemäß einer weiteren Ausgestaltung der Erfindung ist die Meßgerät-Elektronik daher ferner so konfiguriert, daß sie mittels des wenigstens einen Dämpfungswerts $X_{DI}$ erster Art gegebenenfalls einen Alarm generiert, der signalisiert, daß das Medium eine von einer entsprechenden Vorgabe, insb. einem maximal zulässigen Anteil an mitgeführten Fremdstoffen, abweichende Qualität aufweist, und/oder der signalisiert, daß das In-Line-Meßgerät außerhalb einer dafür vorgegebenen Spezifikation betrieben ist. Die Generierung eines solchen Alarms kann beispielsweise durch einen einfachen, im Betrieb widerkehrend durchgeführten Vergleich des aktuellen Dämpfungswerts $X_{DI}$ mit einem dafür vorab festgelegten, die den Alarm provozierenden Situation entsprechend reflektierenden Schwellenwert erfolgen werden. Der die jeweilige Alarmstufe passend repräsentierende Schwellenwert für den Dämpfungswert $X_{DI}$ erster Art kann beispielsweise im Zuge einer, gegebenenfalls auch vor Ort durchgeführten, Naß-Kalibration des In-Line-Meßgeräts experimentell ermittelt werden.

Gemäß einer weiteren Ausgestaltung der Erfindung ermittelt die Meß- und Auswerteschaltung der Meßgerät-Elektronik daher im Betrieb anhand wenigstens eines der Schwingungsmeßsignale $s_1$, $s_2$ wiederkehrend einen Schwingungsmeßwert $X_S$, der eine Schwingungsamplitude von Schwingungen des vibrierenden Meßrohrs und/oder einen Effektivwert davon repräsentiert, insb. der Biegeschwingungen im Nutz- und Coriolismode. Ferner ist vorgesehen, daß die Meßgerät-Elektronik im Betrieb wiederkehrend anhand wenigstens eines der Schwingungsmeßsignale $s_1$, $s_2$ und/oder anhand des Erregersignals $i_{exc}$ einen Anregungsmeßwert $X_{iexc}$ ermittelt, der eine Vibrationen des Meßrohrs, insb. die Biegeschwingungen im Nutz- und Coriolismode, aufrechterhaltenden Erregerkraft bzw. -leistung momentan repräsentiert. Als Anregungsmeßwert $X_{iexc}$ kann dementsprechend beispielsweise eine mittels der Treiberschaltung eingestellte und/oder eine momentan gemessene und entsprechend digitalisierte Strom-Amplitude des Erregersignals $i_{exc}$ und/oder ein Strom-Effektivwert des Erregersignals $i_{exc}$ dienen.

Basierend auf dem Schwingungsmeßwert $X_S$ und dem Anregungsmeßwert $X_{iexc}$ und insoweit auch basierend auf Treibersignal $i_{exc}$ und den Schwingungsmeßsignalen $s_1$, $s_2$ ermittelt die Meßgerät-Elektronik 20 gemäß einer weiteren Ausgestaltung der Erfindung im Betrieb, beispielsweise auch mit einer höheren Aktualisierungsrate, als den Massendurchfluß- und/oder den Masse-Wert, wiederkehrend einen Dämpfungswert $X_{DII}$ zweiter Art, der eine Dämpfung - im folgenden kurz "Nutzmode-Dämpfung" - von Vibrationen in dem mittels der Erregeranordnung 116 angeregten Nutzmode des wenigstens einen Meßrohrs - hier bezüglich der erwähnten Mittelebene des wenigstens einen Meßrohrs symmetrischen Biegeschwingungen um die gedachte Biegeschwingungsachse des Meßaufnehmers 10 - momentan repräsentiert.

Als Dämpfungswert $X_{DII}$ zweiter Art kann hierbei ein wiederkehrend berechnetes Verhältnis, $X_{iexc}/X_S$, des Anregungsmeßwerts $X_{iexc}$ zum Schwingungsmeßwert $X_S$ dienen, beispielsweise also ein Quotient, der durch eine mittels des Mikrocomputers $\mu$C ausgeführte Division des aktuellen Anregungsmeßwerts $X_{iexc}$ durch den jeweils aktuellen Schwingungsmeßwert $X_S$ berechnet ist, oder aber auch ein von einer Vielzahl solcher nacheinander ermittelter Quotienten gebildeter zeitlicher Mittelwert. Schwingungsmeßwert $X_S$ und Anregungsmeßwert $X_{iexc}$ können dafür beispielsweise mit derselben vorgegebenen Aktualisierungsrate, $f_A = 1/T_A$, wie der Massendurchfluß-Wert $X_m$ oder, falls erforderlich, auch mit einer wesentlich, beispielsweise mindestens 5-mal, höheren Aktualisierungsrate periodisch wiederkehrend ermittelt werden. Beim hier gezeigten Typ Meßaufnehmer mit mittig am Meßrohr angreifendem Schwingungserreger und dazu symmetrisch angeordneten Schwingungssensoren ist der Quotient $X_{iexc}/X_S$ proportional zu jener Dämpfung von Vibrationen des wenigstens einen Meßrohrs die bezüglich der gedachten Mittelebene des wenigstens Meßrohrs ebenfalls symmetrisch ist, d.h. er repräsentiert genau jenen modalen Anteil der den Meßrohrschwingungen momentan insgesamt entgegenwirkenden Dämpfung, der dem Nutzmode entspricht.

Der aktuell ermittelte Dämpfungswert $X_{DII}$ zweiter Art kann im erwähnten flüchtigen Speicher RAM des Mikrocomputer $\mu$C zwischengespeichert und so - zusammen mit einem oder mehreren von solchen zu frühen Meßzeitpunkten bzw. zu verschiedenen Meßzyklen ermittelten und gleichermaßen gespeicherten Dämpfungswerten zweiter Art - für weiterführende Berechnungen entsprechend verfügbar gehalten werden. Solche für die Berechnung des Dämpfungswerts $X_{DII}$ zweiter Art und insoweit auch des Dämpfungswerts $X_{DI}$ erster Art besonders interessierenden Meßzyklen bzw. dementsprechende Meßzeitpunkte sind, wie bereits erwähnt, beispielsweise jener Meßzyklus, der - im Falle des Einsatzes des In-Line-Meßgeräts in einem Abfüllprozeß - mit einem Endzeitpunkt eines Abfüllvorgangs entsprechenden Betriebszeitpunkt, $t_{STOPP}$, korrespondiert und/oder jener Meßzyklus, der im Ergebnis einen mit einem aktuellen Meßzeitpunkt, $t_i$, korrespondierenden aktuellen Massendurchfluß-Meßwert bzw. einen aktuellen Masse-Wert liefert. Darüber hinaus ist ein zuletzt genanntem Meßzyklus, insb. unmittelbar, vorausgehenden Meßzyklus von besonderem Interesse und/oder - im Falle des Einsatzes des In-Line-Meßgeräts in einem Abfüllprozeß - auch jener Meßzyklus, der mit einem Startzeitpunkt, $t_{START}$, eines Abfüllvorgangs korrespondiert.

Gemäß einer weiteren Ausgestaltung der Erfindung ist der Dämpfungswert $X_{DI}$ erster Art mittels einer in der Meßgerät-Elektronik berechneten Differenz, $\Delta X_{DII} = X_{DII,t2} - X_{DII,t1}$, zweier während verschiedener, beispielsweise auch unmittelbar aufeinanderfolgenden, Meßzyklen generierter Dämpfungswerte $X_{DII,t1}$, $X_{DII,t2}$, zweiter Art berechnet. Hierbei entspricht die vom Dämpfungswert $X_{DI}$ erster Art repräsentierte Dämpfung in guter Nährung einer über das Zeitintervall, $\Delta T_m = t_2 - t_1$, totalisierten - letztlich den Nullpunktfehler der in Rede stehenden Art bestimmenden - Coriolismode-Dämpfung der Vibrationen des wenigstens einen Meßrohrs. Zumindest für den hier gezeigten Fall, daß die Erregeranordnung im wesentlichen mittig am Meßrohr angreift, repräsentiert der so abgeleitete Dämpfungswert $X_{DI}$ erster Art mit guter Nährung auch jene Dämpfung, die den bezüglich der Mittelebene symmetrischen Biegeschwingungen entgegenwirkt.

Zwecks Berechnung des Dämpfungswerts $X_{DI}$ erster Art aus solchen, mit verschieden Meßzeitpunkten $t_1$, $t_2$,.., korrespondierenden Dämpfungswerten $X_{DII,t1}$, $X_{DII,t2}$, zweiter Art ist in der Meßgerät-Elektronik ferner ein während einer Kalibration des In-Line-Meßgeräts und/oder im Betrieb wiederkehrend ermittelter Meßgerätparameter $K_{DI}$ vorgehalten, beispielsweise im erwähnten nicht-flüchtigen Speicher der Meßgerät-Elektronik 20 intern gespeichert. Unter Verwendung des Meßgerätparameters $K_{DI}$ sowie zweier Dämpfungswerte $X_{D11,t1}$, $X_{DII,t2}$, zweiter Art kann der Dämpfungswert $X_{DI}$ erster Art z.B. basierend auf einer der Formeln:

$$X_{DI} = K_{DI} \cdot \Delta X_{DII} = K_{DI} \cdot \left( X_{DII,t2} - X_{DII,t1} \right) = K_{DI} \cdot \left( \frac{X_{iexc,t2}}{X_{S1,t2}} - \frac{X_{iexc,t1}}{X_{S1,t1}} \right) \qquad (3)$$

auf sehr einfache Weise berechnet, und so die den Nullpunkt mitbeeinflussende Coriolismode-Dämpfung mit einer für Kompensation von deren Einfluß auf die primären Meßwerte, wie etwa den Massendurchfluß-Meßwert $X_m$ oder den Masse-Meßwert $X_M$ ausreichend hoher Genauigkeit ermittelt werden.

Der hierbei verwendete Meßgerätparameter $K_{DI}$ ist eine Kennzahl des In-Line-Meßgeräts, die zwischen der durch den Dämpfungswert $X_{DII}$ zweiter Art repräsentierten - praktisch direkt messbaren - Nutzmode-Dämpfung ($X_{iexc}/X_S$, $\Delta X_{DII}$, ..) und dem Dämpfungswert $X_{DI}$ erster Art vermittelt. Der - gelegentlich in geringem Maß auch von der tatsächlichen Einbausituation des Meßaufnehmers und/oder den Eigenschaften des zu messenden Mediums bzw. auch einer im Betrieb zu erwartenden Beladung des im wenigstens einen Meßrohr geführten Mediums mit Fremdstoffen abhängige - Meßgerätparameter $K_{DI}$ kann beispielsweise während einer Naß-Kalibration des In-Line-Meßgeräts vor Ort, also bei Beaufschlagung des Meßaufnehmers mit einem Medium von bekannter und/oder eingeprägter Massendurchflußrate, $m \rightarrow m_{SOLL}$, das in mit dem in der jeweiligen Anwendung zu erwartenden, hinsichtlich seiner Konzentration in einer für die Anwendung typischen Weise gezielt variierten Fremdstoff beladen ist, und unter Verwendung der Meßgerät-Elektronik experimentell ermittelt werden. Alternativ oder in Ergänzung Meßgerätparameter $K_{DI}$ im Dialog mit einem mit dem In-Line-Meßgerät interagierenden Anwender passend bestimmt werden, beispielsweise auch durch Auswahl bzw. Eingabe eines anwendungstypischen Zahlenwerts. Bei Verwendung des In-Line-Meßgerät in Anwendung mit Medien von in erheblichem Maße schwankenden physikalischen Eigenschaften, wie etwa der Dichte, $\rho$, der Viskosität, $\eta$, der Zusammensetzung, der Beladung mit Fremdstoffen etc., kann gegebenenfalls auch im Betrieb des In-Line-Meßgeräts eine wiederholte Anpassung des Meßgerätparameters $K_{DI}$ an das aktuell zu messenden Medium bzw. ein aktuelles Prozeßregime erforderlich sein. Solche allfällig erforderlichen Anpassungen des Meßgerätparameters $K_{DI}$ können beispielsweise im Zuge einer wiederholten Naß-Kalibration des In-Line-Meßgeräts vor Ort und/oder durch entsprechende Eingabe seitens eines mit dem In-Line-Meßgerät interagierenden Anwenders realisiert werden. Dabei ist der Meßgerätparameter $K_{DI}$ so gewählt, daß bei bekannter und/oder eingeprägter Massendurchflußrate, $m_{SOLL}$, eine Abweichung des primären Meßwerts, etwa des Massendurchfluß-Meßwerts $X_m$ bzw. des Masse-Meßwerts $X_M$ davon schlußendlich minimal ist. Dies kann beispielsweise in der Weise erfolgen, daß der Meßgerätparameter $K_{DI}$ so gewählt ist bzw. solange - durch den Anwender und/oder automatisch durch die Meßgerät-Elektronik - iterativ verändert wird, daß eine während eines vorgegebenen Zeitraums bei durch den Meßaufnehmer strömendem Medium ermittelte Testreihe von dem jeweiligen primären Meßwert im Ergebnis eine minimale Streuung und/oder einen weitgehend linearen Verlauf und/oder einen gleichmäßigen monotonen Verlauf aufweist. Die Ermittlung des Meßgerätparameter $K_{DI}$ kann dabei dadurch erheblich vereinfacht werden, indem das Medium gleichmäßig und/oder mit konstant gehaltener Strömungsgeschwindigkeit, $v$, durch den Meßaufnehmer strömen gelassen wird. Zwecks Reduzierung des Kalibrationsaufwandes für die gesamte Anlage kann der Meßgerätparameter $K_{DI}$ ferner auch an in demselben Prozeß bzw. in derselben Anlage installierte typgleiche In-Line-Meßgerät übermittelt werden, um daselbst ebenfalls zur Korrektur von deren jeweiligem Nullpunkt verwendet zu werden. Da eine Vielzahl von Anwendungen sich zumindest bezüglich der Ausprägung der typischerweise auftretenden asymmetrischen Dämpfungen wie auch bezüglich deren Einflusses auf die primären Meßwerte ähnlich sind, ist es ferner auch möglich, den Meßgerätparameter $K_{DI}$ seitens des Herstellers für typische Anwendungsfälle vorab passend zu ermitteln und dem Anwender inform eines Satzes weniger vorkonfektionierter Meßgerätparameter zur Verfügung zustellen, aus denen während der Inbetriebnahme des In-Line-Meßgeräts vor Ort und in Kenntnis der tatsächlichen Prozeßbedingungen der am besten passende Meßgerätparameter $K_{DI}$ lediglich ausgewählt zu werden braucht.

Nach einer weiteren Ausgestaltung der Erfindung ist vorgesehen, daß der mittels der Meßgerät-Elektronik ermittelte Dämpfungswert $X_{DI}$ erster Art in der Weise erzeugt wird, daß er eine zeitliche Änderung der vom strömenden Medium induzierten Dämpfung von Vibrationen des wenigstens einen Meßrohrs repräsentiert, insb. zumindest anteilig auch eine Dämpfung von bezüglich der Mittelebene und/oder bezüglich der Wirkungslinie der von der Erregeranordnung unter dem Einfluß des Erregersignals auf das Meßrohr ausgeübten Erregerkraft symmetrischen Biegeschwingungen bzw. zumindest anteilig auch die Dämpfung von angeregten Biegeschwingungen im Nutzmode. Dafür ermittelt die Meßgerät-Elektronik basierend auf zwei oder mehr zeitlich nacheinander generierten Dämpfungswerten $X_{DII}$ zweiter Art zumindest zeitweise eine zeitlichen Ableitung der durch nämliche Dämpfungswerte $X_{DII}$ jeweils repräsentierten Dämpfung, beispielsweise basierend auf einem die zeitliche Ableitung der Nutzmode-Dämpfung repräsentierenden Differenzenquotienten, $\Delta X_{DII}/T_A$. Ein als Dämpfungswert $X_{DI}$ erster Art geeigneter Differenzenquotient, $\Delta X_{DII}/T_A$, kann beispielsweise durch eine im Mikrocomputer durchgeführte Division der Differenz, $\Delta X_{DII} = X_{DII,t2} - X_{DII,t1}$, durch die momentan eingestellten Abtastzeit, $T_A$, bzw. ein im Mikrocomputer durchgeführte Multiplikation der Differenz, $\Delta X_{DII} = X_{DII,t2} - X_{DII,t1}$, mit der momentan eingestellten Aktualisierungsrate, $f_A$, für den Massendurchfluß-Meßwert bzw.

den Masse-Meßwerte auf einfache Weise ermittelt werden.

Weitere Untersuchungen an In-Line-Meßgeräten der in Rede stehenden Art haben ergeben, daß die unter Verwendung des den Einfluß Coriolismode-Dämpfung der Vibrationen des Meßrohrs auf die Meßgenauigkeit reflektierenden Dämpfungswerts $X_{DI}$ erster Art ermittelten primären Meßwerte, insb, der Massendurchfluß-Meßwert, $X_m$, bzw. der Masse-Meßwerte $X_M$, noch genauer ermittelt werden können, wenn dies auch unter Berücksichtigung einer, beispielsweise momentanen und/oder zeitlich gemittelten, Strömungsgeschwindigkeit, $v$, des Mediums erfolgt; dies im besonderen auch in solchen Anwendungsfällen, bei denen die Strömungsgeschwindigkeit, $v$, und/oder ein Ausmaß einer allfälligen Beladung des im wenigstens einen Meßrohr geführten Mediums mit Fremdstoffen, und damit einhergehend auch der Dämpfungswerts $X_{DI}$ erster Art in unvorhersehbare Weise und/oder in erheblichem Maße schwanken kann.

Dafür ist nach einer weiteren Ausgestaltung der Erfindung ferner vorgesehen, daß die Meßgerät-Elektronik im Betrieb zumindest zeitweise wenigstens einen Geschwindigkeits-Meßwert $X_v$ intern vorhält, etwa in einem der erwähnten Speicher EEPROM und/oder RAM. Der Geschwindigkeitsmeßwert $X_v$ kann extern des In-Line-Meßgeräts ermittelt, z.B. mittels eines in demselben Prozeß bzw. in derselben Anlage installierte typgleichen In-Line-Meßgeräts oder auch mittels eines Strömungsmeßgerät eines anderen Typs, und hernach via Datenübertragungssystem an die Meßgerät-Elektronik übermittel sein. Alternativ oder in Ergänzung dazu kann die Meßgerät-Elektronik den Geschwindigkeitsmeßwert $X_v$ im Betrieb auch intern wiederkehrend ermitteln, beispielsweise anhand des wenigstens einen Schwingungsmeßsignals $s_1$, $s_2$ und/oder mittels des Erregersignals $i_{exc}$ bzw. anhand davon abgeleiteter Meßwerte $[X_m, X_M, X\rho,...]$. Zur Ermittlung des Geschwindigkeitsmeßwerts $X_v$ geeignete Meßwerte $[X_m, X_M, X\rho,...]$ sind beispielsweise der aktuellen Dichte-Meßwert, der im vorherigen Meßzyklus ermittelte und somit noch aktuellen Massendurchfluß-Meßwert $X_m \rightarrow X_{m,\,ti-1}$ oder der im vorherigen Meßzyklus ermittelte und somit ebenfalls noch aktuellen Masse-Meßwert $X_M \rightarrow X_{M,\,ti-1}$. Alternativ oder in Ergänzung dazu kann der Geschwindigkeitsmeßwerts $X_v$ auch anhand provisorischer Meßwerte $[X'_m, X'_M,...]$, wie etwa dem aktuellen provisorischen Massendurchfluß-Meßwert $X'_m \rightarrow X'_{m,\,ti}$ und/oder dem aktuellen provisorischen Masse-Meßwert $X'_M \rightarrow X'_{M,\,ti}$ ermittelt werden. Beispielsweise kann unter Verwendung vorgenannter, intern der Meßgerät-Elektronik ermittelter Meßwerte der Geschwindigkeitsmeßwert $X_v$ unter Umsetzung einer der Formeln:

$$X_v = K_v \cdot \frac{X'_m}{X_\rho}, \qquad (4)$$

$$X_v = K_v \cdot \frac{X_m}{X_\rho}, \qquad (5)$$

$$X_v = K_v \cdot \frac{X'_M}{\Delta T_M \cdot X_\rho} \qquad (6)$$

und/oder

$$X_v = K_v \cdot \frac{X_M}{\Delta T_M \cdot X_\rho} \qquad (7)$$

in der Meßgerät-Elektronik - auch in Echtzeit - in für die Kompensation asymmetrischer Dämpfungen der in Rede stehenden Art ausreichender Genauigkeit berechnet werden. Der hierbei jeweils verwendete Meßgerätparameter $K_v$ ist eine, insb. mit einem effektiven Strömungsquerschnitt des Meßaufnehmers korrespondierende, meßgerät-spezifische Kennzahl, die zwischen einem Geschwindigkeitsmeßwert $X_v$, der bei Beaufschlagung des Meßaufnehmers mit einem strömenden Medium von vorgegebener Strömungsgeschwinigkeit, $v \rightarrow v_{SOLL}$, ermittelt ist, und dieser vorgegebenen Strömungsgeschwinigkeit vermittelt. Der Meßgerätparameter $K_v$ kann beispielsweise während einer Kalibration des In-Line-Meßgeräts - im Labor und/oder vor Ort - vorab experimentell ermittelt und in geeigneter Weise, beispielsweise auch gruppiert nach typischen Anwendungsfällen, in der Meßgerät-Elektronik abgespeichert sein, beispielsweise im nicht-flüchtigen Speicher EEPROM des erwähnten Mikrocomputers $\mu$C.

Unter Verwendung des - aktuell ermittelten und/oder intern zwischengesepicherten - Geschwindigkeits-Meßwerts $X_v$ kann der Meßgerätparameter $K_{DI}$, beispielsweise basierend auf der Formel:

$$K_{DI} \rightarrow K_{DI}(v) = \frac{K_{DI}}{X_v}, \qquad (8)$$

mittels der Meßgerät-Elektronik auf sehr einfache Weise an das aktuelle Medium bzw. die aktuelle Prozeßsituation angepaßt werden. Die oben erwähnte Anpassung des Meßgerätparameters $K_{DI}$ ist bei Berücksichtigung aktueller Strömungsgeschwindigkeiten lediglich insoweit geringfügig zu modifizieren, daß während dessen Justierung der aktuelle Geschwindigkeitsmeßwert $X_V$ gemäß vorgenannter Formel in die Kalibrationsberechnung entsprechend mit einfließen gelassen wird.

Besonders für den bereits erwähnten Fall, daß das In-Line-Meßgerät so installiert ist, daß die Längsachse L des Meßaufnehmers im wesentlichen senkrecht ausgerichtet ist, kann es bei allfälliger Beladung des Mediums mit einem Fremdstoff, dessen Dichte und/oder dessen Viskosität in erheblichem Maße von der des eigentlichen Mediums abweicht, von Vorteil sein, den Dämpfungswert $X_{DI}$ erster Art auch unter Berücksichtigung einer Relativgeschwindigkeit zwischen dem Medium und darin mitgeführten Fremdstoffen zu berechnen. Dafür ist vorgenannte Formel zur Berechnung des Meßgerätparameters $K_{DI}$ geringfügige zu modifizieren, so daß sich der nunmehr Meßgerätparameter $K_{DI}$ errechnet:

$$K_{DI} = \frac{K_{DI}}{X_v + K_{v0}} \qquad (9)$$

ermittelt. Der darin ein eingeführte Meßgerätparameter $K_{V0}$ ist eine mediums-spezifische Kennzahl, die eine Relativgeschwindigkeit zwischen Medium und Fremdstoff infolge einer auf den Fremdstoff wirkenden Beschleunigungskraft, wie etwa der Gravitation bzw. einem Auftrieb, bzw. deren Auswirkung auf eine für die Messung insgesamt oder im zeitlichen Mittel wirksame Strömungsgeschwindigkeit repräsentiert, und ergibt sich praktisch unmittelbar aus dem zu messenden Medium in Verbindung mit der Art der im Betrieb allenfalls zu erwartenden Fremdstoffe, wie etwa allfällig eingetragene Luft, ausgegastes Kohlendioxid, bestimmungsgemäß mitgeführte Zusatzstoffe oder andere Inhomogenitäten. Der tatsächlich benötigte Meßgerätparameter $K_{V0}$ kann daher ebenfalls aus einem vorkonfektionierten und in der Meßgerät-Elektronik vorgehaltenen Parametersatz seitens eines mit dem In-Line-Meßgerät interagierenden Anwenders ausgewählt werden, beispielsweise im Zuge einer Inbetriebnahme und/oder einer Rekalibrierung des installierten In-Line-Meßgeräts.

Wie sich aus den voranstehenden Ausführungen ohne weiteres erkennen läßt, besteht ein Vorteil der Erfindung u.a. darin, daß der für hochpräzise Messungen von strömenden Medium schädliche Einfluß asymmetrischer Dämpfungen infolge von Inhomogenitäten auf die Meßgenauigkeit einerseits unter Verwendung weniger, sehr einfach zu bestimmender Korrekturfaktoren weitgehend kompensiert werden. Andererseits kann dies beispielsweise auch unter Verwendung ausschließlich intern des In-Line-Meßgerät ermittelter Meßdaten erfolgen und zudem auch mit einem sehr geringen zusätzlichen Rechenaufwand durchgeführt werden. Dabei können sämtliche der für die Kompensation erforderlichen Informationen auch mittels konventionellen Meßaufnehmern sowie mittels konventioneller Schaltungstechnik gewonnen werden. Sowohl hinsichtlich des mechanische Aufbaus des In-Line-Meßgeräts, insb. auch des Meßaufnehmers, als auch hinsichtlich des schaltungstechnischen Aufbau kann das erfindungsgemäße In-Line-Meßgerät somit durchaus einem herkömmlichen In-Line-Meßgerät der in Rede stehenden Art entsprechen, beispielsweise auch gemäß dem eingangs erwähnten Stand der Technik und/oder auch solchen, die sich für die Verwendung in Abfüllprozessen bereits etabliert und als geeignet erwiesen haben; erforderlich sind lediglich geringfügige Veränderungen der im Mikrocomputer der Meßgerät-Elektronik ablaufenden Auswerteprogramme und damit einhergehend in den diese entsprechend repräsentierenden Programmcodes. Die wenigen für die Berechnung der jeweiligen Meßwerte gegebenenfalls erforderlichen Meßgeräteparameter $K_1$, $K_{DI}$, $K_v$, $K_{V0}$ etc. können vorab in der dem Fachmann geläufigen Weise durch Naß-Kalibration experimentell ermittelt, beispielsweise in einem Kalibrierlabor und/oder mittels des installierten In-Line-Meßgerät vor Ort, werden und sind für typische Anwendungsfälle bzw. auch gleichartig verwendete typgleiche In-Line-Meßgerät durchaus universell verwendebar. In Anbetracht dessen kann die vorliegende Erfindung durchaus auch in bereits installierten In-Line-Meßgeräten der in Rede stehenden Art nachträglich implementiert werden, sofern deren jeweilige Meßgerät-Elektronik entsprechend programmierbar ist.

**Patentansprüche**

1. In-Line-Meßgerät, insb. Coriolis-Massedurchfluß-/Dichtemeßgerät und/oder Coriolis-Massedurchfluß-/Viskositätmeßgerät, zum Messen einer Massendurchflußrate, m, eines, insb. zumindest zeitweise zwei- oder mehrphasigen und/oder mit Fremdstoffen, wie etwa Gasblasen und/oder Feststoffpartikeln, beladenen, fließfähigen Mediums, welches In-Line-Meßgerät umfaßt:

- einen Meßaufnehmer (10) vom Vibrationstyp

-- mit wenigstens einem im Betrieb zumindest zeitweise vibrierenden, insb. Biegeschwingungen ausführenden, Meßrohr (110) zum Führen von, insb. zumindest zeitweise zwei- oder mehrphasigen und/oder mit Fremdstoffen beladenem, fließfähigem Medium,
- mit einer, insb. zentral, auf das Meßrohr (110) einwirkenden Erregeranordnung (116) zum Erzeugen von Vibrationen, insb. Biegeschwingungen, des wenigstens einen Meßrohrs (110), und
-- mit einer Sensoranordnung (117, 118) zum Erfassen von Vibrationen, insb. Biegeschwingungen, des wenigstens einen Meßrohrs (110), die wenigstens ein Schwingungen, insb. Biegeschwingungen, des Meßrohrs (110) repräsentierendes Schwingungsmeßsignal ($s_1$, $s_2$) liefert; sowie

- eine mit dem Meßaufnehmer (10) elektrisch gekoppelte Meßgerät-Elektronik (20),

-- wobei die Meßgerät-Elektronik (20) zumindest zeitweise wenigstens ein die Erregeranordnung (116) treibendes Erregersignal ($i_{exc}$), insb. mit einem periodisch veränderlichen und/oder eingeprägten Strom, liefert, derart
--- daß das wenigstens eine Meßrohr im Betrieb - getrieben von der mittels des wenigstens einen Erregersignals ($i_{exc}$) angesteuerten Erregeranordnung (116) - zumindest zeitweise zu Vibrationen in einem Nutzmode des Meßaufnehmers angeregt ist, in dem es zumindest anteilig, insb. überwiegend und/oder bezüglich einer zu einem Querschnitt des Meßrohrs koplanaren gedachten Mittelebene des wenigstens Meßrohrs symmetrische, Biegeschwingungen, um eine gedachte Biegeschwingungsachse des Meßaufnehmers ausführt, die im wesentlichen parallel zu einer ein Einlaßende des Meßrohrs mit einem Auslaßende des Meßrohrs imaginär verbindenden gedachten Längsachse des Meßaufnehmers verläuft oder mit dieser koinzidert, und
--- daß das wenigstens eine im Nutzmode vibrierende Meßrohr unter dem Einfluß von im hindurchströmenden Medium induzierten Corioliskräften zumindest zeitweise in einem dem Nutzmode überlagerten Coriolismode des Meßaufnehmers schwingt, in dem es zumindest anteilig, insb. überwiegend, bezüglich einer zu einem Querschnitt des Meßrohrs koplanaren gedachten Mittelebene des wenigstens Meßrohrs antisymmetrische Biegeschwingungen um die gedachte Biegeschwingungsachse des Meßaufnehmers ausführt,

**dadurch gekennzeichnet, dass**

- die Meßgerät-Elektronik (20), zumindest zeitweise, insb. mittels des wenigstens einen Schwingungsmeßsignals ($s_1$, $s_2$) und/oder mittel des wenigstens einen Erregersignals ($i_{exc}$), im Betrieb, insb. periodisch und/oder mit einer vorgegebenen Aktualisierungsrate $f_A = 1/T_A$, wiederkehrend, einen Dämpfungswert ($X_{DI}$) erster Art ermittelt, der eine zeitliche Ableitung einer Dämpfung repräsentiert, die den dem Nutzmode entsprechenden Biegeschwingungen des wenigstens einen Meßrohrs entgegenwirkt, und
- die Meßgerät-Elektronik (20) sowohl mittels des wenigstens einen Schwingungsmeßsignals ($s_1$, $s_2$) und/oder mittels des Erregersignals ($i_{exc}$) als auch mittels des Dämpfungswerts ($X_{DI}$) erster Art, zumindest zeitweise, insb. periodisch und/oder mit einer vorgegebenen Aktualisierungsrate, $f_A = 1/T_A$, wiederkehrend, wenigstens einen Massendurchfluß-Meßwert ($X_m$) generiert, der eine Massendurchflußrate, $m$, des im wenigstens einen Meßrohr geführten Mediums momentan repräsentiert.

2. In-Line-Meßgerät nach dem vorherigen Anspruch,

- wobei die Meßgerät-Elektronik (20) den Dämpfungswert ($X_{DI}$) erster Art mit einer vorgegebenen, insb. während eines sich über mehrere Meßzyklen erstreckenden Zeitraums, $n \cdot T_A$, im wesentlichen konstanten, Aktualisierungsrate, $f_A = 1/T_A$, wiederkehrend generiert; und/oder
- wobei die Meßgerät-Elektronik (20) den Dämpfungswert ($X_{DI}$) erster Art unter Berücksichtigung einer, insb. momentanen und/oder zeitlich gemittelten, Strömungsgeschwindigkeit des Mediums ermittelt.

3. In-Line-Meßgerät nach einem der vorherigen Ansprüche,

- wobei die Meßgerät-Elektronik im Betrieb zumindest zeitweise wenigstens einen Dichte-Meßwert ($X_\rho$) intern vorhält, insb. auch mittels des wenigstens einen Schwingungsmeßsignals ($s_1$, $s_2$) und/oder mittels des Erregersignals ($i_{exc}$) zumindest zeitweise, insb. periodisch wiedekehrend, ermittelt, der eine Dichte, p, des innerhalb des wenigstens einen Meßrohrs geführten Mediums repräsentiert und

- wobei die Meßgerät-Elektronik im Betrieb zumindest zeitweise wenigstens einen Geschwindigkeits-Meßwert ($X_v$) intern vorhält, insb. auch mittels des wenigstens einen Schwingungsmeßsignals ($s_1$, $s_2$) und/oder mittels des Erregersignals ($i_{exc}$) zumindest zeitweise ermittelt, der eine, insb. momentane und/oder zeitlich gemittelte, Strömungsgeschwindigkeit, $v$, des innerhalb des wenigstens einen Meßrohrs geführten Mediums repräsentiert {ursprünglicher Anspruch 5}, insb. derart, daß die Meßgerät-Elektronik im Betrieb den wenigstens einen Geschwindigkeitsmeßwert ($X_v$) mittels des wenigstens einen Schwingungsmeßsignals ($s_1$, $s_2$) und/oder mittels des Erregersignals ($i_{exc}$) wiederkehrend ermittelt und/oder daß wobei die Meßgerät-Elektronik (20) den wenigstens einen Geschwindigkeitsmeßwert ($X_v$) auch mittels des wenigstens einen Dichte-Meßwerts ($X_\rho$) Art generiert.

4. In-Line-Meßgerät nach einem der vorherigen Ansprüche, wobei die Meßgerät-Elektronik (20) im Betrieb, insb. periodisch, wiederkehrend mittels des wenigstens einen Schwingungsmeßsignals ($s_1$, $s_2$) einen Schwingungsmeßwert ($X_S$) ermittelt, der eine Schwingungsamplitude von Schwingungen, insb. Biegeschwingungen, des wenigstens einen vibrierenden Meßrohrs und/oder einen Effektivwert davon repräsentiert.

5. In-Line-Meßgerät nach einem der vorherigen Ansprüche, wobei die Meßgerät-Elektronik (20) im Betrieb, insb. periodisch, wiederkehrend mittels des wenigstens einen Schwingungsmeßsignals ($s_1$, $s_2$) und/oder mittels des Erregersignals ($i_{exc}$) einen Anregungsmeßwert ($X_{iexc}$) ermittelt, der eine Schwingungen, insb. Biegeschwingungen, des wenigstens einen Meßrohr aufrechterhaltenden Erregerkraft, insb. eine Amplitude und/oder einen Effektivwert davon, und/oder der eine Schwingungen, insb. Biegeschwingungen, des wenigstens einen Meßrohr aufrechterhaltenden Erregerleistung repräsentiert.

6. In-Line-Meßgerät nach einem der vorherigen Ansprüche, wobei die Meßgerät-Elektronik (20) im Betrieb, insb. periodisch und/oder mit einer vorgegebenen Aktualisierungsrate, $f_A = 1/T_A$, wiederkehrend, insb. mittels des wenigstens einen Schwingungsmeßsignals ($s_1$, $s_2$) und/oder mittels des Erregersignals ($i_{exc}$), einen Dämpfungswert ($X_{DII}$) zweiter Art ermittelt, insb. auch intern abspeichert, der eine, insb. zeitlich veränderliche, Dämpfung von, insb. bezüglich einer zu einem Querschnitt des Meßrohrs koplanaren gedachten Mittelebene des wenigstens einen Meßrohrs und/oder bezüglich einer gedachten Wirkungslinie einer im Betrieb von der Erregeranordnung (116) unter dem Einfluß des Erregersignals ($i_{exc}$) auf das Meßrohr ausgeübten Erregerkraft symmetrische, Biegeschwingungen des wenigstens einen Meßrohrs in dem mittels der Erregeranordnung (116) angeregten Nutzmode des Meßaufnehmers momentan repräsentiert.

7. In-Line-Meßgerät nach Anspruch 6 in Verbindung mit Anspruch 4 und 5, wobei die Meßgerät-Elektronik (20) den Dämpfungswert ($X_{DII}$) zweiter Art basierend auf einem im Betrieb, insb. periodisch, wiederkehrend ermittelten Verhältnis, $X_{iexc}/X_S$, des Anregungsmeßwerts ($X_{iexc}$) zum Schwingungsmeßwert ($X_S$) ermittelt.

8. In-Line-Meßgerät nach einem der Ansprüche 6 oder 7,

   - wobei die Meßgerät-Elektronik (20) den Dämpfungswert ($X_{DI}$) erster Art basierend auf wenigstens einem Dämpfungswert ($X_{DII}$), insb. zwei oder mehreren, während verschiedener Meßzyklen ermittelten Dämpfungswerten ($X_{DII,t1}$, $X_{DII,t2}$,...) zweiter Art ermittelt {ursprünglicher Anspruch 13}, insb. derart, daß die Meßgerät-Elektronik (20) den Dämpfungswert ($X_{DI}$) erster Art basierend auf wenigstens zwei, insb. während verschiedener Meßzyklen generierten, Dämpfungswerten ($X_{DII,t1}$, $X_{DII,t2}$,...) zweiter Art ermittelt {ursprünglicher Anspruch 14}, und/oder daß die Meßgerät-Elektronik (20) den Dämpfungswert ($X_{DI}$) erster Art basierend auf einer Differenz, $\Delta X_{DII}$, zweier während verschiedener Meßzyklen generierter Dämpfungswerte ($X_{DII,t1}$, $X_{DII,t2}$,...) zweiter Art ermittelt; und/oder
   - wobei die Meßgerät-Elektronik (20) den Dämpfungswert ($X_{DI}$) erster Art unter Verwendung eines, insb. während einer Kalibration des In-Line-Meßgeräts und/oder im Betrieb wiederkehrend ermittelten und/oder intern gespeicherten, Meßgerätparameter ($K_{DI}$), insb. basierend auf der Formel: $X_{DI} = K_{DI} \cdot \Delta X_{DII} = K_{DI} \cdot (X_{DII,t2} - X_{DII,t1})$, ermittelt.

9. In-Line-Meßgerät nach einem der vorherigen Ansprüche, wobei die Meßgerät-Elektronik (20) mittels des wenigstens einen Schwingungsmeßsignals ($s_1$, $s_2$) und/oder mittels des Erregersignals ($i_{exc}$) sowie mittels des Dämpfungswerts ($X_{DI}$) erster Art zumindest zeitweise, insb. periodisch und/oder mit einer vorgegebenen Aktualisierungsrate, $f_A = 1/T_A$, wiederkehrend, einen Masse-Meßwert ($X_M$) generiert, der einen totalisierten Massendurchfluß, M, momentan repräsentiert, der einer zu messenden Masse des Mediums entspricht, die während eines, insb. vorgegebenen und/oder im Betrieb wiederkehrend ermittelten, Zeitintervalls, $\Delta T_M$, insgesamt durch den Meßaufnehmer hindurchgeströmt ist.

10. In-Line-Meßgerät nach Anspruch 9,

- wobei die Meßgerät-Elektronik (20) mittels des wenigstens einen Dämpfungswerts ($X_{DI}$) erster Art einen Alarm generiert, der signalisiert, daß der Masse-Meßwert eine verringerte Meßgenauigkeit aufweist, insb. infolge einer von einer entsprechenden Vorgabe abweichenden Qualität des Mediums; und/oder

- wobei das Zeitintervalls, $\Delta T_M$, einer sich von einem einem Startzeitpunkt eines Abfüllvorganges entsprechenden Betriebszeitpunkt, $t_0$, bis zu einem einem Endzeitpunkt desselben Abfüllvorganges entsprechenden Betriebszeitpunkt, $t_n = t_0 + n \cdot T_A$, erstreckenden, insb. mit einer vorgegebenen Abfüllmenge des Mediums korrespondierenden, Abfülldauer entspricht, insb. derart, daß die vom Dämpfungswert ($X_{DI}$) erster Art repräsentierte Dämpfung einer über das Zeitintervall, $\Delta T_M$, totalisierten antiymmetrischen Dämpfung der Vibrationen des wenigstens einen Messrohrs entspricht; und/oder

- wobei die Meßgerät-Elektronik (20) mittels des wenigstens einen Schwingungsmeßsignals ($s_1$, $s_2$) und/oder mittels des Erregersignals ($i_{exc}$), insb. auch mittels des Dämpfungswerts ($X_{DI}$) erster Art, zumindest zeitweise, insb. periodisch und/oder mit einer vorgegebenen Aktualisierungsrate, $f_A = 1/T_A$, wiederkehrend, wenigstens einen provisorischen Masse-Meßwert ($X'_M$) generiert, der die zu messende Masse ungenauer repräsentiert, als der tatsächliche Masse-Meßwert ($X_M$) und wobei die Meßgerät-Elektronik (20) den wenigstens einen Masse-Meßwert ($X_M$) auch mittels des provisorischen Masse-Meßwerts ($X'_M$) generiert.

11. In-Line-Meßgerät nach einem der vorherigen Ansprüche, wobei die Erregeranordnung (116) das wenigstens eine Meßrohr (110) im Betrieb zumindest zeitweise in Biegeschwingungen um die gedachte Biegeschwingungsachse versetzt, insb. überwiegend auf einer niedrigsten Resonanzfrequenz des Meßrohrs, die bezüglich der gedachten Mittelebene des wenigstens Meßrohrs im wesentlichen symmetrisch ausgebildet sind.

12. In-Line-Meßgerät nach einem der vorherigen Ansprüche,

- wobei die Meßgerät-Elektronik (20) mittels des wenigstens einen Schwingungsmeßsignals ($s_1$, $s_2$) und/oder mittels des Erregersignals ($i_{exc}$), insb. auch mittels des Dämpfungswerts ($X_{DI}$) erster Art, zumindest zeitweise, insb. periodisch und/oder mit einer vorgegebenen Aktualisierungsrate, $f_A = 1/T_A$, wiederkehrend, einen provisorischen Massendurchfluß-Meßwert ($X'_m$) generiert, der die Massendurchflußrate, m, des im wenigstens einen Meßrohr geführten Mediums ungenauer repräsentiert, als der Massendurchfluß-Meßwert ($X_m$) und

- wobei die Meßgerät-Elektronik (20) den wenigstens einen Massendurchfluß-Meßwert ($X_m$) mittels des provisorischen Massendurchfluß-Meßwerts ($X'_m$) und mittels des Dämpfungswerts ($X_{DI}$) erster Art generiert.

13. In-Line-Meßgerät nach einem der Ansprüche 9 bis 10, wobei die Meßgerät-Elektronik (20) den wenigstens einen Masse-Meßwert ($X_M$) mittels des Massendurchfluß-Meßwerts ($X_m$) und mittels des Dämpfungswerts ($X_{DI}$) erster Art generiert.

14. In-Line-Meßgerät nach einem der vorherigen Ansprüche,

- wobei die Meßgerät-Elektronik (20) den Dämpfungswert ($X_{DI}$) erster Art basierend auf einer zeitlichen Ableitung einer, insb. bezüglich einer zu einem Querschnitt des Meßrohrs koplanaren gedachten Mittelebene des wenigstens einen Meßrohrs und/oder bezüglich einer gedachten Wirkungslinie einer im Betrieb von der Erregeranordnung (116) unter dem Einfluß des Erregersignals ($i_{exc}$) auf das Meßrohr ausgeübten Erregerkraft symmetrischen, Dämpfung von Biegeschwingungen des Meßrohrs im mittels der Erregeranordnung (116) angeregten Nutzmode des Meßaufnehmers; und/oder

- wobei die Meßgerät-Elektronik (20) den Dämpfungswert ($X_{DI}$) erster Art basierend auf einem die zeitliche Ableitung der Dämpfung der dem Nutzmode des Meßaufnehmers entsprechenden Biegeschwingungen des wenigstens einen Meßrohrs repräsentierenden Differenzenquotienten, $\Delta X_{DII}/T_A$, ermittelt; und/oder

- wobei die Errgeranordnung einen, insb. einzigen und/oder elektrodynamischen, im wesentlichen mittig am wenigstens einen Meßrohr angreifenden Schwingungserreger aufweist; und/oder

- wobei die Meßgerät-Elektronik (20) mittels des wenigstens einen Dämpfungswerts ($X_{DI}$) erster Art einen Alarm generiert, der signalisiert, daß das Medium eine von einer entsprechenden Vorgabe, insb. einem maximal zulässigen Anteil an mitgeführten Fremdstoffen, abweichende Qualität aufweist; und/oder

- wobei die Meßgerät-Elektronik (20) mittels des wenigstens einen Dämpfungswerts ($X_{DI}$) erster Art einen Alarm generiert, der signalisiert, daß das In-Line-Meßgerät außerhalb einer dafür vorgegebenen Spezifikation betrieben ist.

15. Verwenden eines In-Line-Meßgeräts nach einem der vorherigen Ansprüche zum Steuern eines dem Abdosieren einer vorgegebenen Menge und/oder Masse, $M_{SOLL}$, eines Mediums in ein Behältnis, insb. eine Flasche, ein Becher, eine Dose, ein Glas, eine Ampulle oder dergleichen, dienenden Abfüllvorgangs und/oder zum Ermitteln einer für das Abdosieren einer vorgegebenen Menge und/oder Masse, $M_{SOLL}$, eines Mediums erforderlichen, sich von einem Startzeitpunkt, $t_0$, eines entsprechenden Abfüllvorganges bis zu einem einem Endzeitpunkt, $t_n$, desselben Abfüll-vorganges erstreckenden Abfülldauer, $\Delta T_M$, und/oder zum Ermitteln eines Endzeitpunkts, $t_n$, eines dem Abdosieren einer vorgegebenen Menge und/oder Masse, $M_{SOLL}$, eines Mediums dienenden Abfüllvorganges.

**Claims**

1.  Inline measuring device, particularly a Coriolis mass flowmeter/density meter and/or a Coriolis mass flowmeter/viscosity meter, designed to measure a mass flow rate, m, of a flowing medium, particularly a medium that is at least intermittently two-phase or multi-phase, and/or contains foreign matter, such as gas bubbles and/or solid particles, said inline measuring device comprising:

    - a vibronic-type sensor (10)

       -- with at least one measuring tube (110) that vibrates at least temporarily during operation, and particularly produces flexural vibrations, said tube being designed to conduct flowing medium, particularly a medium that is at least intermittently two-phase or multi-phase, and/or contains foreign matter
       -- with an exciter arrangement (116) acting, particularly in a central manner, on the measuring tube (110), said arrangement being designed to generate vibrations, particularly flexural vibrations, of the at least one measuring tube (110), and
       -- with a sensor arrangement (117, 118) to capture vibrations, particularly flexural vibrations, of the at least one measuring tube (110), that delivers at least one vibration measuring signal ($s_1$, $s_2$) that represents vibrations, particularly flexural vibrations, of the measuring tube (110), as well as

    - measuring device electronics (20) electrically coupled with the sensor (10),

       -- wherein the measuring device electronics (20) deliver at least temporarily at least one excitation signal ($i_{exc}$) that drives the exciter arrangement (116), particularly with a current that is periodically modifiable and/or applied in such a way that
       --- during operation, and driven by the exciter arrangement (116) controlled by the at least one excitation signal ($i_{exc}$), the at least one measuring tube is excited, at least temporarily, to vibrate in a useful mode of the sensor, wherein in said mode it produces flexural vibrations around an imaginary flexural vibration axis of the sensor, said vibrations being produced at least partially, particularly primarily, and/or symmetrically in relation to an imaginary median plane of the at least one measuring tube, which is coplanar with a cross-section of the measuring tube, said axis being essentially parallel to an imaginary longitudinal axis of the sensor that connects in an imaginary manner an inlet end of the measuring tube with an outlet end of the measuring tube, or coincides with said axis, and
       --- the at least one measuring tube vibrating in the useful mode - under the influence of Coriolis forces induced in the medium flowing through said measuring tube - vibrates at least temporarily in a Coriolis mode of the sensor superimposed on the useful mode, wherein in said Coriolis mode it produces at least partially, particularly primarily, flexural vibrations around the imaginary flexural vibration axis of the sensor, said vibrations being antisymmetric in relation to an imaginary median plane of the at least one measuring tube that is coplanar with a cross-section of the measuring tube,

    **characterized in that**

    - the measuring device electronics (20) recurrently determine, at least temporarily, a damping value ($X_{DI}$) of the first type - particularly using the at least one vibration measuring signal ($s_1$, $s_2$) and/or using the at least one excitation signal ($i_{exc}$), said value being determined during operation, particularly periodically and/or at a predefined update rate $f_A = 1/T_A$, said value representing a temporal derivation of a damping that acts against the flexural vibrations of the at least one measuring tube, wherein said flexural vibrations correspond to the useful mode, and
    - the measuring device electronics (20) recurrently generate at least temporarily at least one mass flow measured value ($X_m$) both using the at least one vibration measuring signal ($s_1$, $s_2$) and/or using the excitation signal ($i_{exc}$) and also using the damping value ($X_{DI}$) of the first type, particularly periodically and/or at a predefined update rate $f_A = 1/T_A$, wherein said mass flow measured value ($X_m$) currently represents a mass flow rate, m, of the medium conducted through the at least one measuring tube.

2. Inline measuring device as claimed in the previous claim,

- wherein the measuring device electronics (20) recurrently generate the damping value ($X_{DI}$) of the first type at a predefined, essentially constant update rate, $f_A = 1/T_A$, particularly during a time period, $n \cdot T_A$, that extends over several measuring cycles; and/or
- wherein the measuring device electronics (20) determine the damping value ($X_{DI}$) of the first type taking into consideration a flow velocity of the medium, particularly a current velocity or a velocity averaged over time.

3. Inline measuring device as claimed in one of the previous claims

- wherein, during operation, the measuring device electronics (20) maintain at least one density measured value ($X_\rho$) internally, at least temporarily, particularly also using the at least one vibration measuring signal ($s_1$, $s_2$), and/or determine at least temporarily, particularly in a periodically recurrent manner, said density measured value using the excitation signal ($i_{exc}$), said density measured value representing a density, p, of the medium conducted through the at least one measuring tube; and/or
- wherein, during operation, the measuring device electronics (20) internally maintain at least temporarily at least one velocity measured value ($X_v$), particularly also determined at least temporarily using the at least one vibration measuring signal ($s_1$, $s_2$) and/or using the excitation signal ($i_{exc}$), said measured value representing a flow velocity, v, particularly a current velocity or a velocity averaged over time, of the medium conducted through the at least one measuring tube (original Claim 5), particularly in such a way that the measuring device electronics recurrently determine, during operation, the at least one velocity measured value ($X_v$) using the at least one vibration measuring signal ($s_1$, $s_2$) and/or using the excitation signal ($i_{exc}$) and/or wherein the measuring device electronics (20) generate the at least one velocity measured value ($X_v$) also using the at least one density measured value ($X_\rho$).

4. Inline measuring device as claimed in one of the previous claims, wherein the measuring device electronics (20) recurrently determine, particularly periodically, a vibration measured value (Xs), during operation, using the at least one vibration measuring signal ($s_1$, $s_2$), wherein said vibration measured value represents a vibration amplitude of vibrations, particularly flexural vibrations, of the at least one vibrating measuring tube and/or an effective value of same.

5. Inline measuring device as claimed in one of the previous claims, wherein the measuring device electronics (20) recurrently determine, particularly periodically, an excitation measured value ($X_{iexc}$), during operation, using the at least one vibration measuring signal ($s_1$, $s_2$) and/or using the excitation signal ($i_{exc}$), wherein said excitation measured value represents an excitation force that maintains vibrations, particularly flexural vibrations, of the at least one measuring tube, particularly an amplitude and/or an effective value of same, and/or which represents an excitation power that maintains vibrations, particularly flexural vibrations, of the at least one measuring tube.

6. Inline measuring device as claimed in one of the previous claims, wherein the measuring device electronics (20) recurrently determine during operation - particularly periodically and/or at a predefined update rate $f_A = 1/T_A$ - a damping value ($X_{DII}$) of the second type, particularly one that is also saved internally, particularly using the at least one vibration measuring signal ($s_1$, $s_2$) and/or using the excitation signal ($i_{exc}$), wherein said damping value currently represents a damping, particularly variable over time, of flexural vibrations of the at least one measuring tube in the useful mode of the sensor excited by the exciter arrangement (116), particularly flexural vibrations that are symmetric in relation to an imaginary median plane of the at least one measuring tube that is coplanar with a cross-section of the measuring tube, and/or in relation to an imaginary line of action of an excitation force that is applied to the measuring tube, during operation, by the exciter arrangement (116) under the influence of the excitation signal ($i_{exc}$).

7. Inline measuring device as claimed in Claim 6 in connection with Claim 4 and 5, wherein the measuring device electronics (20) determine the damping value ($X_{DII}$) of the second type based on a ratio $X_{iexc}/X_S$ of the excitation measured value ($X_{iexc}$) to the vibration measured value (Xs), said ratio being determined recurrently during operation, particularly periodically.

8. Inline measuring device as claimed in one of the Claims 6 or 7,

- wherein the measuring device electronics (20) determine the damping value ($X_{DI}$) of the first type based on at least one damping value ($X_{DII}$), particularly two or more damping values ($X_{DII,t1}$, $X_{DII,t2}$, ...) of the second type determined during various measuring cycles (original Claim 13), particularly in such a way that the measuring device electronics (20) determine the damping value ($X_{DI}$) of the first type based on at least two damping values ($X_{DII,t1}$, $X_{DII,t2}$, ...) of the second type, particularly generated during different measuring cycles (initial Claim 14), and/or in that the measuring device electronics (20) determine the damping value ($X_{DI}$) of the first type based on a difference, $\Delta X_{DII}$, of two damping values ($X_{DII,t1}$, $X_{DII,t2}$, ...) of the second type generated during different measuring cycles; and/or

- wherein the measuring device electronics (20) determine the damping value ($X_{DI}$) of the first type using a measuring device parameter ($K_{DI}$), particularly determined recurrently during a calibration of the inline measuring device and/or during operation and/or stored internally, particularly based on the following formula:

$$X_{DI} = K_{DI} \cdot \Delta X_{DII} = K_{DI} \cdot (X_{DII,t2} - X_{DII,t1}).$$

9. Inline measuring device as claimed in one of the previous claims, wherein the measuring device electronics (20) recurrently generate a mass measured value ($X_M$) using the at least one vibration measuring signal ($s_1$, $s_2$) and/or using the excitation signal ($i_{exc}$) as well as using the damping value ($X_{DI}$) of the first type, at least temporarily, particularly periodically and/or at a predefined update rate, $f_A = 1/T_A$, said mass measured value ($X_M$) currently representing a totalized mass flow, $M$, which corresponds to a mass of the medium which is to be measured and passes in total through the sensor for the duration of a time interval, $\Delta T_M$, particularly predefined and/or determined recurrently during operation.

10. Inline measuring device as claimed in Claim 9,

- wherein the measuring device electronics (20) generate an alarm using the at least one damping value ($X_{DI}$) of the first type, wherein said alarm signals that the mass measured value has a reduced measurement accuracy, particularly as a result of a quality that deviates from a corresponding reference quality; and/or

- wherein the time interval, $\Delta T_M$, corresponds to a filling period, which corresponds particularly to a predefined fill quantity of the medium, said filling period extending from an operating time, to, corresponding to a start time of a filling operation, to an operating time, $t_n = t_0 + n \cdot T_A$, corresponding to an end time of said filling operation, particularly in such a way that the damping represented by the damping value ($X_{DI}$) of the first type corresponds to an antisymmetric damping of the vibrations of the at least one measuring tube totalized over the time interval, $\Delta T_M$; and/or

- wherein the measuring device electronics (20) recurrently generate at least one provisional mass measured value ($X'_M$) using the at least one vibration measuring signal ($s_1$, $s_2$) and/or using the excitation signal ($i_{exc}$), particularly also using the damping value ($X_{DI}$) of the first type, at least temporarily, particularly periodically and/or at a predefined update rate, $f_A = 1/T_A$, said value representing the mass to be measured in a manner that is less precise than the actual mass measured value ($X_M$), and wherein the measuring device electronics (20) generate the at least one mass measured value ($X_M$) also using the provisional mass measured value ($X'_M$).

11. Inline measuring device as claimed in one of the previous claims, wherein the exciter arrangement (116) makes the at least one measuring tube (110) to perform flexural vibrations - during operation - at least temporarily around the imaginary axis of flexural vibration, particularly primarily at a lowest resonance frequency of the measuring tube, said vibrations being essentially symmetric in relation to the imaginary median plane of the at least one measuring tube.

12. Inline measuring device as claimed in one of the previous claims,

- wherein the measuring device electronics (20) recurrently generate a provisional mass flow measured value ($X'_m$) using the at least one vibration measuring signal ($s_1$, $s_2$) and/or using the excitation signal ($i_{exc}$), particularly also using the damping value ($X_{DI}$) of the first type, at least temporarily, particularly periodically and/or at a predefined update rate, $f_A = 1/T_A$, said value representing the mass flow rate, m, of the medium conducted through the at least one measuring tube in a manner that is less precise than the mass flow measured value ($X_m$), and

- wherein the measuring device electronics (20) generate the at least one mass flow measured value ($X_m$) using the provisional mass flow measured value ($X'_m$) and using the damping value ($X_{DI}$) of the first type:

**13.** Inline measuring device as claimed in one of the Claims 9 to 10, wherein the measuring device electronics (20) generate the at least one mass measured value ($X_M$) using the mass flow measured value ($X_m$) and using the damping value ($X_{DI}$) of the first type.

**14.** Inline measuring device as claimed in one of the previous claims,

- wherein the measuring device electronics (20) determine the damping value ($X_{DI}$) of the first type based on a temporal derivation of a damping of flexural vibrations of the measuring tube in the useful mode of the sensor excited by the exciter arrangement (116), said damping being particularly symmetric in relation to an imaginary median plane of the at least one measuring tube that is coplanar with a cross-section of the measuring tube and/or in relation to an imaginary line of action of an excitation force that is applied to the measuring tube, during operation, by the exciter arrangement (116) under the influence of the excitation signal ($I_{exc}$); and/or
- wherein the measuring device electronics (20) determine the damping value ($X_{DI}$) of the first type on the basis of a difference quotient, $\Delta X_{DII}/T_A$, that represents the temporal derivation of the damping of the flexural vibrations of the at least one measuring tube that correspond to the useful mode of the sensor; and/or
- wherein the exciter arrangement has a vibration exciter, particularly a single exciter and/or an electrodynamic exciter, which essentially acts centrally on the at least one measuring tube; and/or
- wherein the measuring device electronics (20) generate an alarm using the at least one damping value ($X_{DI}$) of the first type, said alarm signaling that the medium has a quality that deviates from a corresponding reference quality, particularly regarding a maximum admissible concentration of entrained foreign matter in the medium; and/or
- wherein the measuring device electronics (20) generate an alarm using the at least one damping value ($X_{DI}$) of the first type, said alarm signaling that the inline measuring device is being operated outside a specification for the operation of said device.

**15.** Use of an inline measuring device as claimed in one of the previous claims to control a filling operation that serves to dose a predefined quantity and/or mass, $M_{SOLL}$, of a medium into a vessel, particularly a bottle, a beaker, a can, a jar, a vial or similar and/or to determine a filling duration, $\Delta T_M$, which is required for the dosing of a predefined quantity and/or mass, $M_{SOLL}$, of a medium, said duration extending from a starting point, $t_0$, of a corresponding filling operation to an end point, $t_n$, of said filling operation and/or to determine an end point, $t_n$, of a filling operation that is used to dose a predefined quantity and/or mass, $M_{SOLL}$, of a medium.

**Revendications**

**1.** Appareil de mesure en ligne, notamment un débitmètre massique Coriolis / densimètre et/ou un débitmètre massique Coriolis / viscosimètre, destiné à la mesure d'un débit massique, m, d'un produit apte à s'écouler, notamment au moins temporairement biphasé ou multiphasé et/ou chargé de matières étrangères telles que des bulles de gaz et/ou des particules solides, lequel appareil de mesure en ligne comprend :

- un capteur (10) du type à vibrations

-- avec au moins un tube de mesure (110) vibrant au moins temporairement, en fonctionnement, notamment exécutant des vibrations de flexion, lequel tube est destiné à guider un produit apte à s'écouler, notamment au moins temporairement biphasé ou multiphasé et/ou chargé de matières étrangères,
-- avec un circuit d'excitation (116) agissant, notamment de façon centrale, sur le tube de mesure (110), lequel circuit est destiné à générer des vibrations, notamment des vibrations de flexion, de l'au moins un tube de mesure (110), et
-- avec un circuit capteur (117, 118) destiné à la mesure des vibrations, notamment des vibrations de flexion, de l'au moins un tube de mesure (110), qui délivre au moins un signal de mesure de vibration ($s_1$, $s_2$) représentant les vibrations, notamment les vibrations de flexion, du tube de mesure (110), ainsi que

- une électronique d'appareil de mesure (20) couplée électriquement au capteur (10),

-- l'électronique d'appareil de mesure (20) délivrant au moins temporairement au minimum un signal d'excitation ($i_{exc}$) appliqué au circuit d'excitation (116), notamment avec un courant modifiable et/ou appliqué périodiquement, de telle sorte
--- que l'au moins un tube de mesure est excité, en fonctionnement - entraîné par le circuit d'excitation (116) commandé au moyen de l'au moins un signal d'excitation ($i_{exc}$) - au moins temporairement en vibrations dans un mode utile du capteur, mode dans lequel il exécute au moins partiellement, notamment essentiellement et/ou par rapport à un plan médian imaginaire de l'au moins un tube de mesure, coplanaire à une section du tube de mesure, des vibrations de flexion symétriques autour d'un axe de vibration de flexion imaginaire du capteur, lequel axe est pour l'essentiel parallèle à un axe longitudinal imaginaire du capteur, reliant de façon imaginaire une extrémité d'entrée du tube de mesure avec une extrémité de sortie du tube de mesure, ou coïncide avec celui-ci, et

--- que l'au moins un tube de mesure vibrant dans le mode utile vibre sous l'influence de forces de Coriolis induites par le produit traversant le tube, au moins temporairement dans un mode de Coriolis du capteur prenant le dessus sur le mode utile, mode de Coriolis dans lequel il exécute, au moins partiellement, notamment essentiellement, des vibrations de flexion antisymétriques autour de l'axe de vibration de flexion imaginaire du capteur, par rapport à un plan médian imaginaire coplanaire à une section du tube de mesure, de l'au moins un tube de mesure,

**caractérisé**

- **en ce que** l'électronique d'appareil de mesure (20) détermine, au moins temporairement, notamment au moyen de l'au moins un signal de mesure de vibration ($s_1$, $s_2$) et/ou au moyen de l'au moins un signal d'excitation ($i_{exc}$), en fonctionnement, de façon récurrente, notamment de façon périodique et/ou avec un taux d'actualisation prédéfini $f_A = 1/T_A$, une valeur d'amortissement ($X_{DI}$) de premier type, qui représente une dérivée temporelle de l'amortissement, qui agit contre les vibrations de flexion, correspondant au mode utile, de l'au moins un tube de mesure, et

- **en ce que** l'électronique d'appareil de mesure (20) génère au moyen de l'au moins un signal de mesure de vibration ($s_1$, $s_2$) et/ou au moyen du signal d'excitation ($i_{exc}$) ainsi qu'au moyen de la valeur d'amortissement ($X_{DI}$) de premier type, au moins temporairement, de façon récurrente, notamment de façon périodique et/ou avec un taux d'actualisation prédéfini $f_A = 1/T_A$, au moins une valeur mesurée de débit massique ($X_m$), qui représente momentanément un débit massique, $m,$ du produit guidé dans l'au moins un tube de mesure.

2. Appareil de mesure en ligne selon la revendication précédente,

- pour lequel l'électronique d'appareil de mesure (20) génère de façon récurrente la valeur d'amortissement ($X_{DI}$) de premier type avec un taux d'actualisation prédéfini, $f_A = 1/T_A$, notamment pendant une période de temps, $n \cdot T_A$, pour l'essentiel constante, s'étendant sur plusieurs cycles de mesure ; et/ou
- pour lequel l'électronique d'appareil de mesure (20) détermine la valeur d'amortissement ($X_{DI}$) de premier type en tenant compte d'une vitesse d'écoulement du produit, notamment momentanée et moyennée dans le temps.

3. Appareil de mesure en ligne selon l'une des revendications précédentes

- pour lequel l'électronique d'appareil de mesure met à disposition en interne, en fonctionnement, au moins temporairement au minimum une valeur mesurée de densité ($X_\rho$), notamment également au moyen de l'au moins un signal de mesure de vibration ($s_1$, $s_2$), et/ou détermine au moins temporairement, notamment de façon périodiquement récurrente, cette même valeur mesurée de densité au moyen du signal d'excitation ($I_{exc}$), laquelle valeur mesurée de densité représente une densité, $\rho$, du produit guidé à l'intérieur de l'au moins un tube de mesure ; et/ou
- pour lequel l'électronique d'appareil de mesure met à disposition en interne, en fonctionnement, au moins temporairement une valeur mesurée de vitesse ($X_v$), notamment également déterminée au moins temporairement au moyen de l'au moins un signal de mesure de vibration ($s_1$, $s_2$) et/ou au moyen du signal d'excitation ($i_{exc}$), laquelle valeur mesurée représente une vitesse d'écoulement, $v,$ notamment momentanée et moyennée dans le temps, du produit guidé à l'intérieur de l'au moins un tube de mesure (revendication 5 initiale), notamment de telle sorte que l'électronique d'appareil de mesure (20) détermine de façon récurrente, en fonctionnement, l'au moins une valeur mesurée de vitesse ($X_v$) au moyen de l'au moins un signal de mesure de vibration ($s_1$, $s_2$) et/ou au moyen du signal d'excitation ($i_{exc}$) et/ou de telle sorte que l'électronique d'appareil de mesure (20) génère l'au moins une valeur mesurée de vitesse ($X_v$) également au moyen de l'au moins une valeur mesurée de densité ($X_\rho$).

4. Appareil de mesure en ligne selon l'une des revendications précédentes, pour lequel l'électronique d'appareil de mesure (20) détermine, en fonctionnement, de façon récurrente, notamment de façon périodique, au moyen de l'au moins un signal de mesure de vibration ($s_1$, $s_2$), une valeur mesurée de vibration ($Xs$), qui représente une amplitude des vibrations, notamment des vibrations de flexion, de l'au moins un tube de mesure vibrant, et/ou une valeur efficace de celle-ci.

5. Appareil de mesure en ligne selon l'une des revendications précédentes, pour lequel l'électronique d'appareil de mesure (20) détermine, en fonctionnement, de façon récurrente, notamment de façon périodique, au moyen de l'au moins un signal de mesure de vibration ($s_1$, $s_2$) et/ou au moyen du signal d'excitation ($i_{exc}$), une valeur mesurée d'excitation ($X_{iexc}$), qui représente une force d'excitation maintenant les vibrations, notamment les vibrations de flexion, de l'au moins un tube de mesure, notamment une amplitude et/ou une valeur efficace de celle-ci, et/ou qui représente une puissance d'excitation maintenant les vibrations, notamment les vibrations de flexion, de l'au moins un tube de mesure.

6. Appareil de mesure en ligne selon l'une des revendications précédentes pour lequel l'électronique d'appareil de mesure (20) détermine, en fonctionnement, de façon récurrente, notamment de façon périodique et/ou avec un taux d'actualisation prédéfini $f_A$ = $1/T_A$, notamment au moyen de l'au moins un signal de mesure de vibration ($s_1$, $s_2$) et/ou au moyen du signal d'excitation ($i_{exc}$), une valeur d'amortissement ($X_{DII}$) de second type, notamment également enregistrée en interne, laquelle valeur représente momentanément un amortissement, notamment variable dans le temps, de vibrations de flexion symétriques de l'au moins un tube de mesure dans le mode utile du capteur excité au moyen du circuit d'excitation (116), notamment par rapport à un plan médian imaginaire de l'au moins un tube de mesure coplanaire avec une section du tube de mesure et/ou par rapport à une ligne d'action imaginaire d'une force d'excitation exercée sur le tube de mesure, en fonctionnement, par le circuit d'excitation (116) sous l'influence du signal d'excitation ($I_{exc}$).

7. Appareil de mesure en ligne selon la revendication 6 en relation avec les revendications 4 et 5, pour lequel l'électronique d'appareil de mesure (20) détermine la valeur d'amortissement ($X_{DII}$) de second type sur la base du rapport $X_{iexc}/X_S$ entre la valeur mesurée d'excitation ($X_{iexc}$) et la valeur mesurée de vibration ($X_S$), lequel rapport est déterminé de façon récurrente, notamment périodique.

8. Appareil de mesure en ligne selon l'une des revendications 6 ou 7,

   - pour lequel l'électronique d'appareil de mesure (20) détermine la valeur d'amortissement ($X_{DI}$) de premier type sur la base d'au moins une valeur d'amortissement ($X_{DII}$), notamment deux ou plusieurs valeurs d'amortissement ($X_{DII,t1}$, $X_{DII,t2}$, ...) de second type déterminées pendant différents cycles de mesure (revendication 13 initiale), notamment de telle sorte l'électronique d'appareil de mesure (20) détermine la valeur d'amortissement ($X_{DI}$) de premier type sur la base d'au moins deux plusieurs valeurs d'amortissement ($X_{DII,t1}$, $X_{DII,t2}$, ...) de second type, notamment générées pendant différents cycles de mesure (revendication initiale 14), et/ou en ce que l'électronique d'appareil de mesure (20) détermine la valeur d'amortissement ($X_{DI}$) de premier type sur la base d'une différence, $\Delta X_{DII}$, de deux valeurs d'amortissement ($X_{DII,t1}$, $X_{DII,t2}$, ...) de second type générées pendant différents cycles de mesure ; et/ou
   - pour lequel l'électronique d'appareil de mesure (20) détermine la valeur d'amortissement ($X_{DI}$) de premier type en utilisant un paramètre d'appareil de mesure ($K_{DI}$), notamment déterminé pendant un étalonnage de l'appareil de mesure en ligne et/ou de façon récurrente en fonctionnement et/ou enregistré en interne, notamment sur la base de la formule suivante :

$$X_{DI} = K_{DI} \cdot \Delta X_{DII} = K_{DI} \cdot (X_{DII,t2} - X_{DII,t1}).$$

9. Appareil de mesure en ligne selon l'une des revendications précédentes, pour lequel l'électronique d'appareil de mesure (20) génère, au moyen de l'au moins un signal de mesure de vibration ($s_1$, $s_2$) et/ou au moyen du signal d'excitation ($i_{exc}$) ainsi qu'au moyen de la valeur d'amortissement ($X_{DI}$) de premier type, au moins temporairement, notamment de façon périodique et/ou récurrente avec un taux d'actualisation prédéfini, $f_A$ = $1/T_A$, une valeur mesurée de masse ($X_M$), qui représente momentanément un débit massique totalisé, *M*, qui correspond à une masse à mesurer du produit, laquelle masse traverse au total le capteur pendant un intervalle de temps, $\Delta T_M$, notamment prédéfini et/ou déterminé de façon récurrente en fonctionnement.

10. Appareil de mesure en ligne selon la revendication 9,

- pour lequel l'électronique d'appareil de mesure (20) génère au moyen de l'au moins une valeur d'amortissement ($X_{DI}$) de premier type une alarme, qui signale que la valeur mesurée de masse présente une précision de mesure réduite, notamment suite à une qualité du produit s'écartant de la qualité de référence correspondante ; et/ou

- pour lequel l'intervalle de temps, $\Delta T_M$, correspond à une durée de remplissage, notamment correspondant à une quantité de remplissage prédéfinie du produit, laquelle durée s'étend d'un instant de fonctionnement, $t_0$, correspondant à un instant initial d'une opération de remplissage, à un instant de fonctionnement, $t_n = t_0 + n \cdot T_A$, correspondant à un instant final de la même opération de remplissage, notamment de telle sorte que l'amortissement représenté par la valeur d'amortissement ($X_{DI}$) de premier type correspond à un amortissement antisymétrique - totalisé pendant l'intervalle de temps, $\Delta T_M$, - des vibrations de l'au moins un tube de mesure ; et/ou

- pour lequel l'électronique d'appareil de mesure (20) génère, au moyen de l'au moins un signal de mesure de vibration ($s_1$, $s_2$) et/ou au moyen du signal d'excitation ($i_{exc}$), notamment également au moyen de la valeur d'amortissement ($X_{DI}$) de premier type, au moins temporairement, notamment de façon périodique et/ou récurrente avec un taux d'actualisation prédéfini, $f_A = 1/T_A$, au moins une valeur mesurée de masse provisoire ($X'_M$), qui représente la masse à mesurer de façon moins précise que la valeur mesurée de masse ($X_M$) effective et pour lequel l'électronique d'appareil de mesure (20) génère l'au moins une valeur mesurée de masse ($X_M$) également au moyen de la valeur mesurée de masse provisoire ($X'_M$).

**11.** Appareil de mesure en ligne selon l'une des revendications précédentes, pour lequel le circuit d'excitation (116) fait entrer l'au moins un tube de mesure (110), en fonctionnement, au moins temporairement, en vibrations de flexion autour de l'axe de vibration de flexion imaginaire, notamment essentiellement à une fréquence de résonance la plus basse du tube de mesure, qui sont pour l'essentiel symétriques par rapport au plan médian imaginaire de l'au moins un tube de mesure.

**12.** Appareil de mesure en ligne selon l'une des revendications précédentes,

- pour lequel l'électronique d'appareil de mesure (20) génère, au moyen de l'au moins un signal de mesure de vibration ($s_1$, $s_2$) et/ou au moyen du signal d'excitation ($i_{exc}$), notamment également au moyen de la valeur d'amortissement ($X_{DI}$) de premier type, au moins temporairement, notamment de façon périodique et/ou récurrente avec un taux d'actualisation prédéfini, $f_A = 1/T_A$, une valeur mesurée de débit massique provisoire ($X'_m$), qui représente le débit massique, m, du produit guidé dans l'au moins un tube de mesure, de façon moins précise que la valeur mesurée de débit massique ($X_m$) et

- pour lequel l'électronique d'appareil de mesure (20) génère l'au moins une valeur mesurée de débit massique ($X_m$) au moyen de la valeur mesurée de débit massique provisoire ($X'_m$) et au moyen de la valeur d'amortissement ($X_{DI}$) de premier type.

**13.** Appareil de mesure en ligne selon l'une des revendications 9 à 10, pour lequel l'électronique d'appareil de mesure (20) génère l'au moins une valeur mesurée de masse ($X_M$) au moyen de la valeur mesurée de débit massique ($X_m$) et au moyen de la valeur d'amortissement ($X_{DI}$) de premier type.

**14.** Appareil de mesure en ligne selon l'une des revendications précédentes,

- pour lequel l'électronique d'appareil de mesure (20) détermine la valeur d'amortissement ($X_{DI}$) de premier type sur la base d'une dérivée temporelle d'un amortissement symétrique des vibrations de flexion du tube de mesure ou dans le mode utile du capteur excité au moyen du circuit d'excitation (116), notamment par rapport à un plan médian imaginaire de l'au moins un tube de mesure, lequel plan est coplanaire à une section du tube de mesure, et/ou par rapport à une ligne d'action imaginaire d'une force d'excitation exercée sur le tube de mesure, en fonctionnement, par le circuit d'excitation (116) sous l'influence du signal d'excitation ($I_{exc}$) ; et/ou

- pour lequel l'électronique d'appareil de mesure (20) détermine la valeur d'amortissement ($X_{DI}$) de premier type sur la base d'un quotient de différence, $\Delta X_{DII}/T_A$, représentant la dérivée temporelle de l'amortissement des vibrations de flexion de l'au moins un tube de mesure correspondant au mode utile du capteur ; et/ou

- pour lequel le circuit d'excitation comporte un excitateur de vibrations, notamment unique et/ou électrodynamique, pour l'essentiel disposé de façon centrée sur le tube de mesure ; et/ou

- pour lequel l'électronique d'appareil de mesure (20) génère au moyen de l'au moins une valeur d'amortissement ($X_{DI}$) de premier type une alarme, qui signale que le produit présente une qualité s'écartant de la qualité de référence correspondante, notamment une part maximale admissible de matières étrangères entraînées ; et/ou

- pour lequel l'électronique d'appareil de mesure (20) génère au moyen de l'au moins une valeur d'amortissement

($X_{DI}$) de premier type une alarme, qui signale que l'appareil de mesure en ligne est utilisé en dehors d'une spécification prédéfinie à cette fin.

15. Utilisation d'un appareil de mesure en ligne selon l'une des revendications précédentes, destiné à la commande d'une opération de remplissage servant au dosage d'une quantité et/ou d'une masse, $M_{SOLL}$, prédéfinies d'un produit dans un récipient, notamment une bouteille, un gobelet, une boîte, un verre, une ampoule, etc., et/ou destiné à la détermination d'une durée de remplissage, $\Delta T_M$, nécessaire pour le dosage d'une quantité et/ou d'une masse, $M_{SOLL}$, prédéfinies d'un produit, et s'étendant d'un instant initial, $t_0$, d'une opération de remplissage correspondante à un instant final, $t_n$, de la même opération de remplissage, et/ou pour la détermination d'un instant final, $t_n$, d'une opération de remplissage servant au dosage d'une quantité et/ou d'une masse, $M_{SOLL}$, prédéfinies d'un produit.

Fig. 2

Fig. 4

fig.5

Fig. 6

Fig. 7

Fig. 8

EP 2 335 032 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2023652 A
- DE 102006031969 A
- EP 893396 A
- EP 405402 A
- US 7114535 B
- US 6474368 B
- US 6026867 A
- US 5975159 A
- US 5865225 A
- US 5595221 A
- US 4588001 A
- US 4532968 A
- US 4522238 A
- US 4053003 A
- US 3826293 A
- US 3519108 A
- US 20060146689 A
- US 20030037514 A
- WO 08034710 A
- WO 07048742 A
- WO 04049641 A
- US 7302356 B
- US 5975747 A
- WO 00057325 A
- WO 9940394 A
- WO 9939164 A
- WO 9807009 A
- WO 9516897 A
- WO 8803261 A
- WO 08059015 A
- WO 08013545 A
- WO 08011587 A
- WO 07005024 A
- WO 06127527 A
- WO 06104690 A
- WO 06062856 A
- WO 05093381 A
- WO 05031285 A
- WO 05003690 A
- WO 03095950 A
- WO 03095949 A
- WO 0237063 A
- WO 0133174 A
- WO 0102816 A
- WO 0057141 A
- WO 0014485 A
- US 7392709 B
- US 7360451 B
- US 7343253 B
- US 7340964 B
- US 7299699 B
- US 7296484 B
- US 7213470 B
- US 7213469 B
- US 7181982 B
- US 7080564 B
- US 7077014 B
- US 7073396 B
- US 7040180 B
- US 7040181 B
- US 7040179 B
- US 7017424 B
- US 6920798 B
- US 6910366 B
- US 6895826 B
- US 6883387 B
- US 6880410 B
- US 6860158 B
- US 6840109 B
- US 6810719 B
- US 6805012 B
- US 6758102 B
- US 6705172 B
- US 6691583 B
- US 6666098 B
- US 6651513 B
- US 6564619 B
- US 6557422 B
- US 6519828 B
- US 6516674 B
- US 6513393 B
- US 6505519 B
- US 6471487 B
- US 6397685 B
- US 6330832 B
- US 6318156 B
- US 6311136 B
- US 6223605 B
- US 6168069 B
- US 7337676 A
- US 6092429 A
- US 6073495 A
- US 6047457 A
- US 6041665 A
- US 6006609 A
- US 5979246 A

- US 5945609 A
- US 5926096 A
- US 5869770 A
- US 5861561 A
- US 5796012 A
- US 5796011 A
- US 5796010 A
- US 5731527 A
- US 5691485 A
- US 5648616 A
- US 5616868 A
- US 5610342 A
- US 5602346 A
- US 5602345 A
- US 5531126 A
- US 5476013 A
- US 5429002 A
- US 5398554 A
- US 5359881 A
- US 5301557 A
- US 5291792 A
- US 5287754 A
- US 5253533 A
- US 5218873 A
- US 5095761 A
- US 5069074 A
- US 5050439 A
- US 5044207 A
- US 5027662 A
- US 5009109 A
- US 4962671 A
- US 4957005 A
- US 4911006 A
- US 4895031 A
- US 4876898 A
- US 4852410 A
- US 4823614 A
- US 4801897 A

- US 4777833 A
- US 4738144 A
- US 4733569 A
- US 4660421 A
- US 4491025 A
- US 4187721 A
- US 20080190195 A
- US 20080189079 A
- US 20080189067 A
- US 20080141789 A
- US 20080092667 A
- US 20080047361 A
- US 20080011101 A
- US 20070186685 A
- US 20070151371 A
- US 20070151370 A
- US 20070144234 A
- US 20070119265 A
- US 20070119264 A
- US 20060201260 A
- US 20050139015 A
- US 20030208325 A
- US 20030131668 A
- DE 102007062397
- DE 102006013826 A
- US 7412903 B
- US 07360453 B
- US 7360452 B
- US 4879911 A
- EP 1158289 A
- US 01897 A
- US 5024104 A
- US 5804741 A
- US 6311136 A
- US 5736653 A
- US 4768384 A
- WO 00102816 A

**In der Beschreibung aufgeführte Nicht-Patentliteratur**

- Abfüll- und Dosieranwendungen. Durchfluß-Handbuch. 2003, 213 ff